# EUROPEAN PATENT APPLICATION

(11) **EP 4 669 004 A1**
(43) Date of publication of application: **24.12.2025**
(21) Application number: 24731455.2
(22) Date of filing: 15.02.2024
(51) Int. Cl.: H04W 74/00, H04W 74/08

(54) **METHOD AND DEVICE FOR TRANSMITTING AND RECEIVING RANDOM ACCESS PREAMBLE IN WIRELESS COMMUNICATION SYSTEM**

(30) Priority: 15.02.2023 US 202363445718 P; 06.04.2023 US 202363457414 P
(71) Applicant: LG Electronics Inc., Seoul 07336 (KR)
(72) Inventor: SHIN, Seokmin, Seoul 06772 (KR); YANG, Suckchel, Seoul 06772 (KR); KO, Hyunsoo, Seoul 06772 (KR); NOH, Yujin, Seoul 06772 (KR); KIM, Seonwook, Seoul 06772 (KR)
(74) Representative: Maikowski & Ninnemann Patentanwälte Partnerschaft mbB
(86) International application number: PCT/KR2024/095249
(87) International publication number: WO 2024/172575

(57) **Abstract**

A method performed by a user equipment comprises transmitting a Physical Random Access CHannel (PRACH) based on a number of preamble repetitions, and receiving a Random Access Response (RAR). The PRACH is transmitted based on at least one set determined within a time period. Each set includes valid PRACH occasions based on the number of preamble repetitions. The time period is defined such that the at least one set can be determined within the time period for all configured number related to the number of preamble repetitions.

## Description

### [TECHNICAL FIELD]

The present disclosure relates to a method and device for transmitting and receiving a random access preamble in a wireless communication system.

### [BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

In Rel-18, repetition of a PRACH is supported. Specifically, the PRACH is transmitted based on valid PRACH occasions (ROs) based on the number of preamble repetitions.

### [DISCLOSURE]

### [TECHNICAL PROBLEM]

Time based on PRACH occasions (ROs) related to PRACH repetition transmission may vary depending on the number of preamble repetitions. For example, time based on the ROs when the number of preamble repetitions is 4 may be longer than time based on the ROs when the number of preamble repetitions is 2. In such a case, there is a need to specify whether a time period in which the ROs are determined should be defined based on the number of preamble repetitions or a common value.

The present disclosure provides a method to solve the above-mentioned problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method performed by a user equipment (UE) in a wireless communication system according to an embodiment of the present disclosure comprises transmitting a Physical Random Access CHannel (PRACH) based on a number of preamble repetitions, and receiving a Random Access Response (RAR).

The PRACH is transmitted based on at least one set determined within a time period. Each set includes valid PRACH occasions based on the number of preamble repetitions.

The time period is defined such that the at least one set can be determined within the time period for all configured number(s) related to the number of preamble repetitions.

The time period may be based on a smallest integer number multiple of association pattern periods in which the at least one set can be determined for the all configured number(s).

An association period may be a smallest integer number in a set determined by a PRACH configuration period such that Synchronization Signal/Physical Broadcast CHannel (SS/PBCH) block indices are mapped at least once to PRACH occasions within the association period.

Each association pattern period may include one or more association periods.

The at least one set that can be determined within the time period may be related to each of the SS/PBCH block indices.

Each association pattern period may be 10, 20, 40, 80 or 160 msec.

The at least one set may be repeated every the time period.

The method may further comprise receiving a random access configuration. The random access configuration may include information for a plurality of preamble sets. Each preamble set may include preambles related to a feature combination.

The number of preamble repetitions may be one of numbers of preamble repetitions related to the plurality of preamble sets.

The number of preamble repetitions may be 2, 4 or 8.

The at least one set may include i) a first set and ii) one or more subsequent sets.

A first valid PRACH occasion of each of the one or more subsequent sets may be after the valid PRACH occasions of a previous set.

A user equipment (UE) configured to operate in a wireless communication according to another embodiment of the present disclosure comprises one or more transceivers, one or more processors, and one or more memories that are connected to the one or more processors and store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories are configured to store instructions based on being executed by the one or more processors, and the instructions configure the one or more processors to perform all steps of any one of the methods.

One or more non-transitory computer readable mediums according to another embodiment of the present disclosure store instructions. The instructions executable by one or more processors configure the one or more processors to perform all steps of any one of the methods.

A method performed by a base station in a wireless communication system according to another embodiment of the present disclosure comprises receiving a Physical Random Access CHannel (PRACH) based on a number of preamble repetitions, and transmitting a Random Access Response (RAR).

The PRACH is received based on at least one set determined within a time period. Each set includes valid PRACH occasions based on the number of preamble repetitions.

The time period is defined such that the at least one set can be determined within the time period for all configured number(s) related to the number of preamble repetitions.

A base station configured to operate in a wireless communication according to another embodiment of the present disclosure comprises one or more transceivers, one or more processors, and one or more memories that are connected to the one or more processors and store instructions.

The instructions, based on being executed by the one or more processors, configure the one or more processors to perform all steps of the method.

### [ADVANTAGEOUS EFFECTS]

According to an embodiment of the present disclosure, even if the number of preamble repetitions is set to any value, at least one set can be determined within a time period. Therefore, this has advantages in terms of implementation complexity and signaling overhead, compared to when the time period is used by being defined/configured/indicated per the number of preamble repetitions.

Since the number of repetitions that can be configured per specific time period is not limited, flexibility related to configuration of the number of PRACH repetitions can increase. That is, even if any number of preamble repetitions is configured to a UE, a set including valid PRACH occasions based on the configured number of preamble repetitions can be determined within the time period.

The time period is defined such that at least one set including the valid PRACH occasions can be determined within the time period for all configured number(s) related to the number of repetitions. Therefore, valid PRACH occasions for PRACH repetition are selected, and remaining PRACH occasions can be minimized.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [BRIEF DESCRIPTION OF THE DRAWINGS]

FIG. 1 illustrates physical channels and general signal transmission used in a 3GPP system.
FIG. 2 illustrates RACH occasions for each preamble format.
FIG. 3 illustrates a random access procedure.
FIG. 4 illustrates RACH partitioning related RRC parameters.
FIG. 5 illustrates an example of PRACH occasions (ROs) related to PRACH repetition according to an embodiment of the present disclosure.
FIG. 6 illustrates another example of ROs related to PRACH repetition according to an embodiment of the present disclosure.
FIG. 7 illustrates another example of ROs related to PRACH repetition according to an embodiment of the present disclosure.
FIG. 8 illustrates another example of ROs related to PRACH repetition according to an embodiment of the present disclosure.
FIG. 9 illustrates an example of ROs for a plurality of repetition numbers according to an embodiment of the present disclosure.
FIG. 10 illustrates another example of ROs for a plurality of repetition numbers according to an embodiment of the present disclosure.
FIG. 11 illustrates another example of ROs for a plurality of repetition numbers according to an embodiment of the present disclosure.
FIG. 12 is a flow chart illustrating a method performed by a user equipment according to an embodiment of the present disclosure.
FIG. 13 is a flow chart illustrating a method performed by a base station according to another embodiment of the present disclosure.
FIG. 14 illustrates configuration of a first device and a second device according to an embodiment of the present disclosure.

### [DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

### Physical Channel and General Signal Transmission

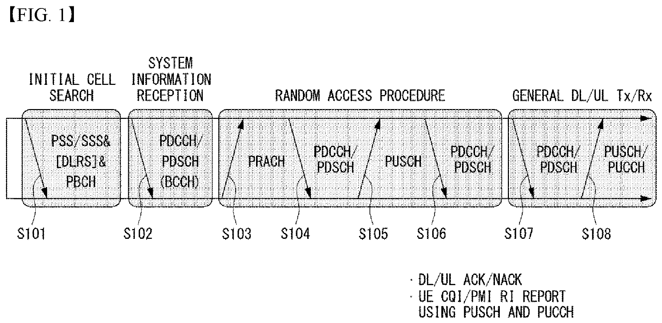

FIG. 1 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S101). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S102).

Meanwhile, when there is no radio resource first accessing the eNB or for signal transmission, the UE may perform a Random Access Procedure (RACH) to the eNB (S103 to S106). To this end, the UE may transmit a specific sequence to a preamble through a Physical Random Access Channel (PRACH) (S103 and S105) and receive a response message (Random Access Response (RAR) message) for the preamble through the PDCCH and a corresponding PDSCH. In the case of a contention based RACH, a Contention Resolution Procedure may be additionally performed (S106).

The UE that performs the above procedure may then perform PDCCH/PDSCH reception (S107) and Physical Uplink Shared Channel (PUSCH)/Physical Uplink Control Channel (PUCCH) transmission (S108) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

An RACH slot is described below.

An RACH slot includes one or multiple RACH Occasion(s).

Slot duration is 1 ms for {1.25 kHz, 5 kHz} subcarrier spacing, and has scalable duration (i.e., 1 ms, 0.5 ms, 0.25 ms, 0.125 ms) for {15 kHz, 30 kHz, 60 kHz, 120 kHz} subcarrier spacing.

A start OFDM symbol index in an RACH slot has {0,2,x} values for short preamble formats.

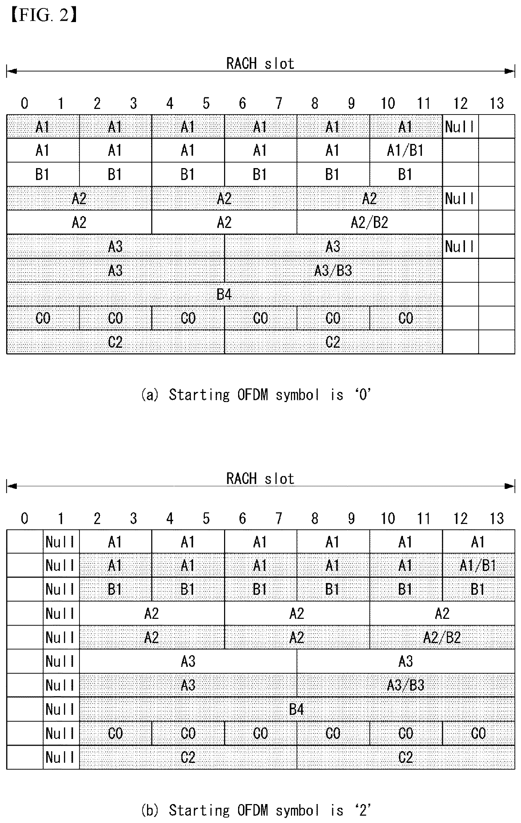

FIG. 2 illustrates RACH occasions for each preamble format.

Referring to FIG. 2, an RACH slot may include one or more RACH occasions (ROs) for each preamble format (e.g., A1, A2, ..., C2). (a) of FIG. 2 illustrates a case in which a starting OFDM symbol is '0', and (b) of FIG. 2 illustrates a case in which a starting OFDM symbol is '2'.

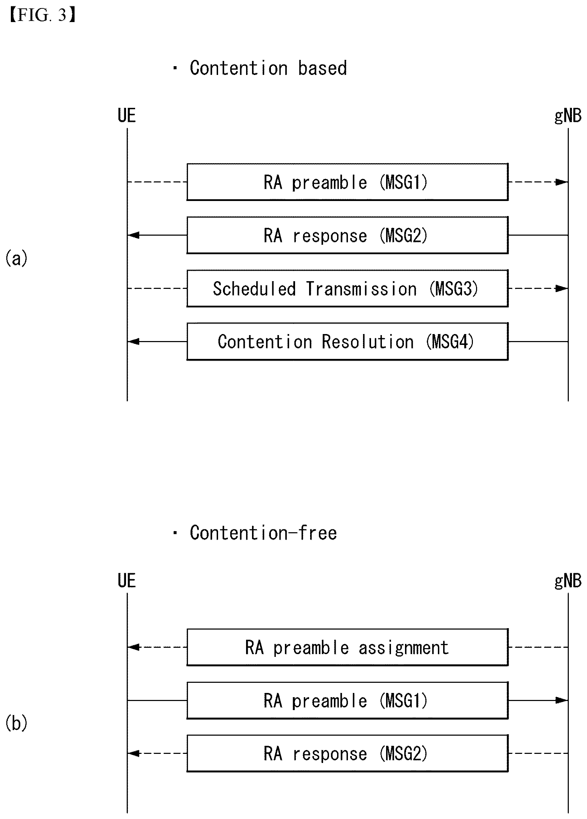

FIG. 3 illustrates a random access procedure.

(a) of FIG. 3 illustrates a contention based RACH procedure, and (b) of FIG. 3 illustrates a contention free RACH procedure.

MSG1 transmission is described below.

Subcarrier spacing for MSG1 is configured in an RACH configuration, and is provided in a handover command with respect to a contention-free RA procedure for handover.

Preamble indices for contention-based random access (CBRA) and contention-free random access (CFRA) are consecutively mapped to one SSB in one RACH transmission occasion.
- CBRA: Association between an SS block (SSB) within an SS burst set and a subset of RACH resources and/or preamble indices is configured by a parameter set in an RMSI.
- CFRA: A UE may be configured transmit multi-MSG1s through a dedicated multi-RACH transmission occasion in the time domain before the end of a monitored RAR window.

Furthermore, association between a CFRA preamble and an SSB is reconfigured through UE-specific RRC.

The random access procedure may be a Type-1 random access procedure (4-step RA) or a Type-2 random access procedure (2-step RA).

The Type-1 random access procedure may include transmission of random access preamble in a physical random access channel (PRACH) (Msg1), reception of a random access response (RAR) (Msg2), transmission of PUSCH scheduled by UL grant of the RAR (Msg3), and PDSCH for contention resolution (Msg4). If the random access procedure is contention free random access (CFRA), the Msg3 transmission and the Msg4 reception are omitted.

The Type-2 random access procedure may include transmission of random access preamble and PUSCH (MsgA) and RAR reception (MsgB).

The following Table 1 shows configurations/operations related to the random access preamble.

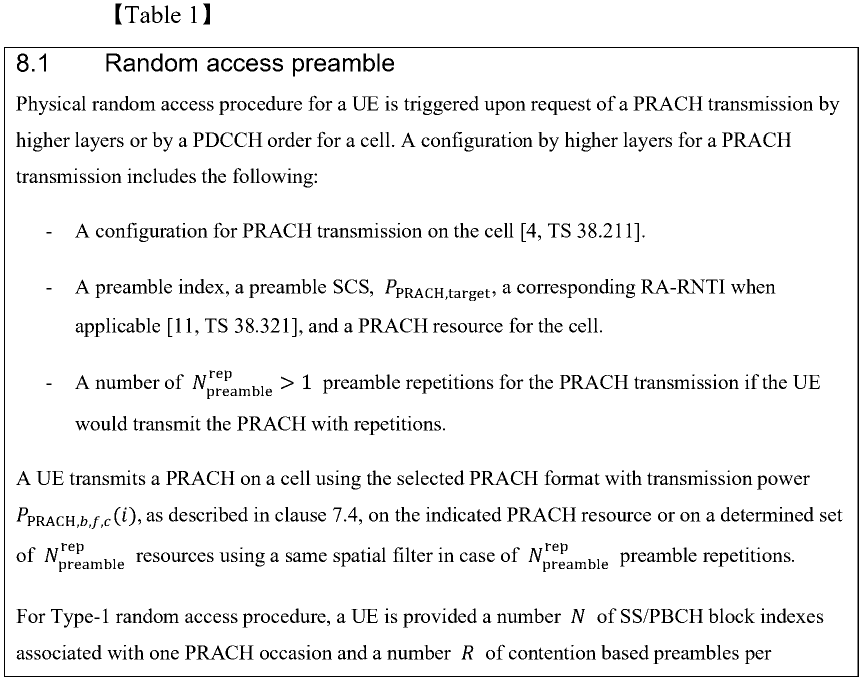

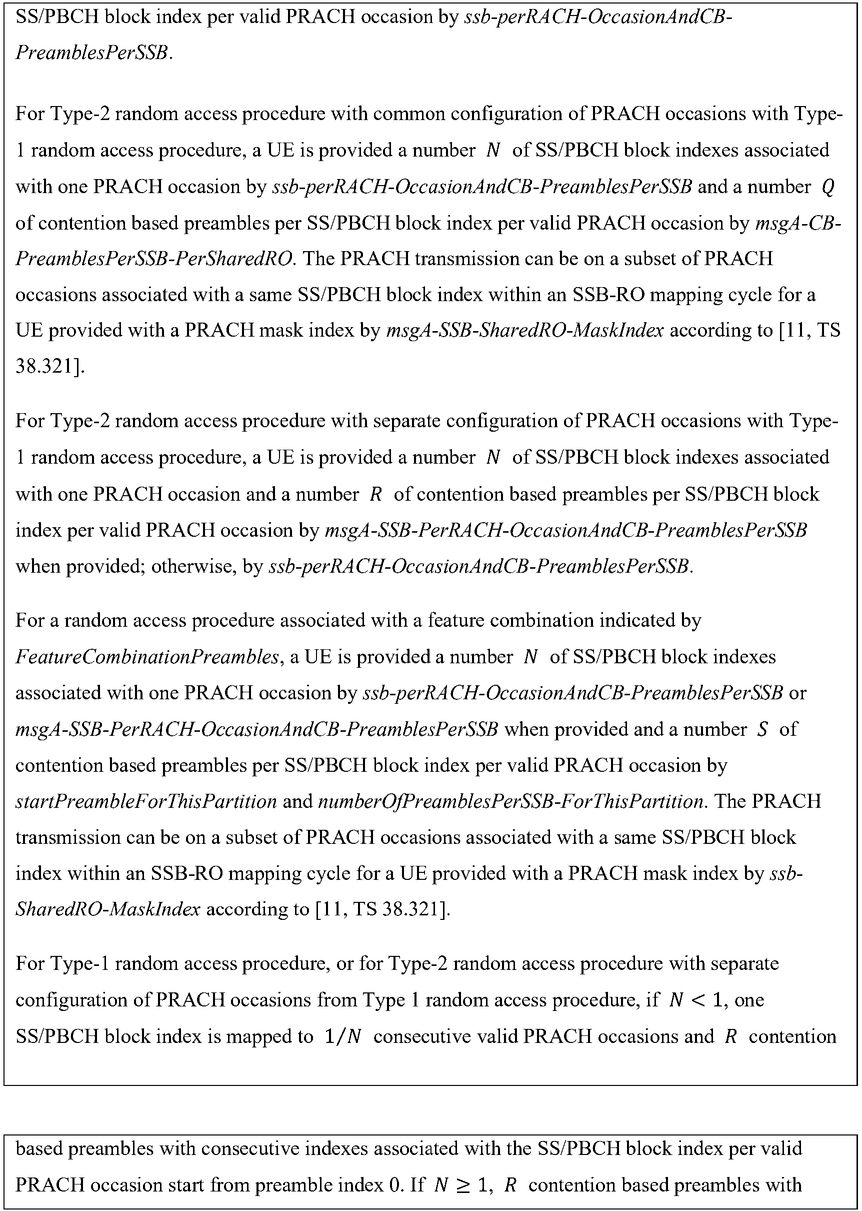

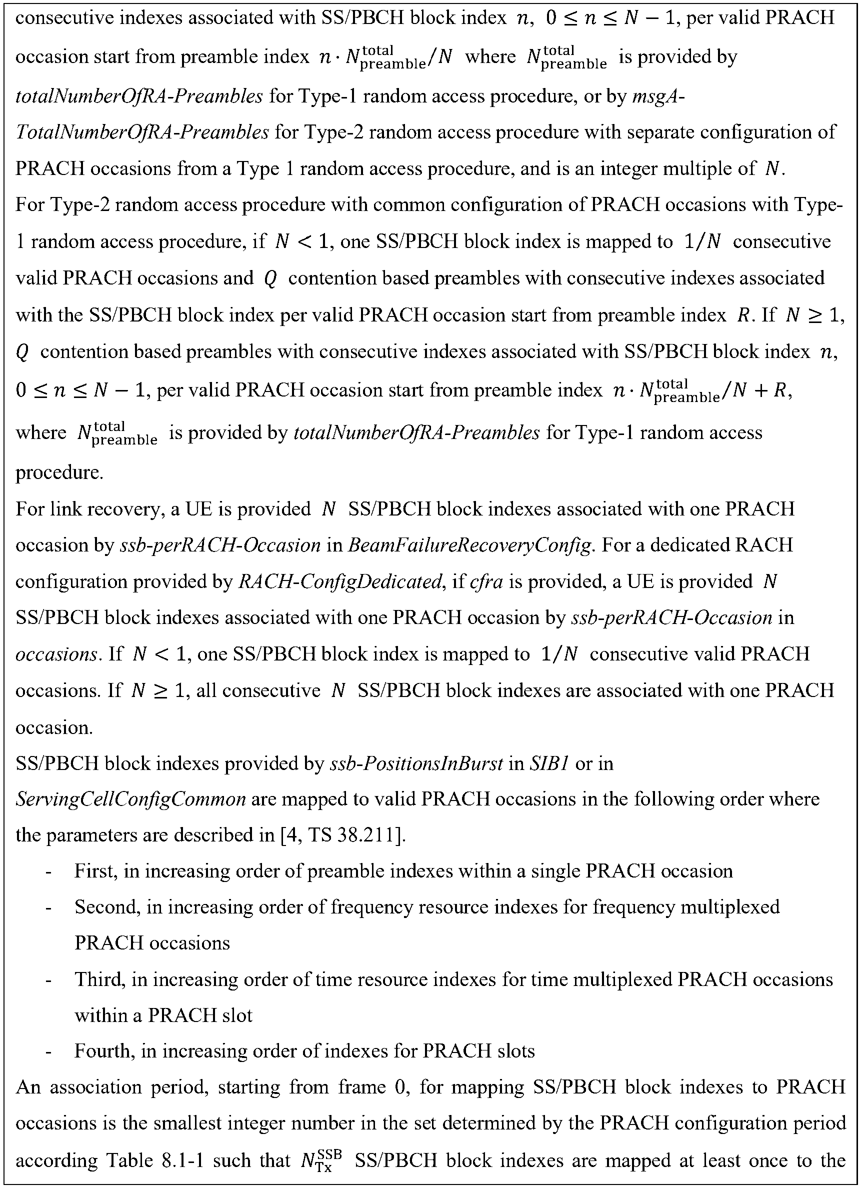

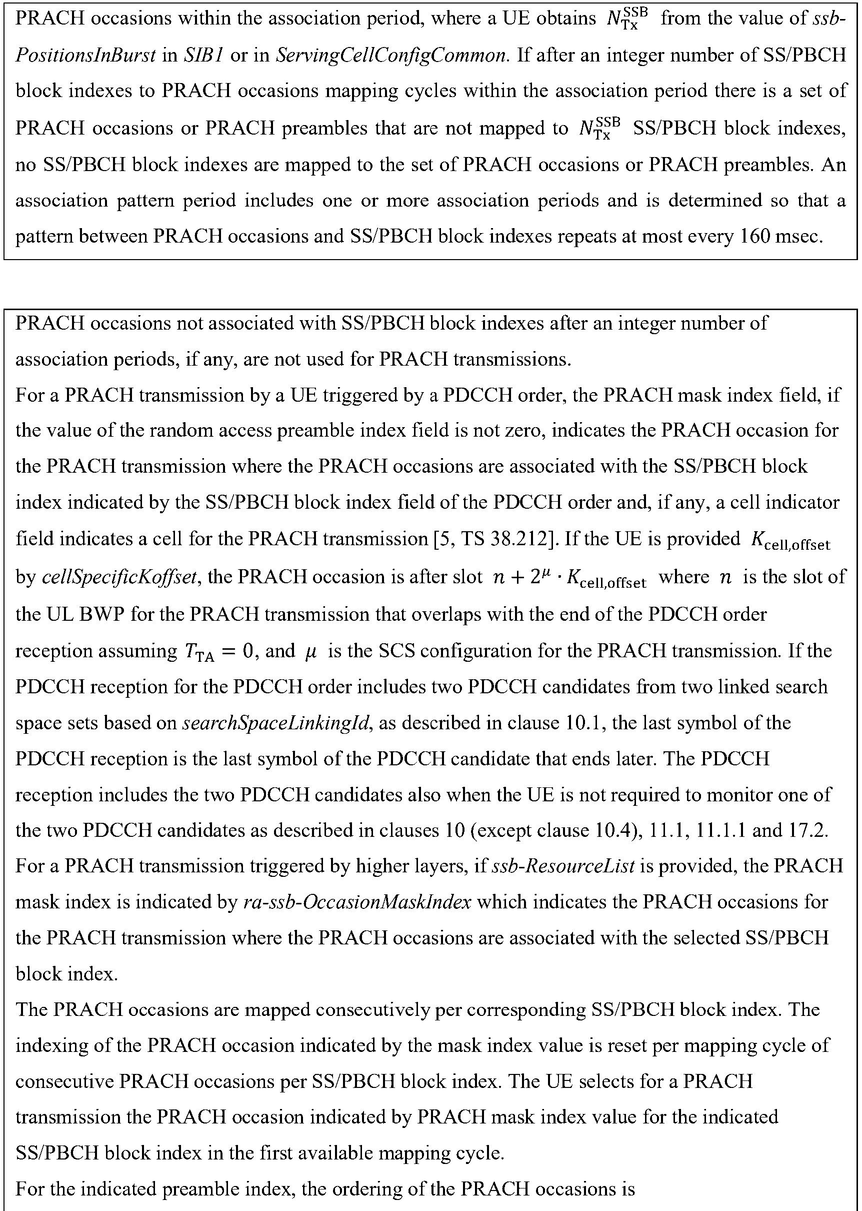

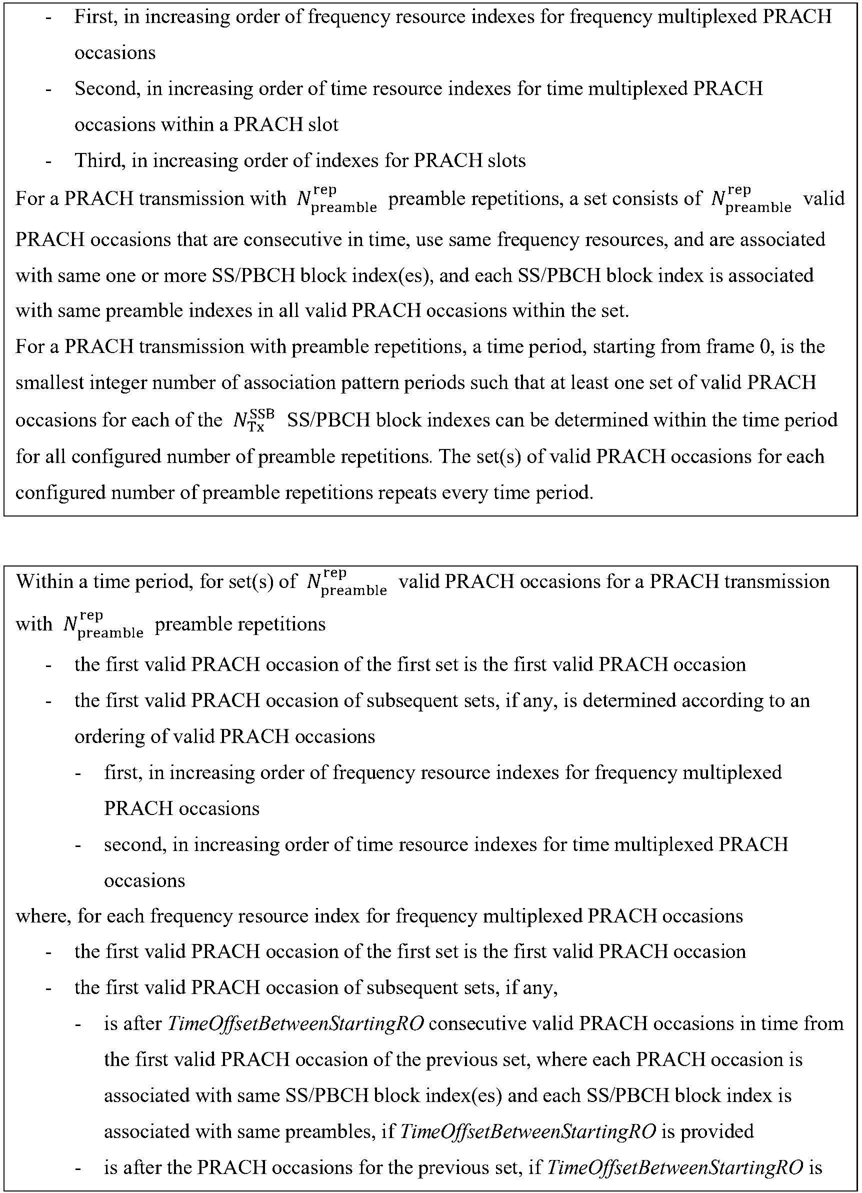

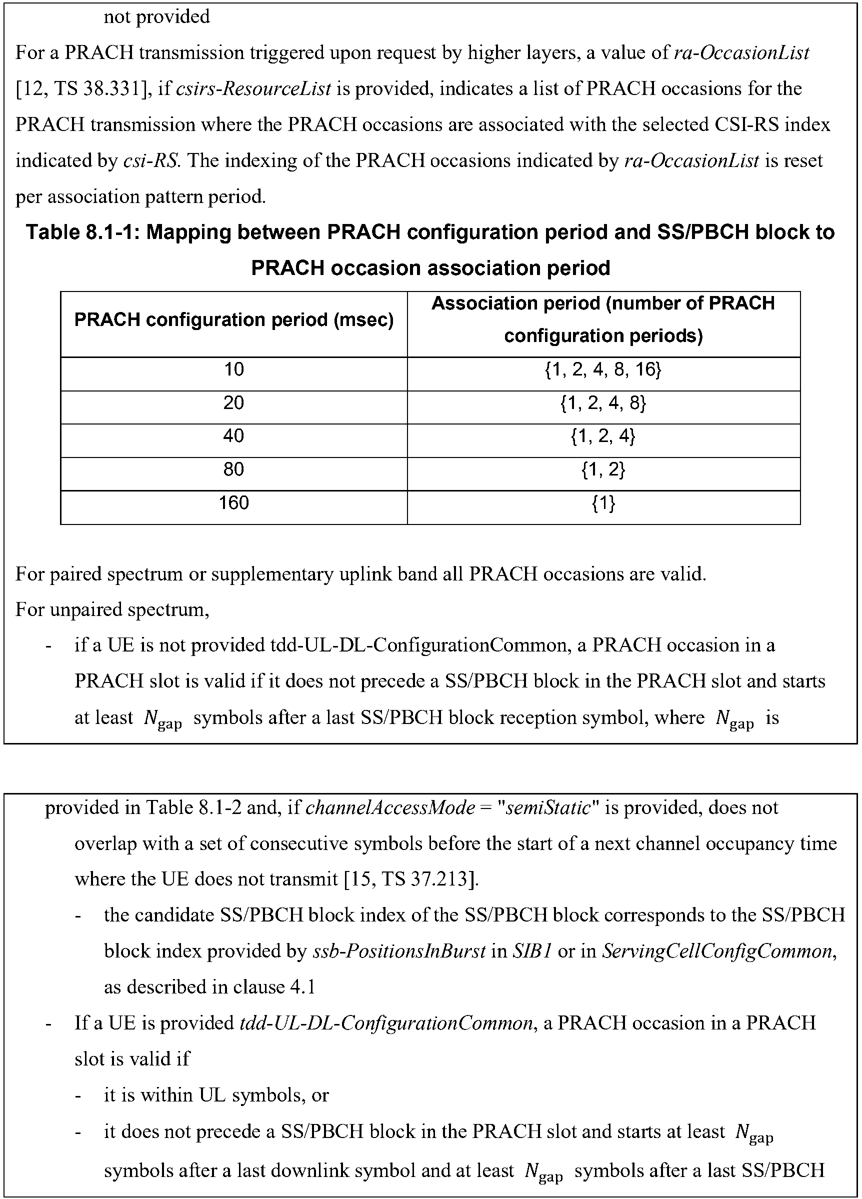

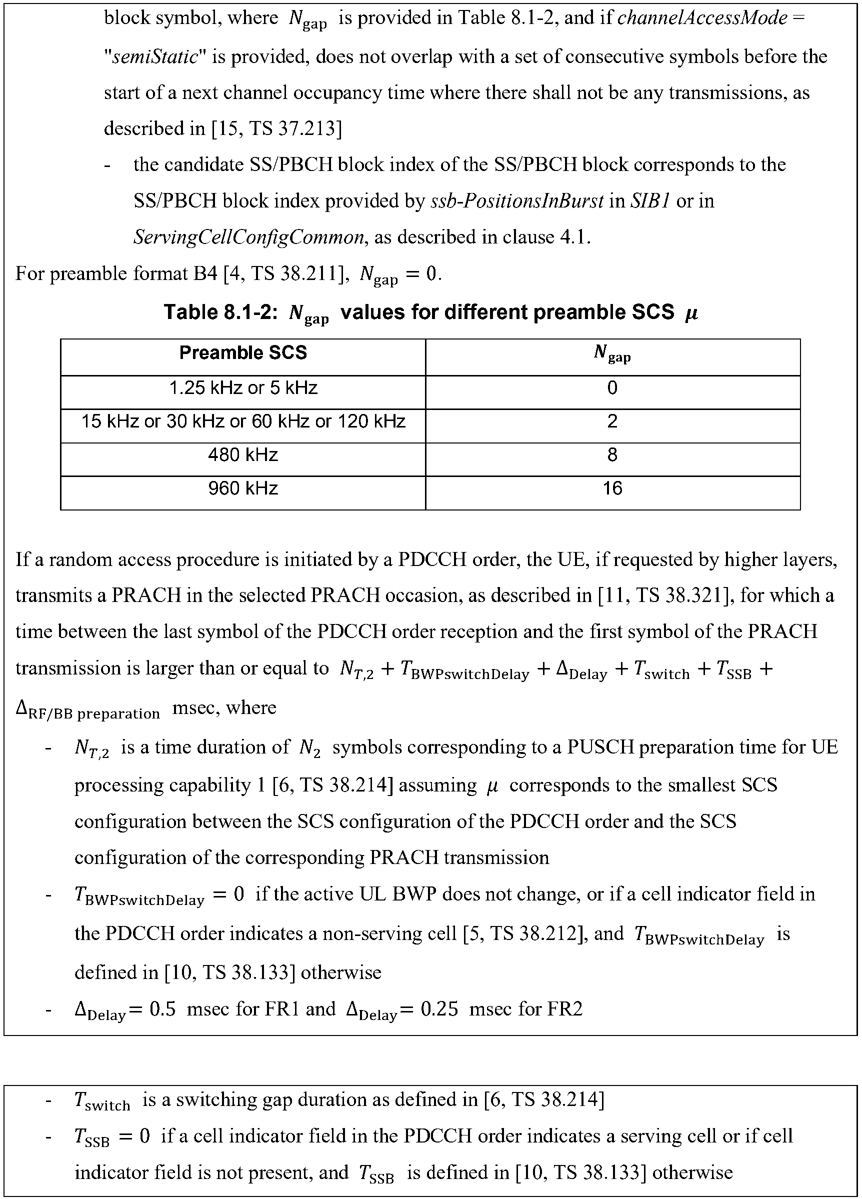

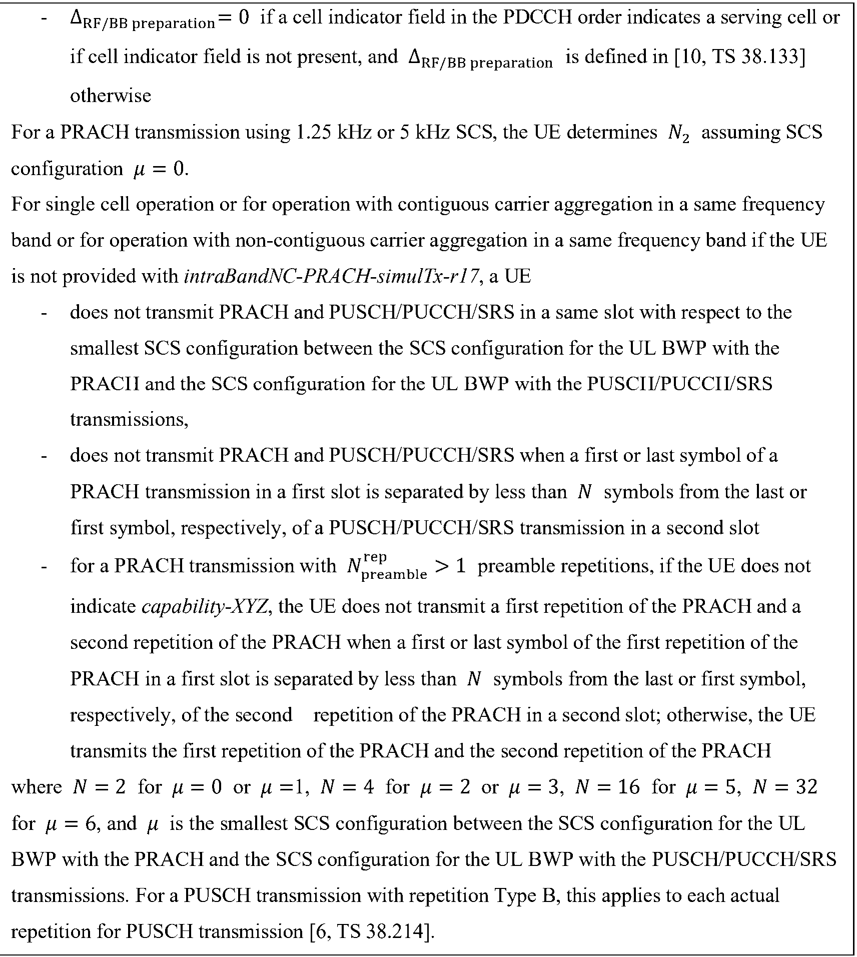

The configurations/definitions/operations according to Table 1 above may be referenced to clarify definitions/operations of embodiments described below. For example, ROs in embodiments described below may represent valid PRACH occasions mentioned in Table 1. For example, in embodiments described below, a plurality of ROs with the same beam index may represent 1/N consecutive valid PRACH occasions to which one SS/PBCH index is mapped, where N < 1.

The following Tables 2 to 4 show a PRACH configuration table applicable to embodiments described below.

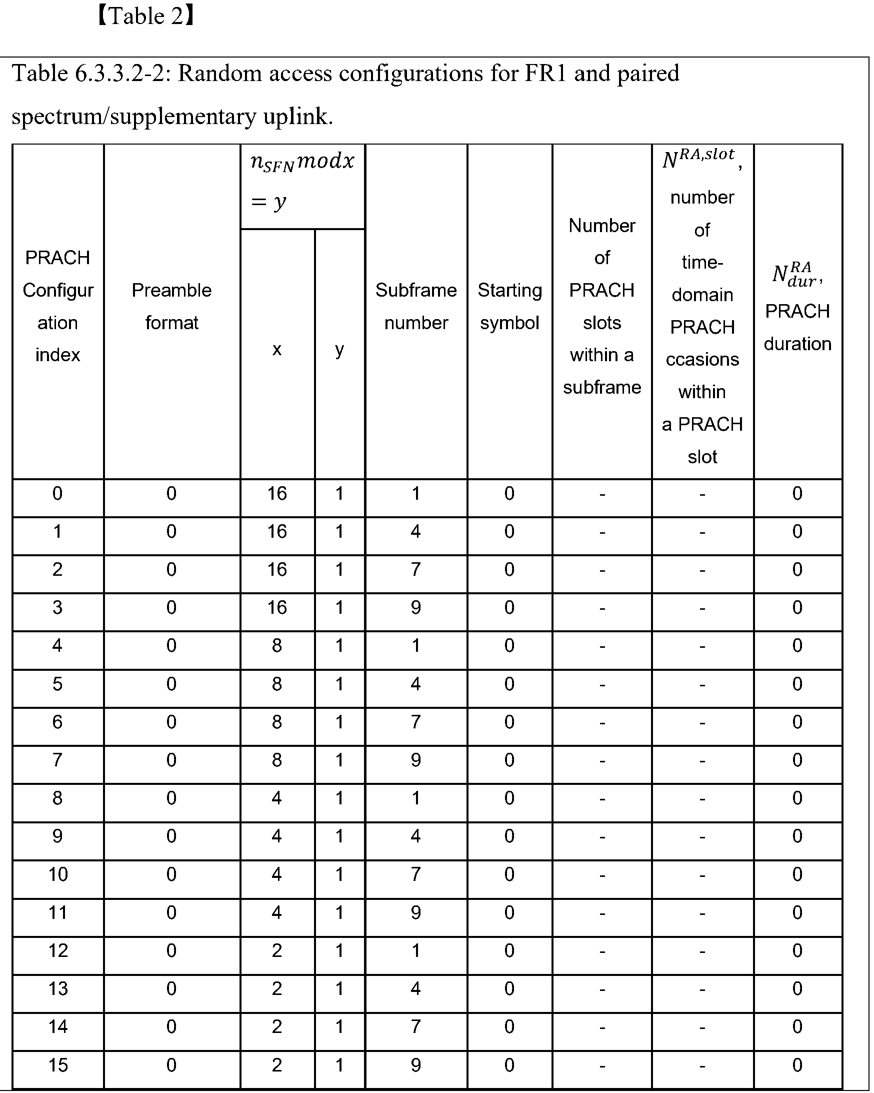

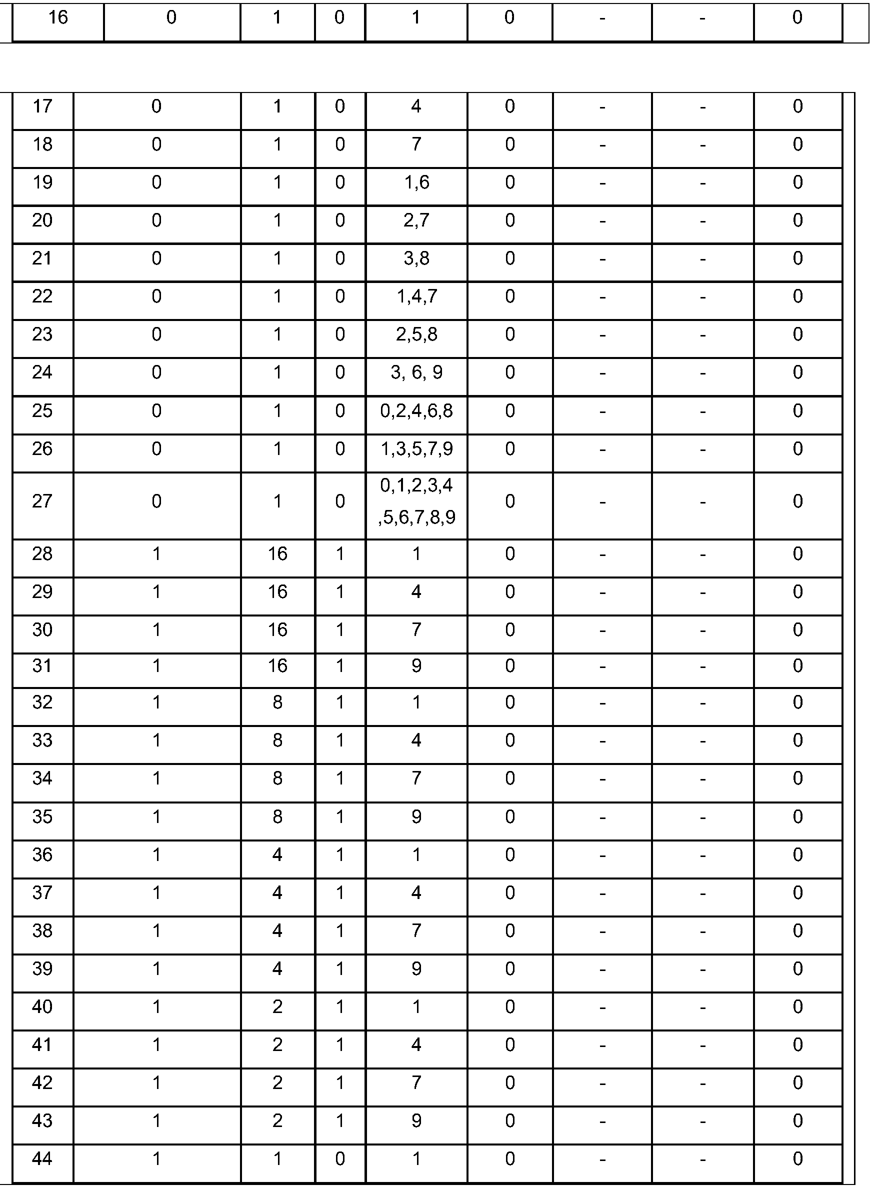

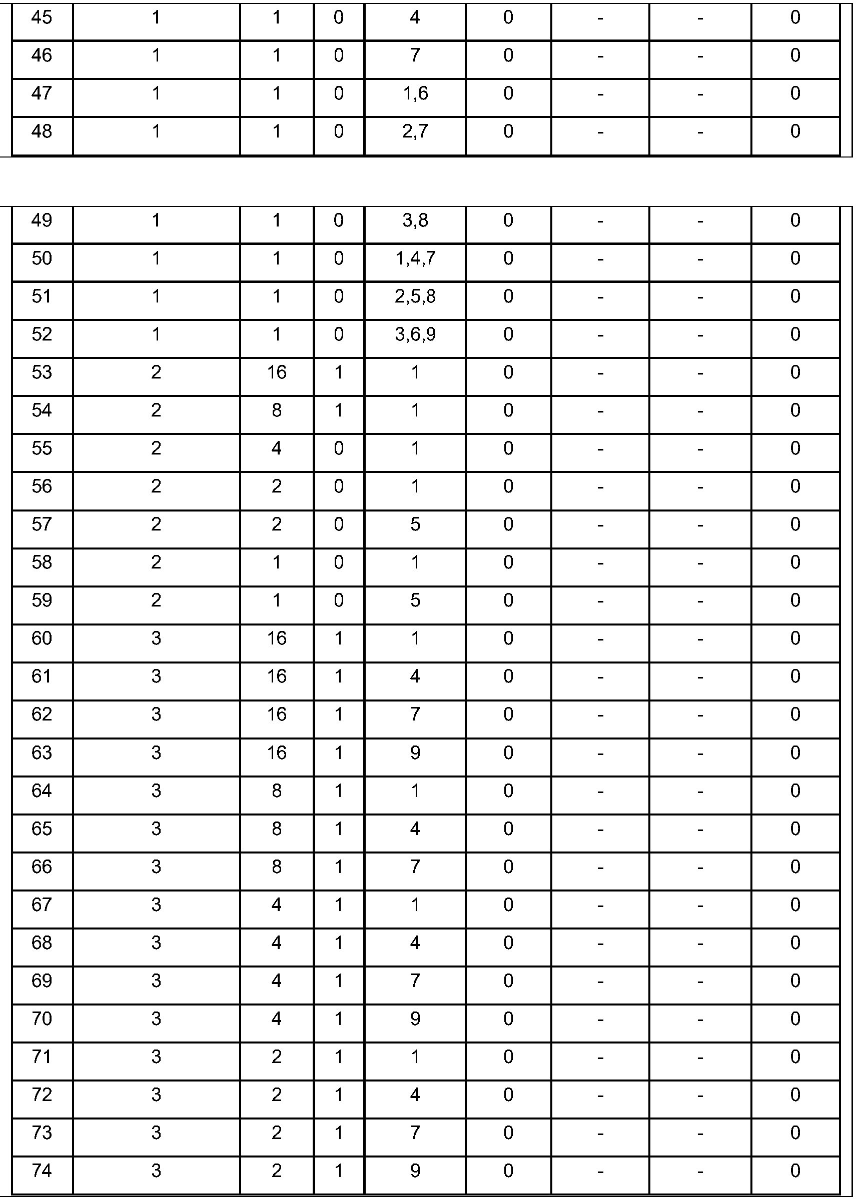

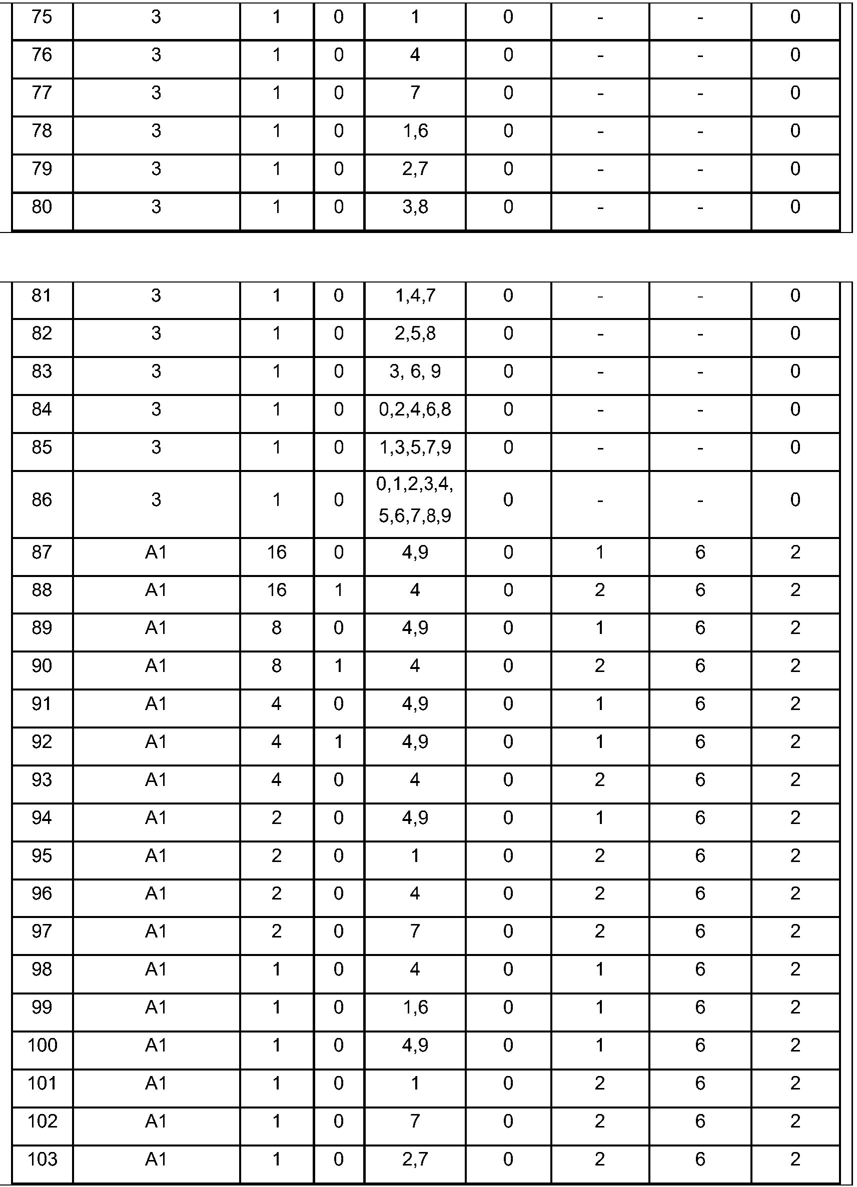

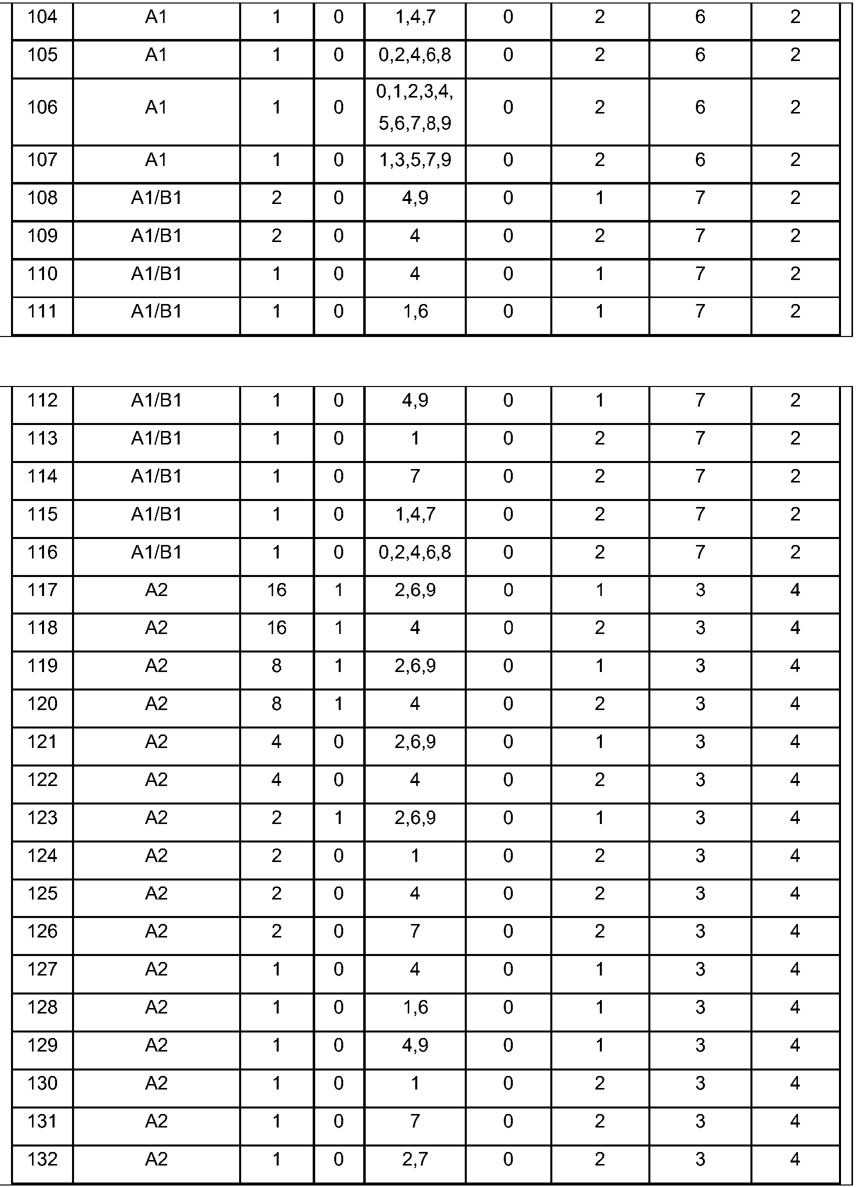

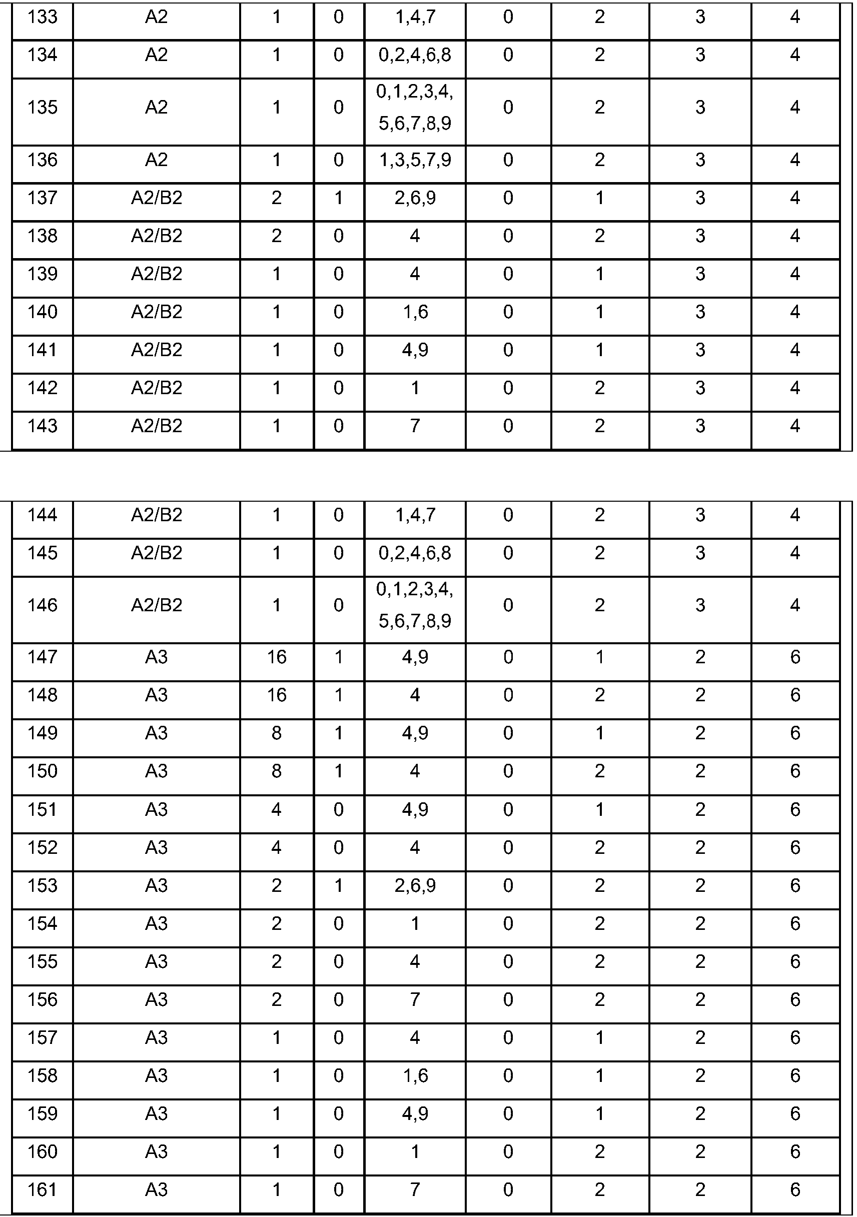

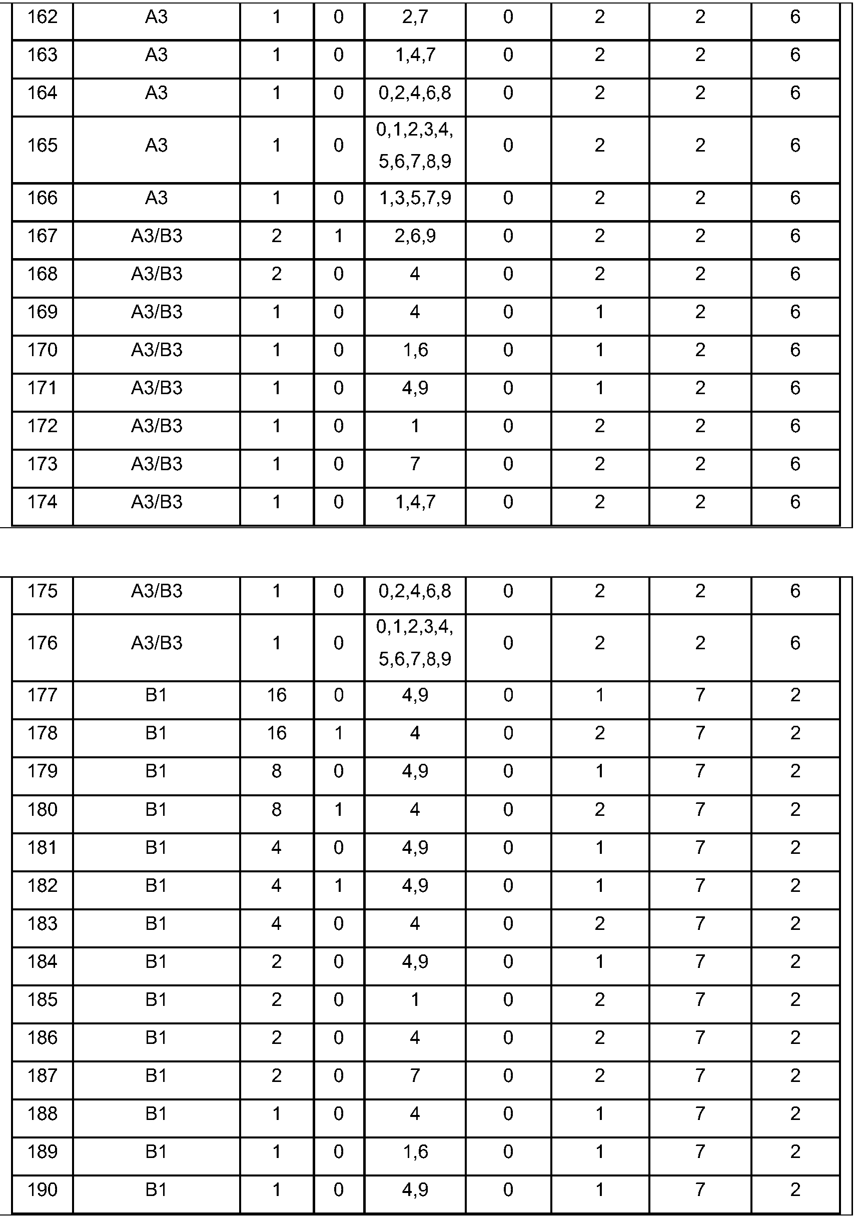

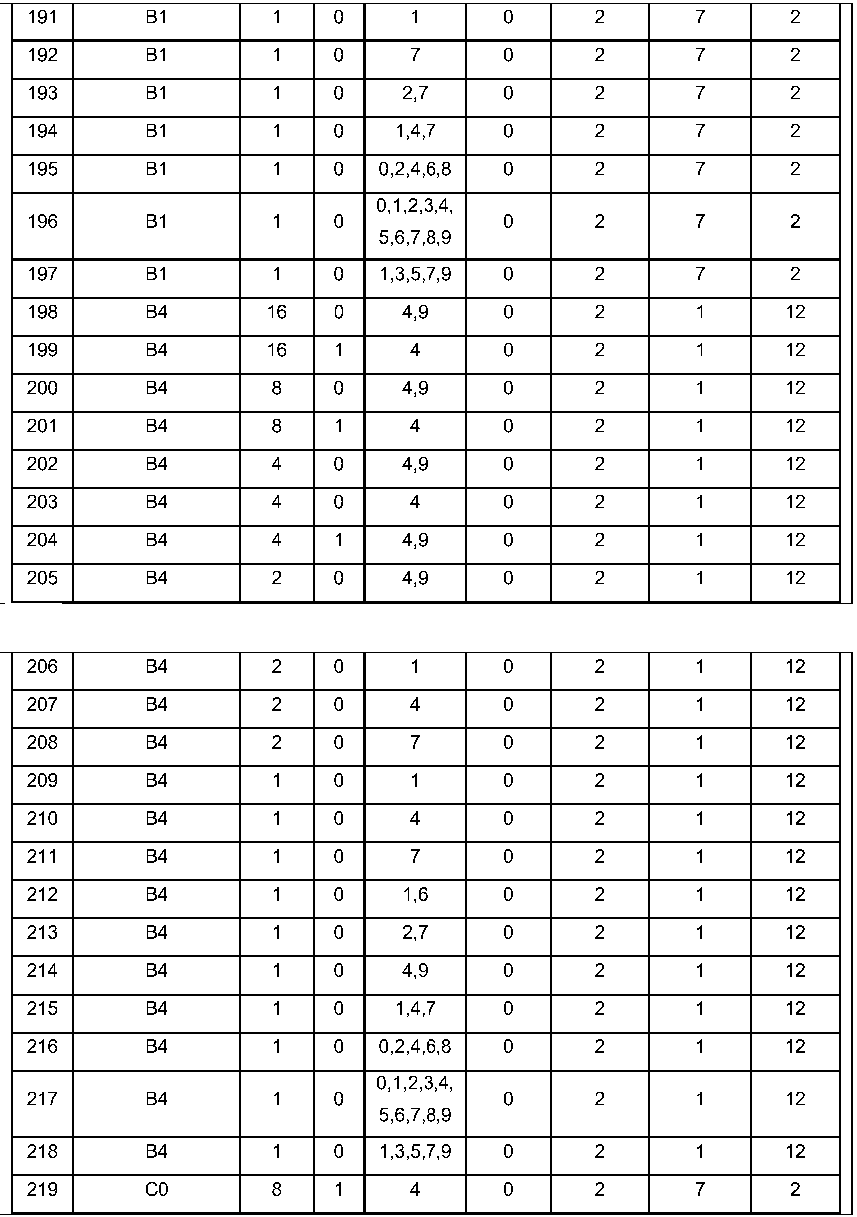

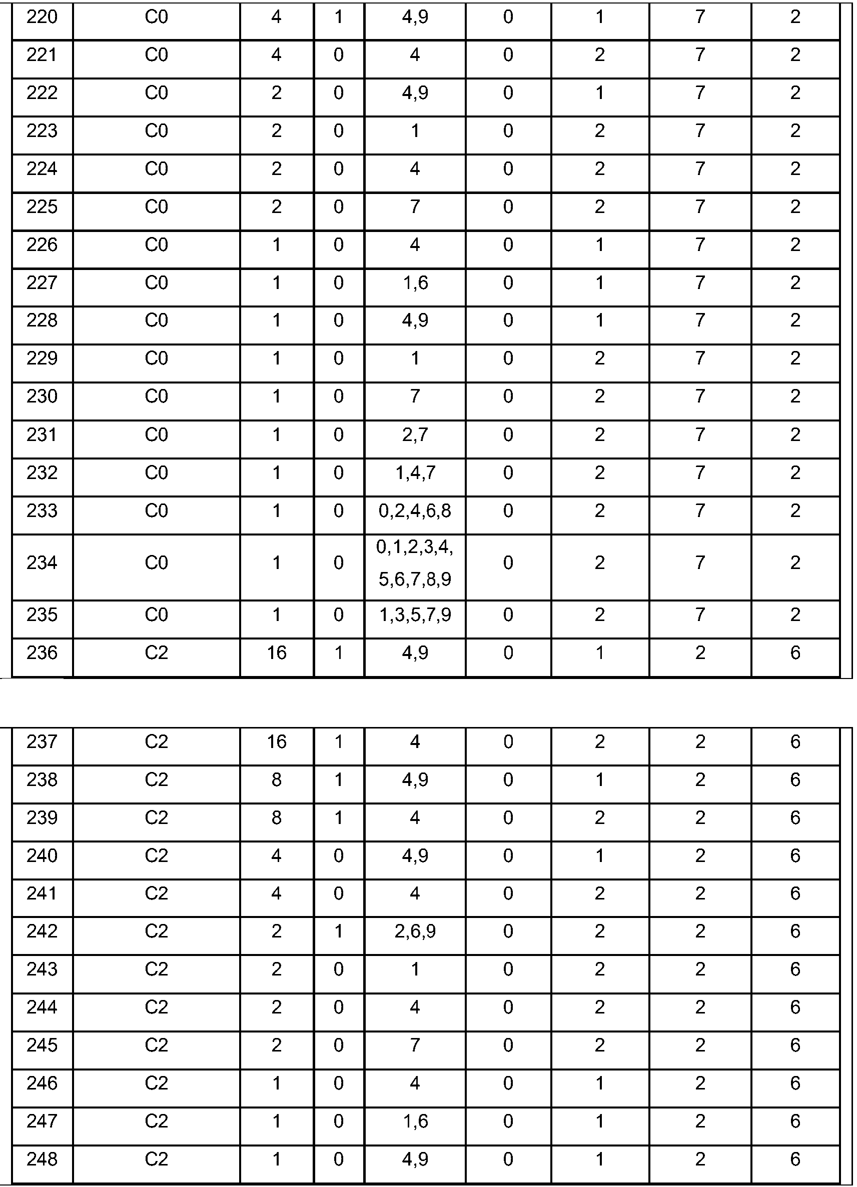

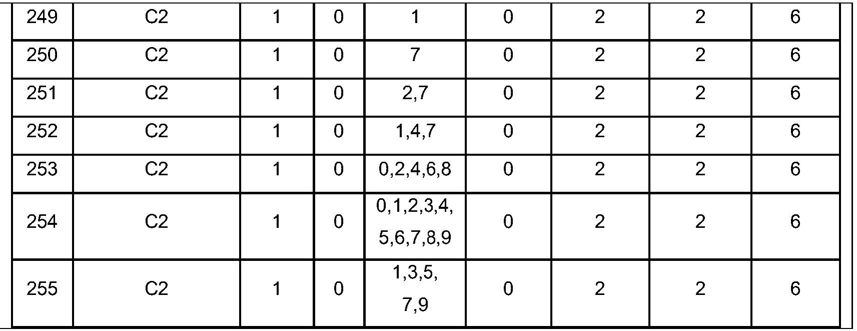

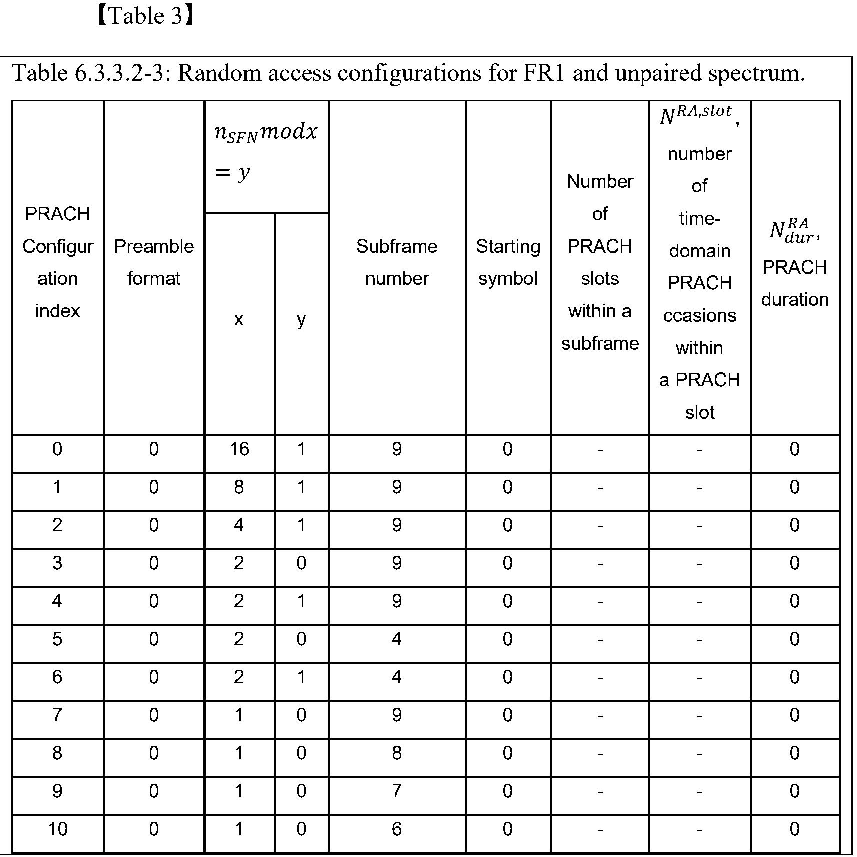

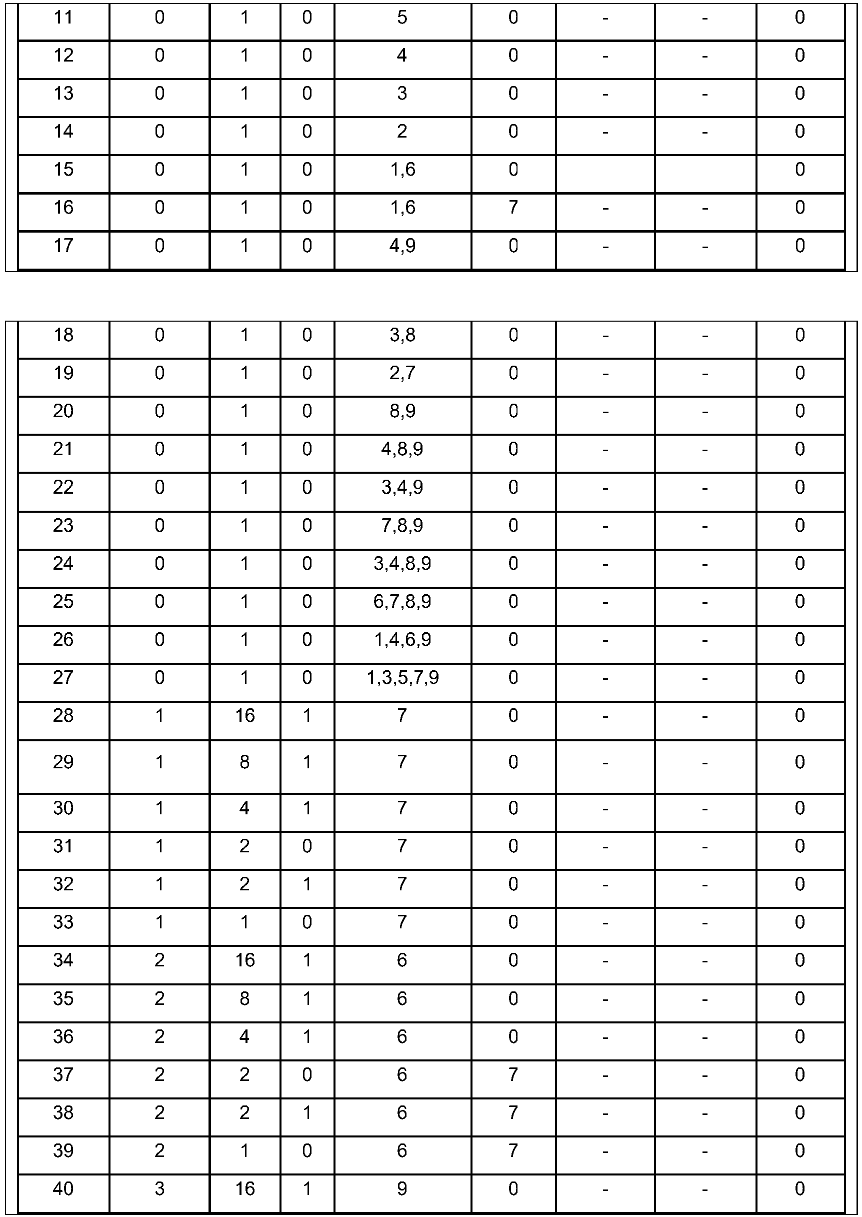

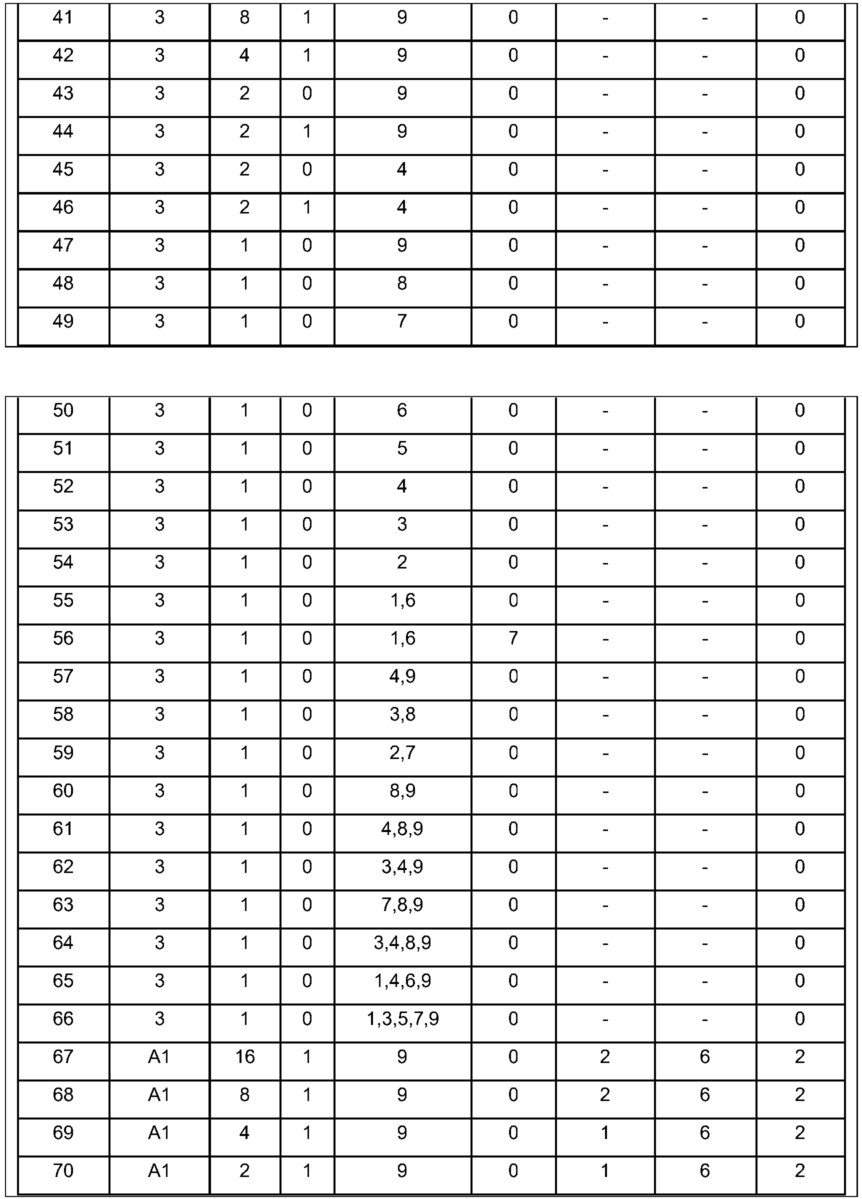

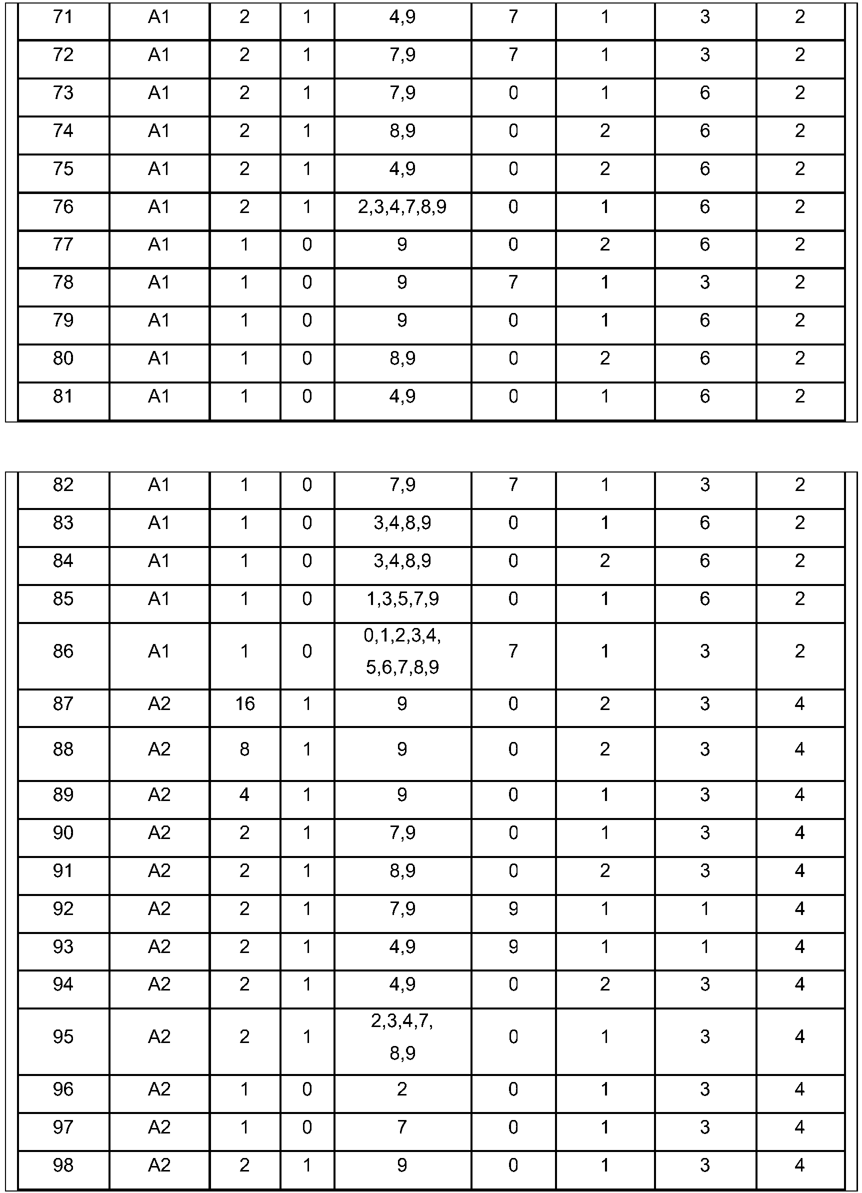

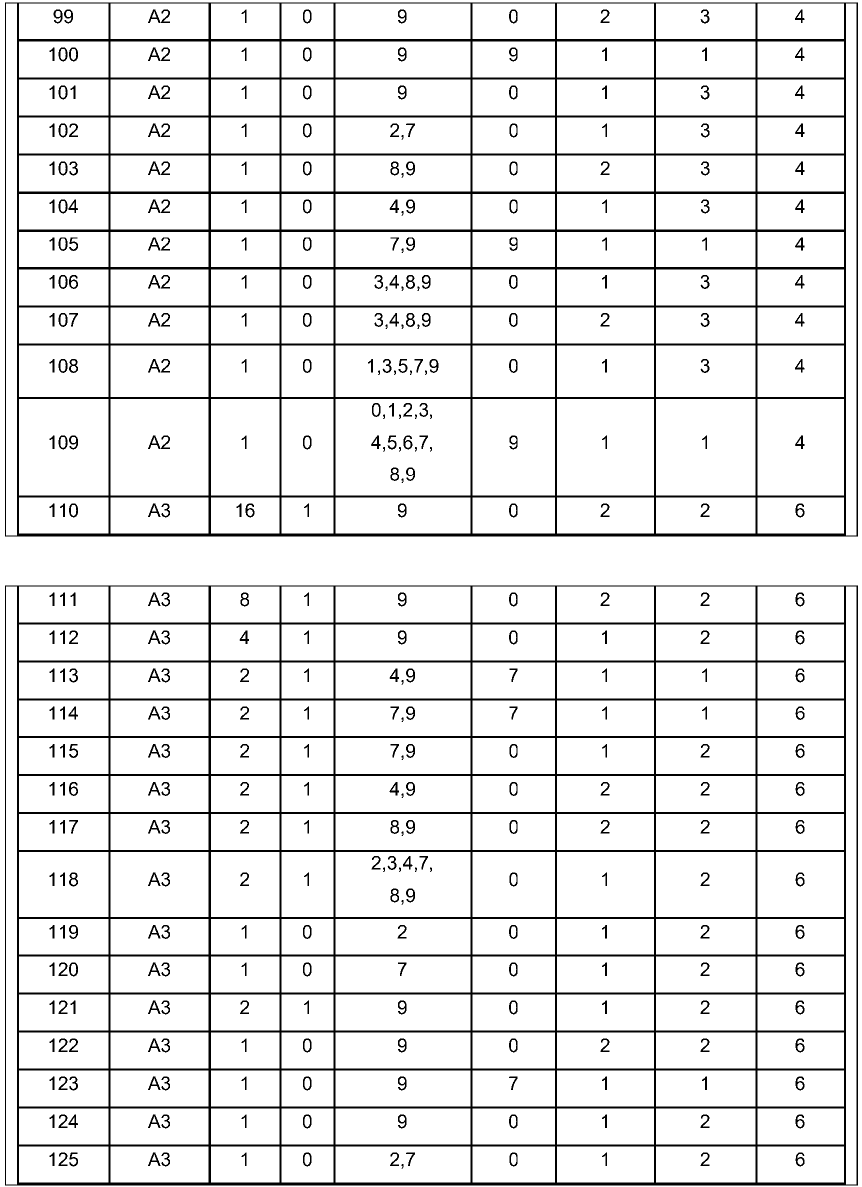

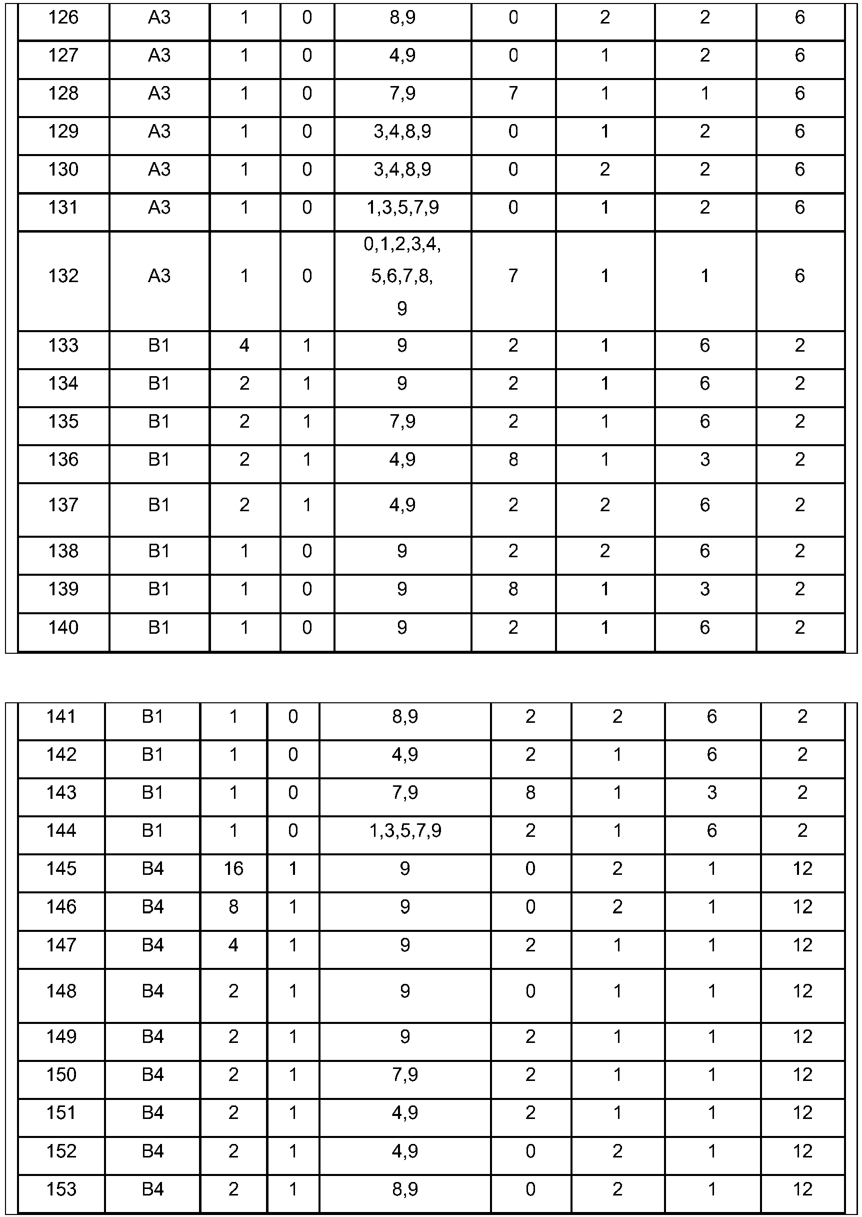

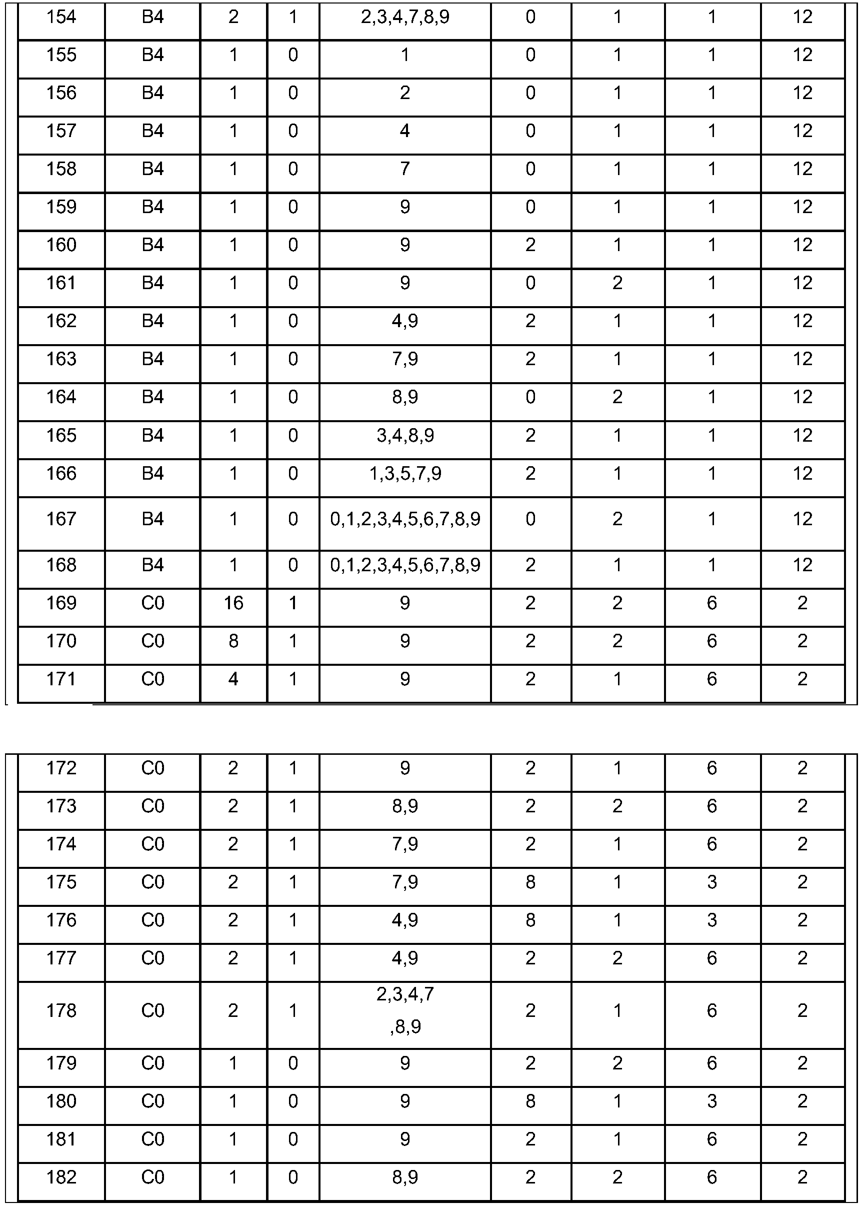

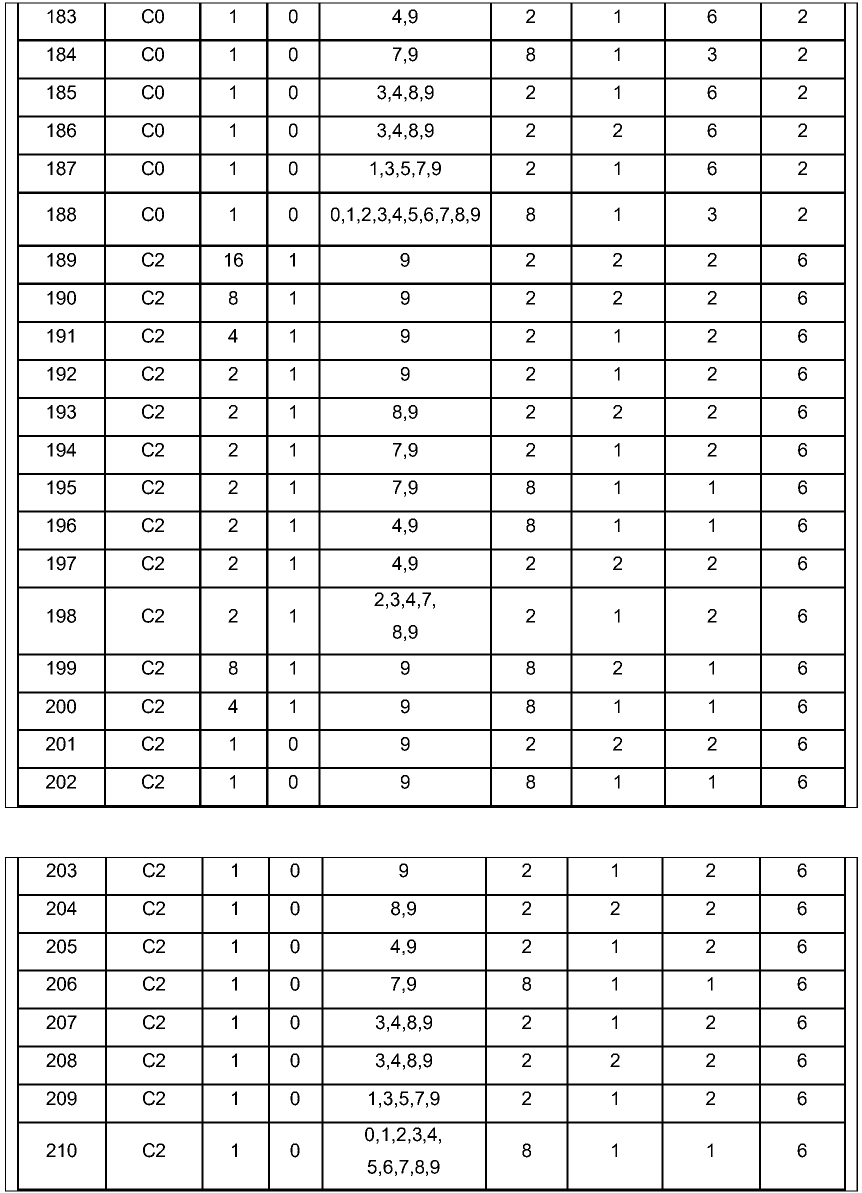

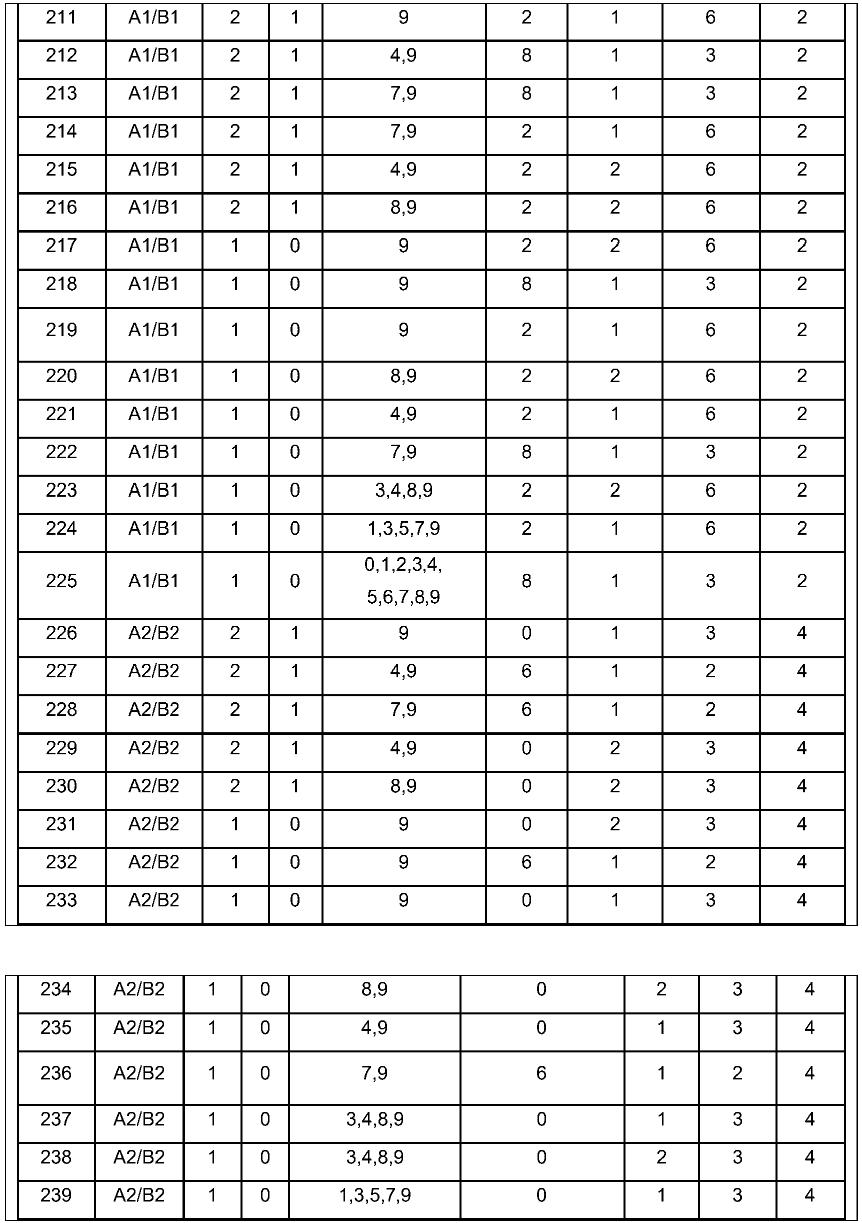

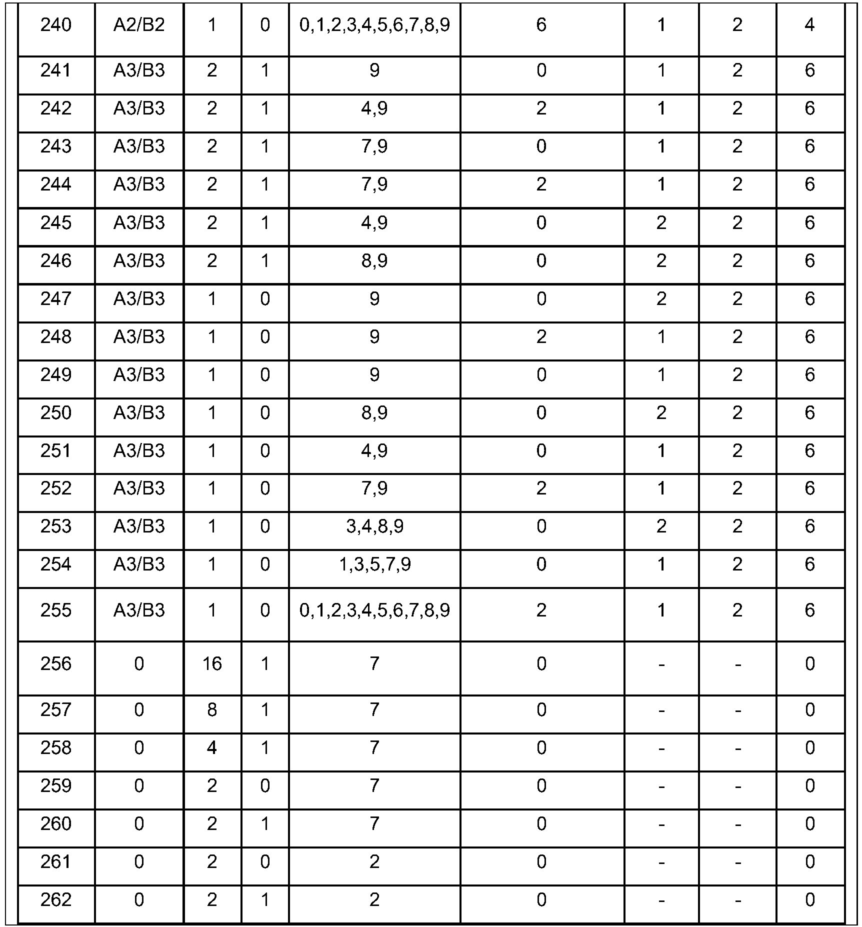

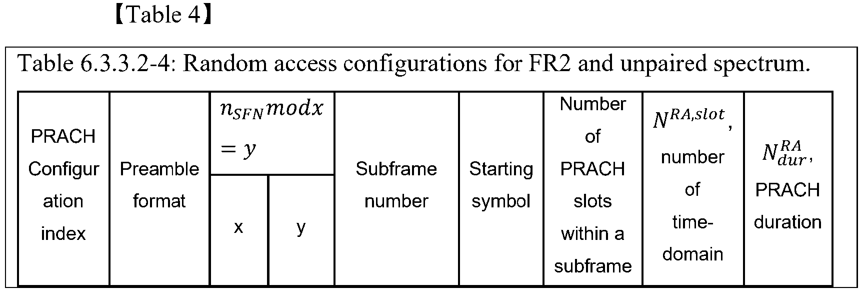

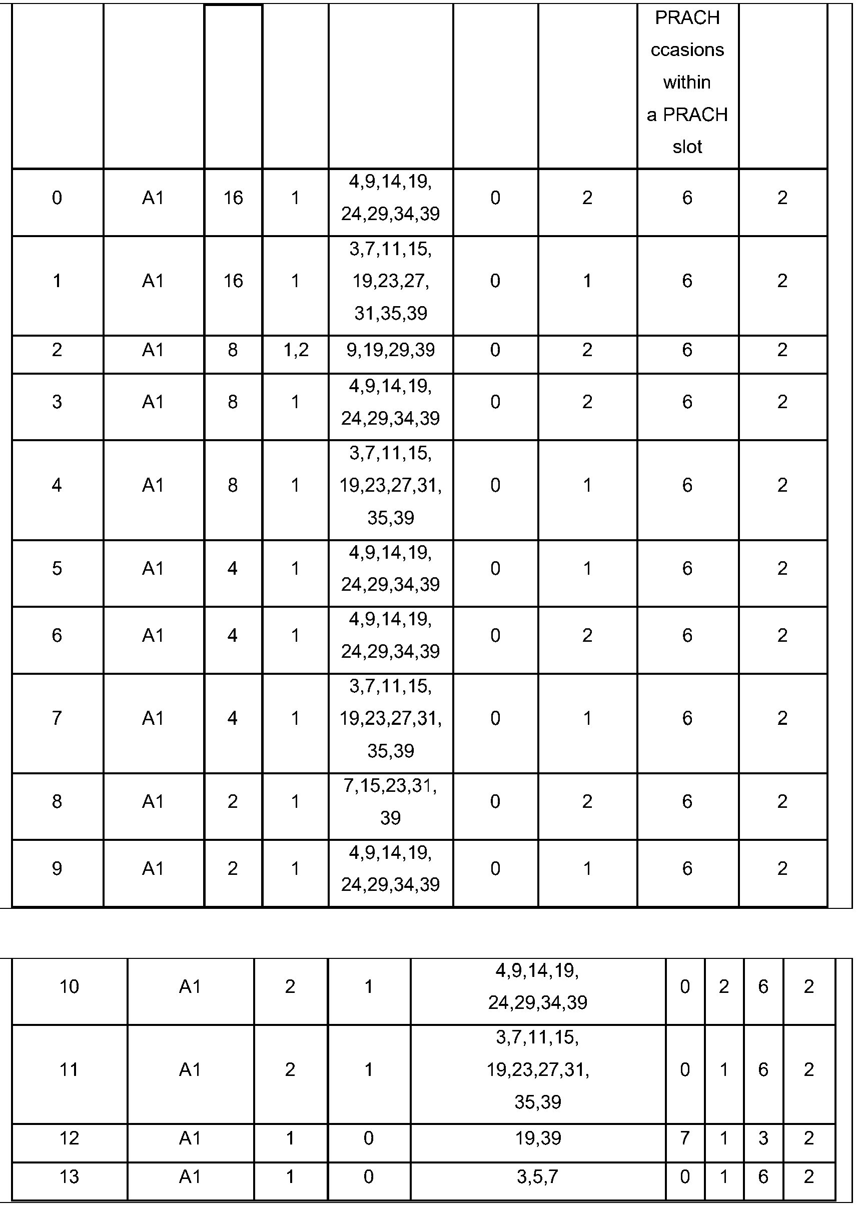

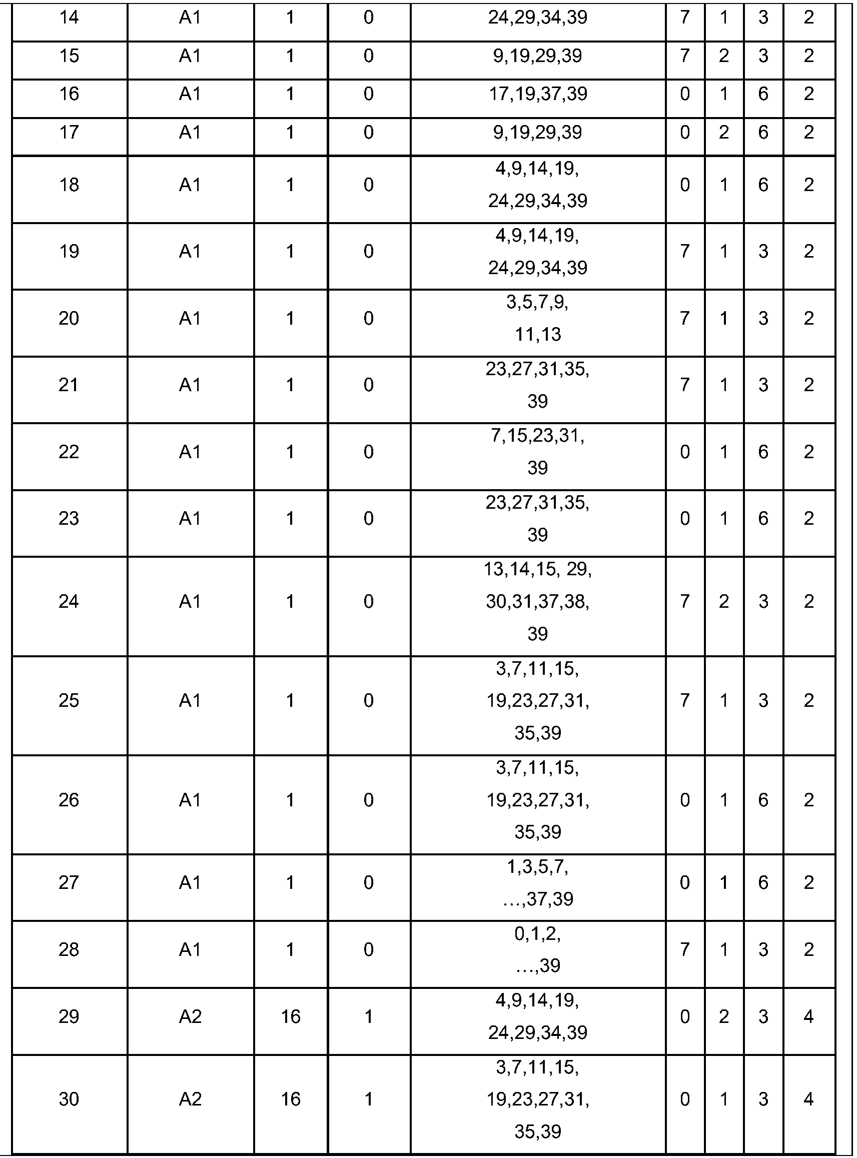

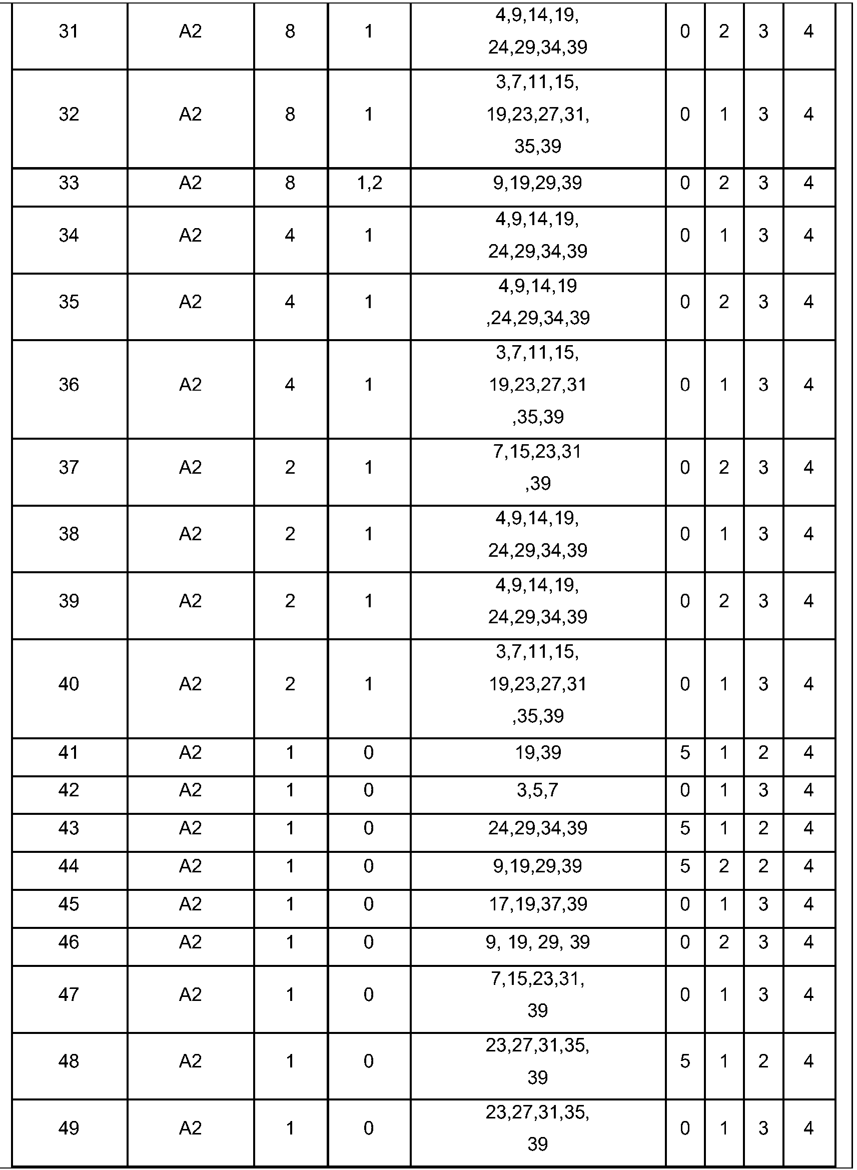

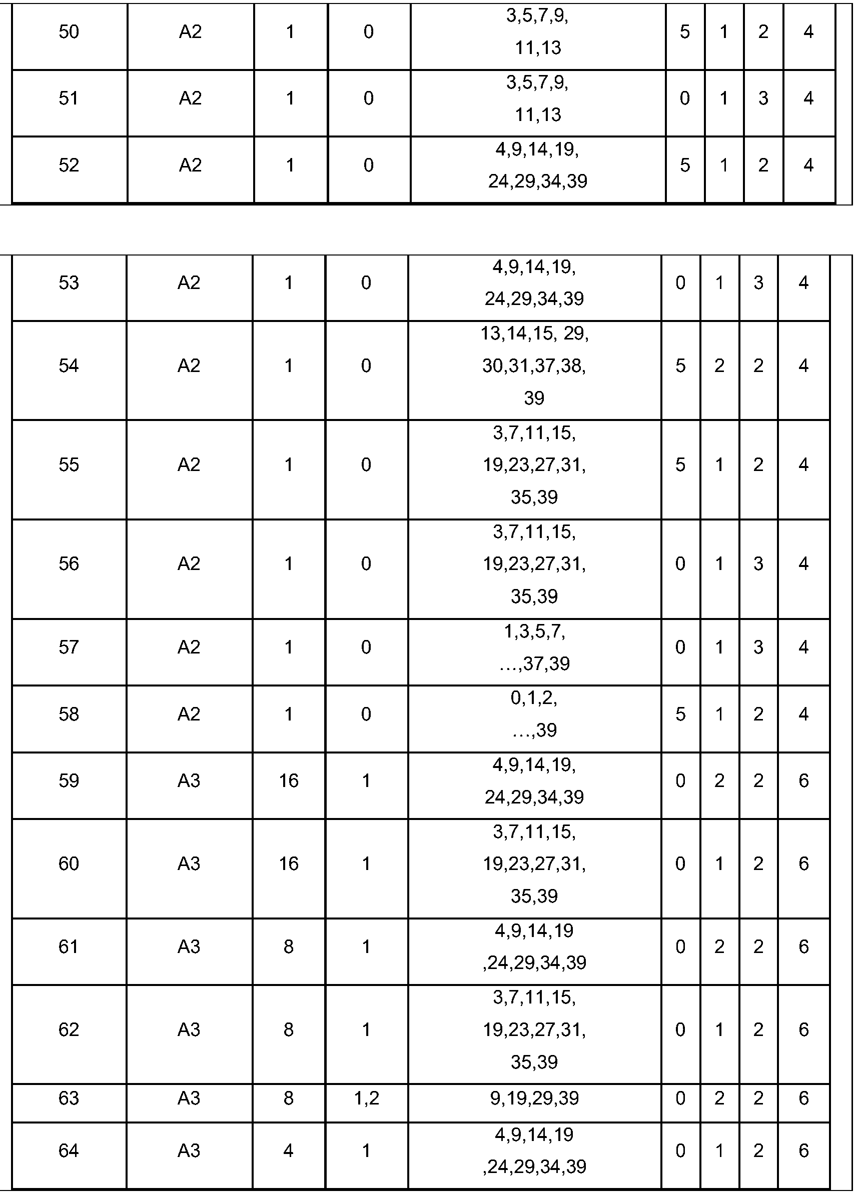

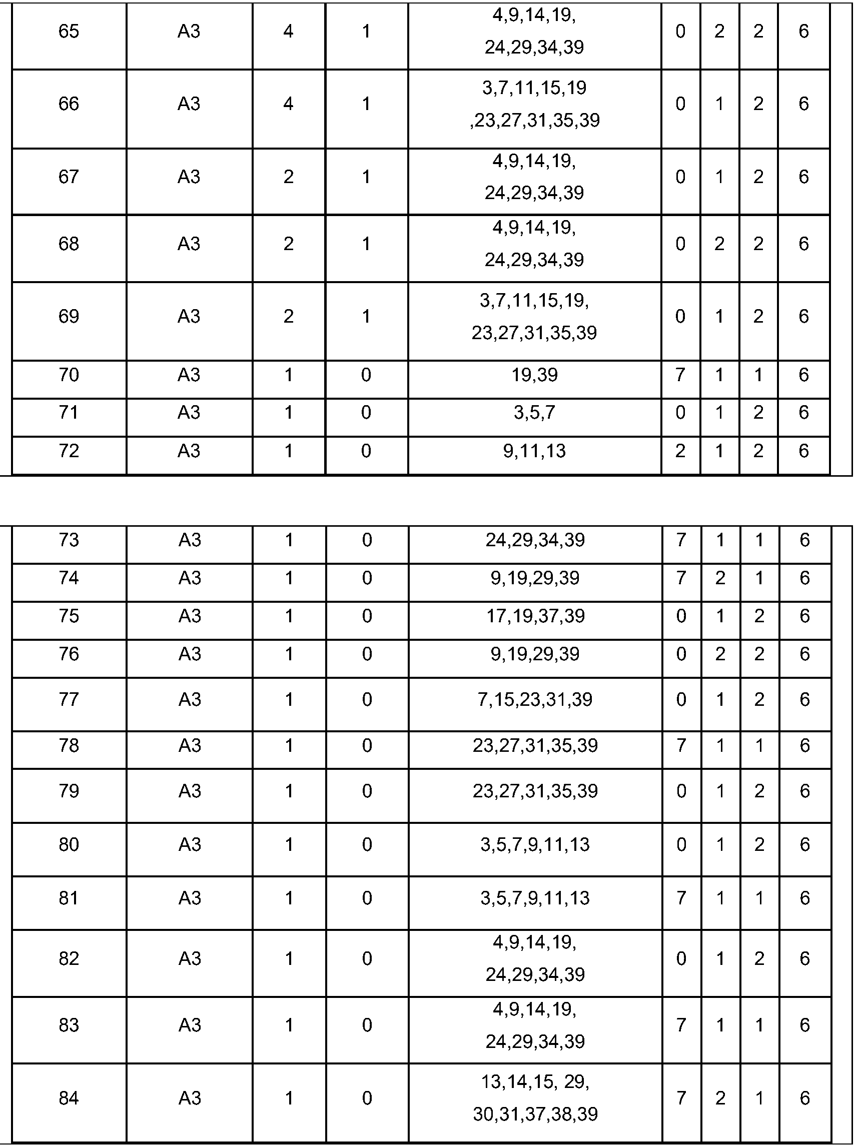

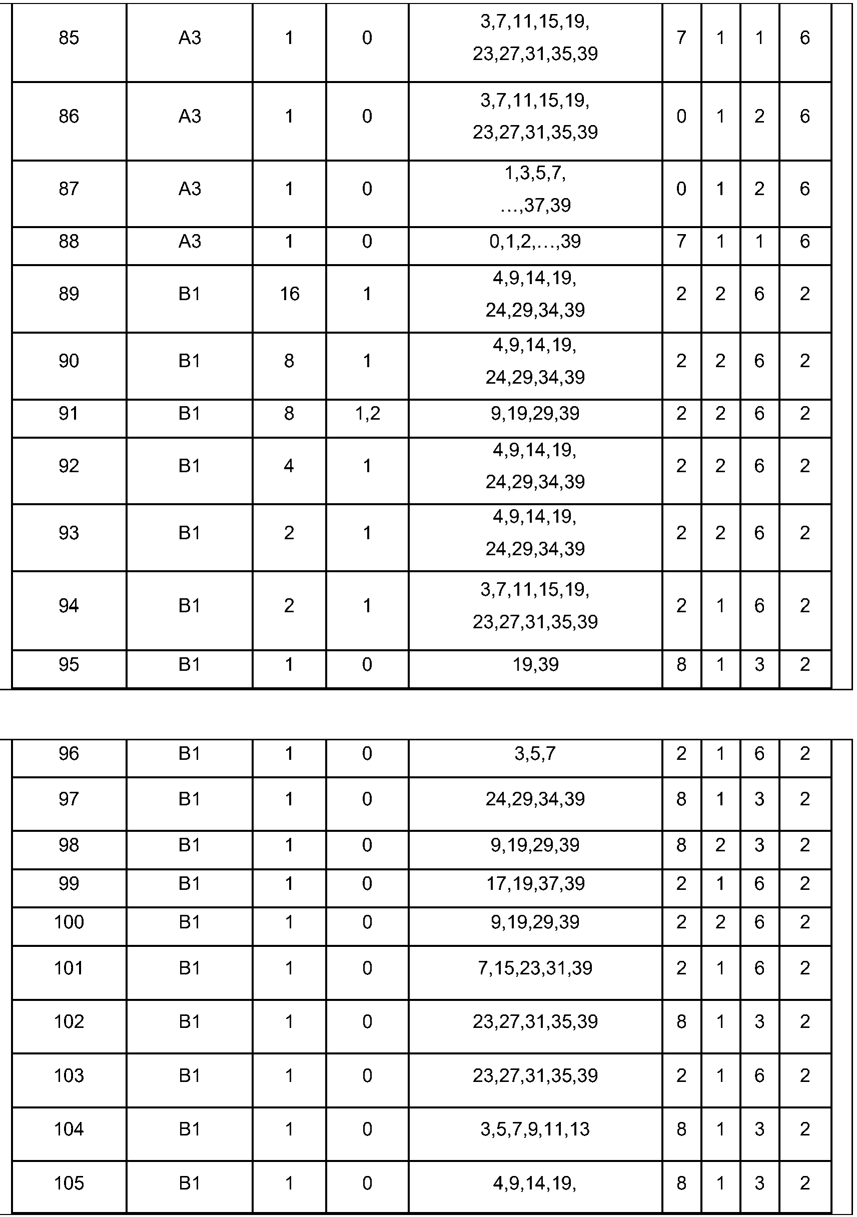

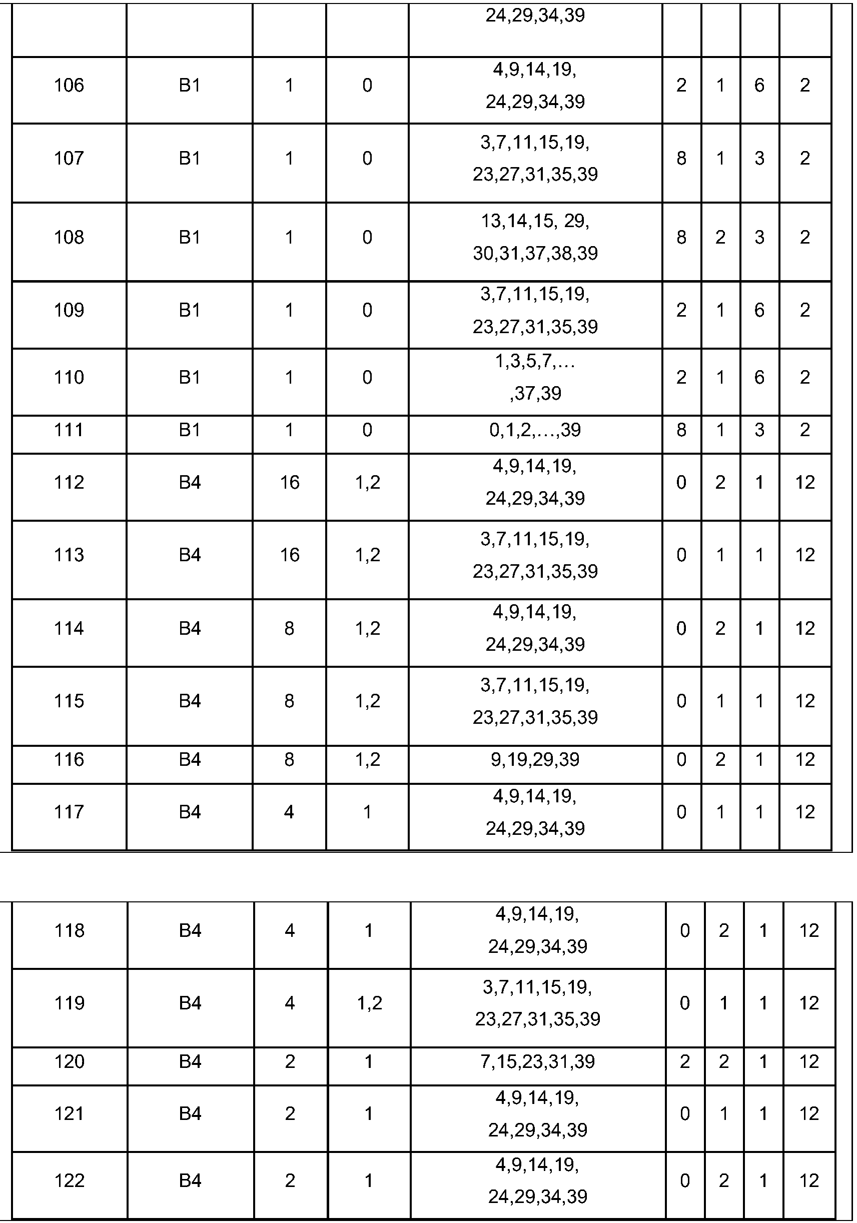

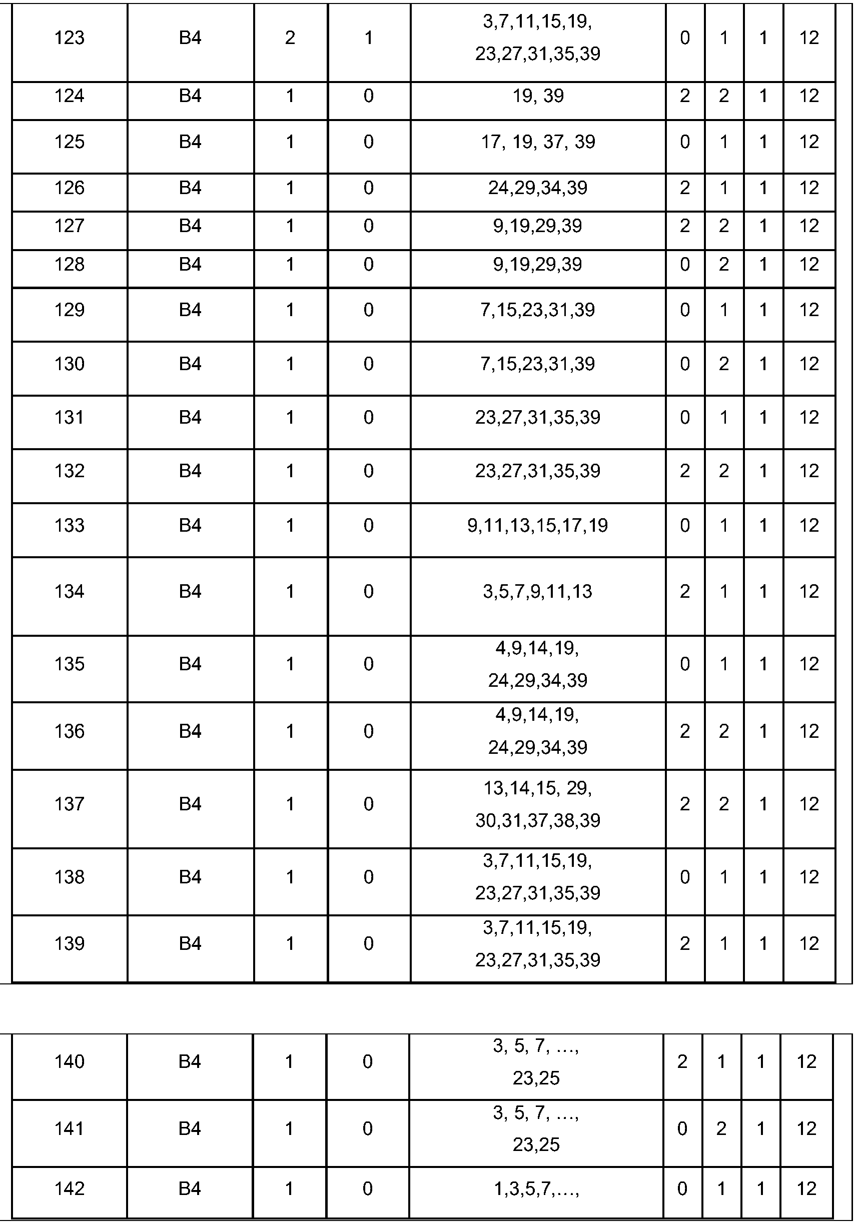

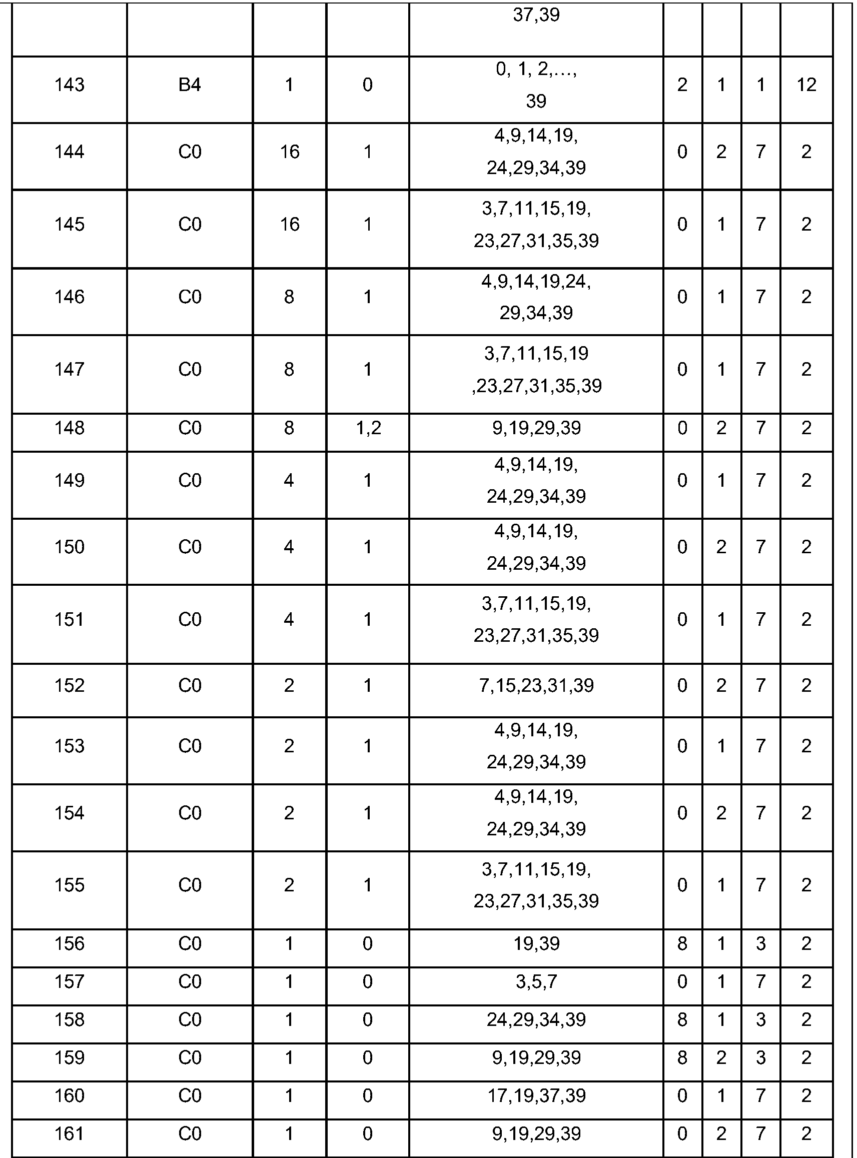

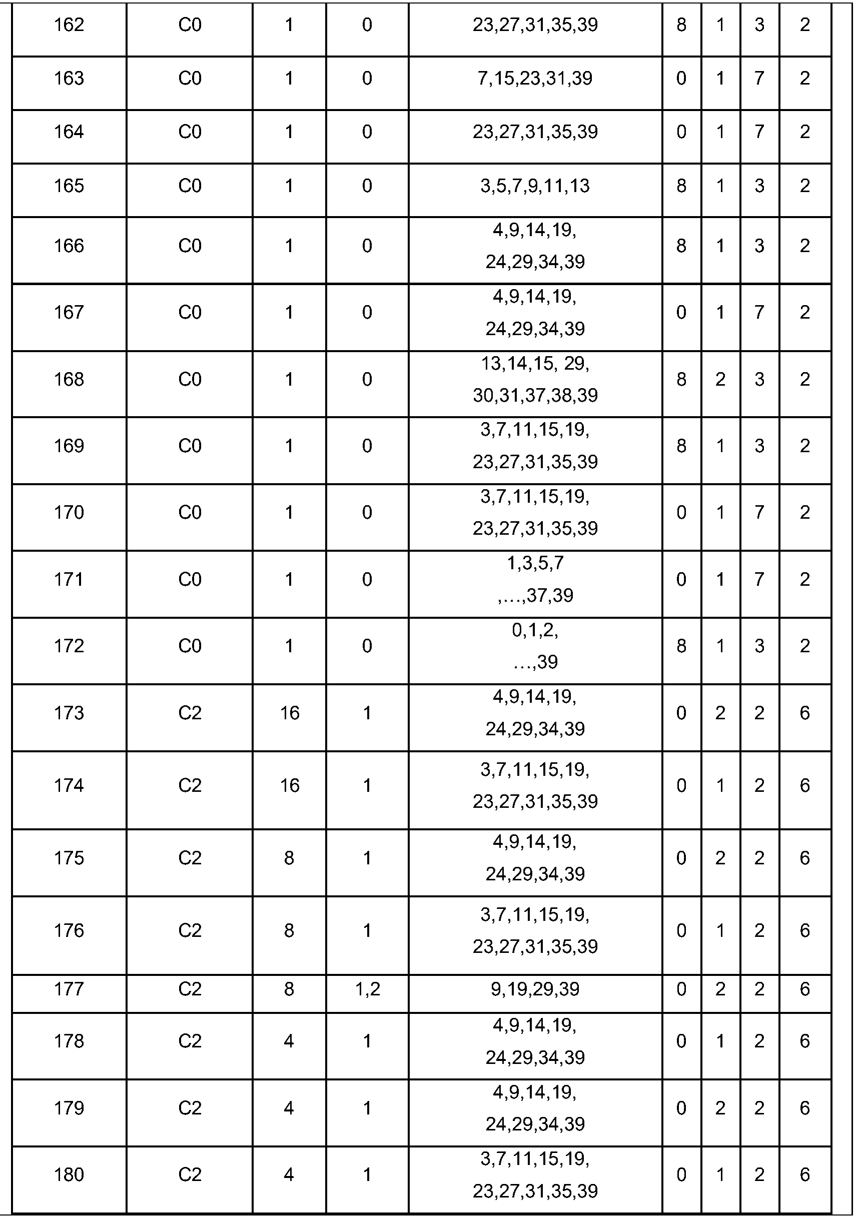

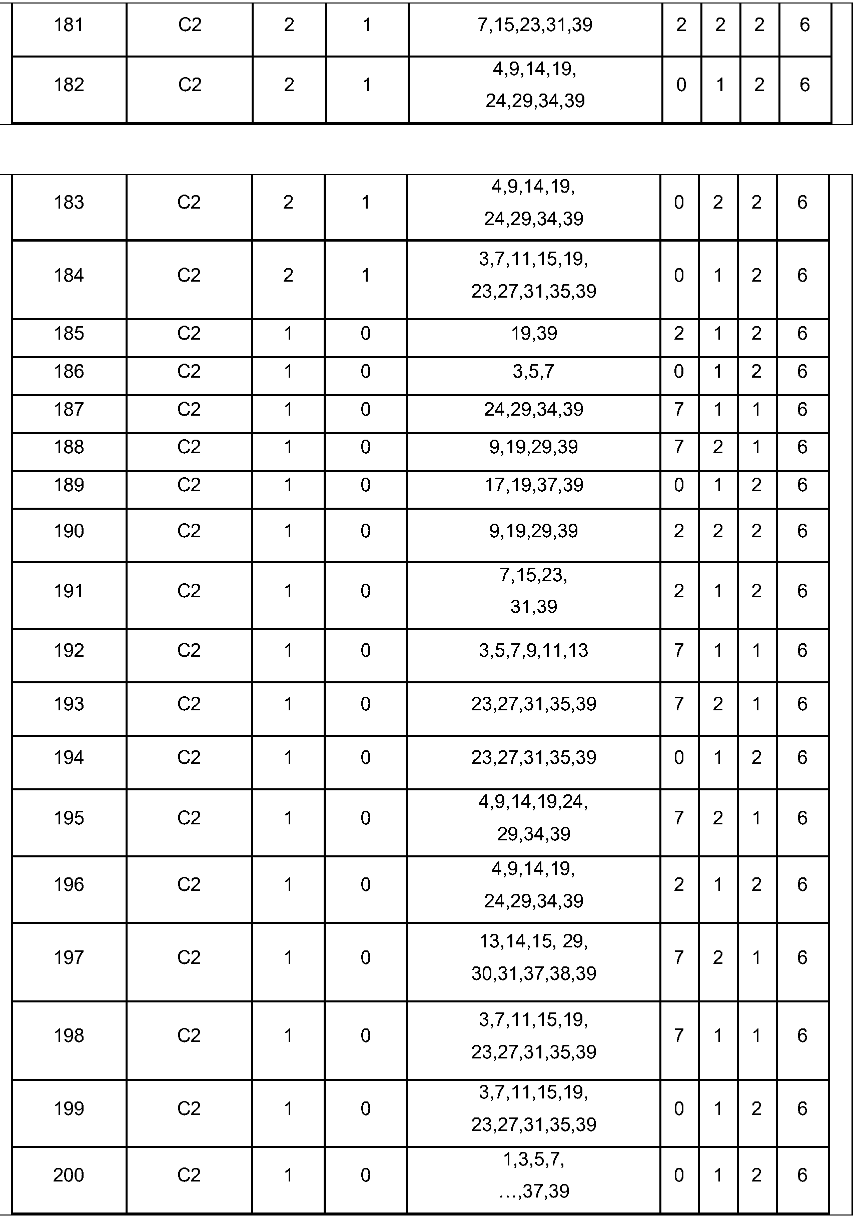

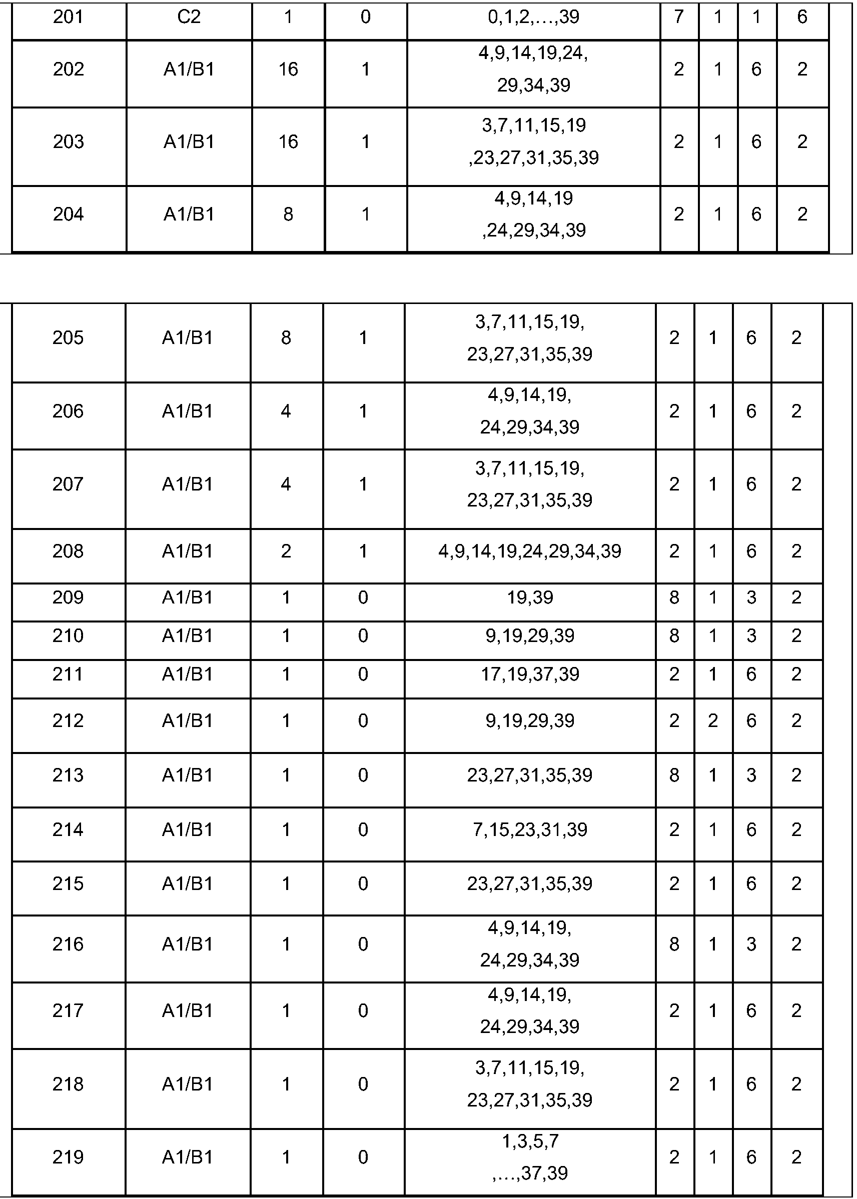

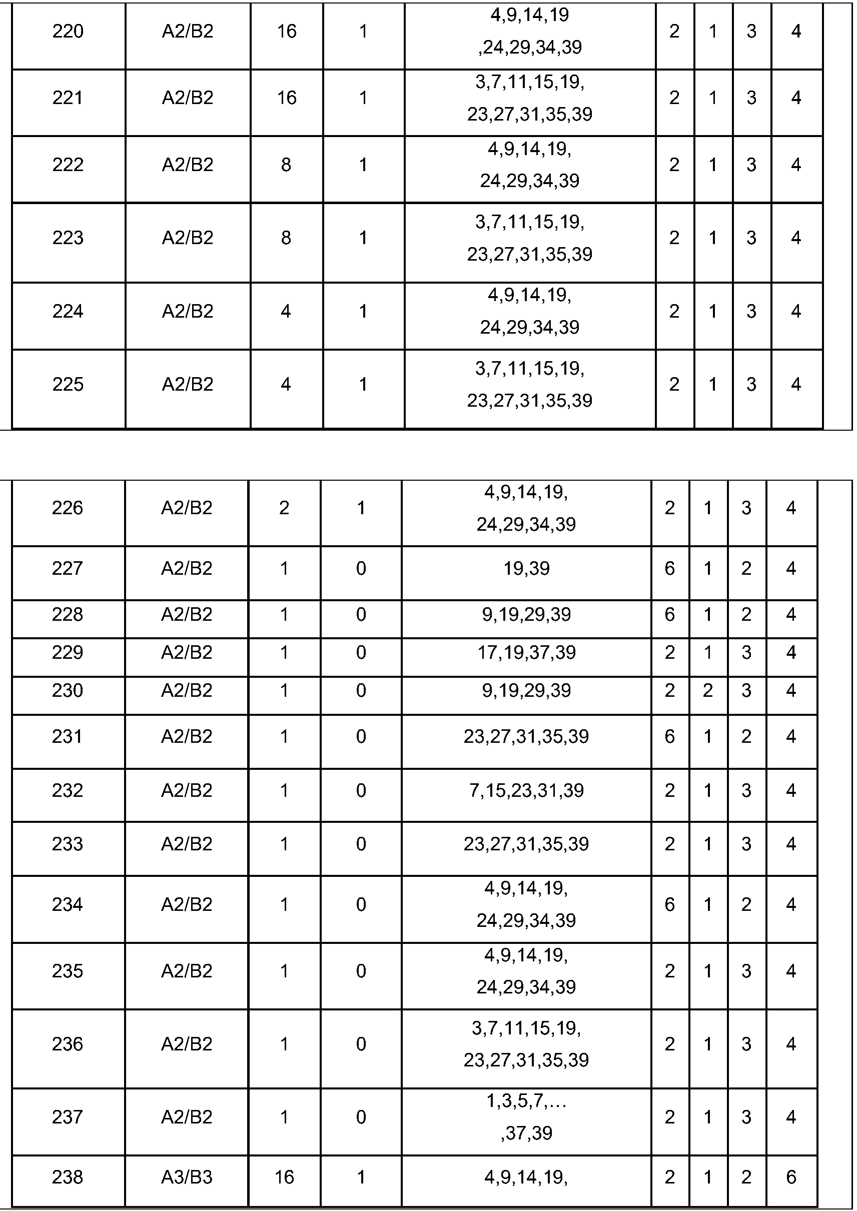

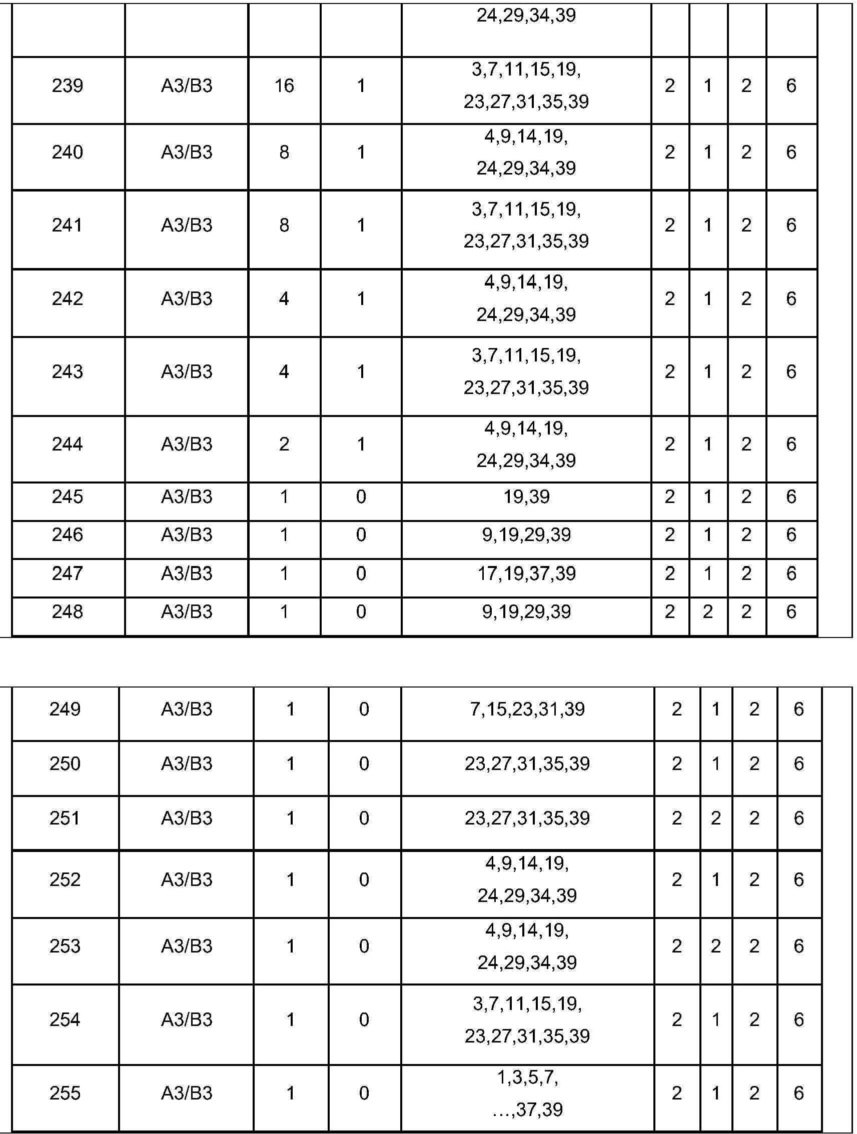

For example, in embodiments described below, the ROs may be ROs based on one of Tables 2 to 4 above.

The contents described above can be applied by being combined with methods according to the present disclosure described below, or can be supplemented to clarify technical features of methods described in the present disclosure.

In addition, methods related to configuration of a PRACH transmission occasion described below are related to uplink transmission and can be equally applied to an uplink signal transmission method in the NR system (licensed band) or U-Band system (unlicensed band) described above. The technical ideas described in the present disclosure can be modified or replaced to suit terms, expressions, structures, etc. defined in each system so that they can be implemented in the corresponding systems.

For example, the uplink transmission through the methods related to configuration of the PRACH transmission occasion described below can be performed in an L-cell (cell operating in the licensed band (L-band)) and/or a U-cell (cell operating in the unlicensed band (U-band)) defined in the NR system or the U-Band system.

NR supports multiple numerologies (or subcarrier spacing (SCS)) for supporting diverse 5G services. For example, if the SCS is 15 kHz, the NR supports a wide area in conventional cellular bands; if the SCS is 30 kHz/60 kHz, the NR supports a dense-urban, lower latency and wider carrier bandwidth; and if the SCS is 60 kHz or higher, the NR supports a bandwidth greater than 24.25 GHz to overcome phase noise.

An NR frequency band is defined as two types of frequency ranges FR1 and FR2. FR1 and FR2 may be configured as shown in Table 5 below. FR2 may mean millimeter wave (mmW).

**[Table 5]**

| Frequency Range Designation | Corresponding Frequency Range | Subcarrier Spacing |
|---|---|---|
| FR1 | 410 MHz - 7,125 MHz | 15, 30, 60 kHz |
| FR2 | 24,250 MHz - 52,600 MHz | 60, 120, 240 kHz |

Diverse RAN1 work items are defined to distinguish UE/BS operations based on RACH resources (e.g., PRACH preamble index, etc.). For example, UEs related to redcap, small data transmission, Msg.3 PUSCH repetition, etc. are defined to select a specific preamble index and request the base station whether to use a corresponding feature in a PRACH preamble transmission step. However, if an operation separately made for each work item is defined, UE/BS implementation complexity may increase.

Accordingly, in order to efficiently support UE/BS operations, that need to be distinguished, using RACH resources (e.g., PRACH preamble index, etc.) in RAN2 Rel-17 RACH partitioning work item, the concept of "Feature Combination" has been introduced. That is, the base station configures a specific PRACH resource (e.g., a preamble starting index and an indication of the total number) and configures/indicates the UE that one specific feature or combination of specific features is supported. The UE that intends to use/request a specific feature and/or combination of specific features may select one of preamble indexes of a region allocated to a specific feature and/or combination of specific features desired by the UE while performing the RACH procedure, and may transmit a PRACH preamble. RRC parameters for this operation may be "FeatureCombinationPreambles" and "FeatureCombination". Table 6 below shows "FeatureCombinationPreambles" and "FeatureCombination".

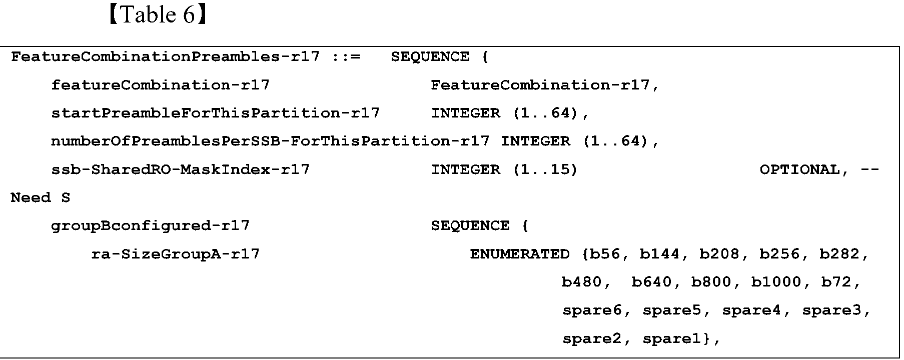

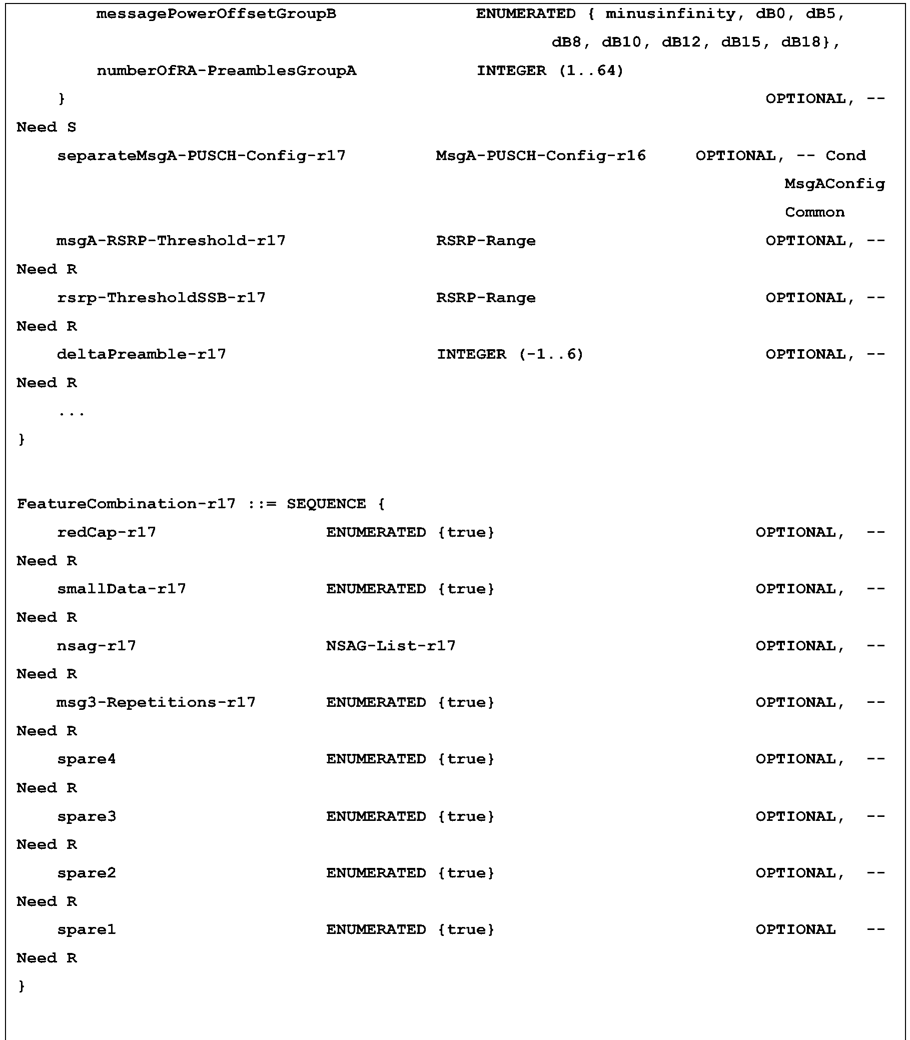

The plurality of parameters FeatureCombinationPreambles may be configured within RACH-ConfigCommon. Preamble index durations corresponding to each region (i.e., region/partition based on preamble(s) belonging to each of the plurality of parameters FeatureCombinationPreambles) need to be configured not to overlap each other. Further, feature and/or combination of features configured in each region need to be configured not to overlap each other. Parameter(s) for the random access procedure may be initialized/determined based on RACH resource(s) (e.g., preamble(s)) selected by the UE as above.

In the present disclosure, the 'RACH resource' (or 'PRACH resource') can be interpreted/replaced with a random access resource. For example, FeatureCombination (e.g., feature or combination of features) related to the RACH resources can be interpreted/replaced with FeatureCombination related to a set of random access resources.

In addition to RACH-ConfigCommon allocated to the existing BWP-UplinkCommon, the base station may additionally allocate RACH configuration via AdditionalRACH-Config-r17. The BWP-UplinkCommon may be configured based on SIB (e.g., SIB1). The RACH procedure may be performed by Rel-16 UE/Rel-17 UE as follows.

For Rel-16 UEs that cannot read AdditionalRACH-Config-r17, the corresponding UEs perform the RACH procedure based on RACH-ConfigCommon allocated to the existing BWP-UplinkCommon.

For UEs after Rel-17 that can read AdditionalRACH-Config-r17, the corresponding UEs check RACH-ConfigCommon allocated to the existing BWP-UplinkCommon and RACH-ConfigCommon allocated to AdditionalRACH-Config-r17 and perform the RACH procedure.

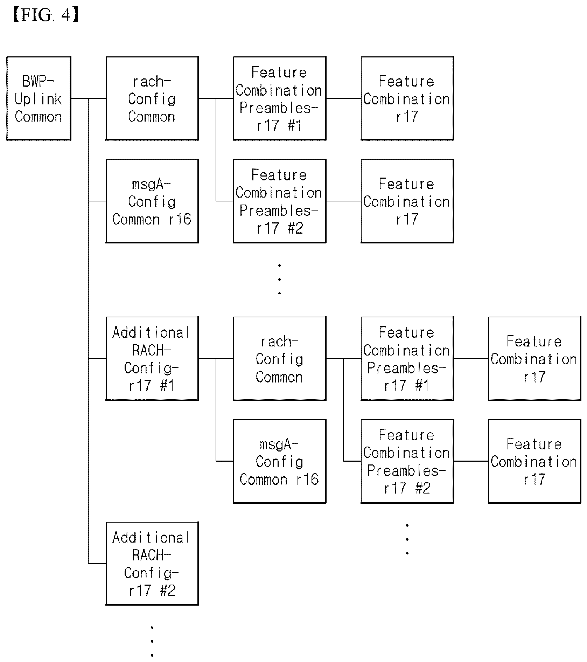

Further, the one or multiple FeatureCombinationPreambles described above may be configured to RACH-ConfigCommon allocated to the existing BWP-UplinkCommon. The one or multiple FeatureCombinationPreambles described above may also be configured to RACH-ConfigCommon allocated to AdditionalRACH-Config-r17. This is described below with reference to FIG. 4.

FIG. 4 illustrates RACH partitioning related RRC parameters. Specifically, FIG. 4 illustrates a connection relationship/hierarchy relationship of the RACH partitioning related RRC parameters.

With reference to FIG. 4, respective parameters are described in detail. For convenience of explanation, the RRC parameters (e.g., parameter BWP-UplinkCommon) are described as parameter names (e.g., BWP-UplinkCommon).

BWP-UplinkCommon includes i) rach-ConfigCommon, ii) msgA-ConfigCommon, and iii) one or more AdditionalRACH-Configs (#1, #2...).

Each AdditionalRACH-Config includes i) rach-ConfigCommon and ii) msgA-ConfigCommon.

Each rach-ConfigCommon includes one or more FeatureConbinationPreambles.

Each FeatureConbinationPreambles includes FeatureCombination.

Table 7 shows the above-described RRC parameters.

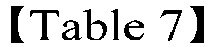

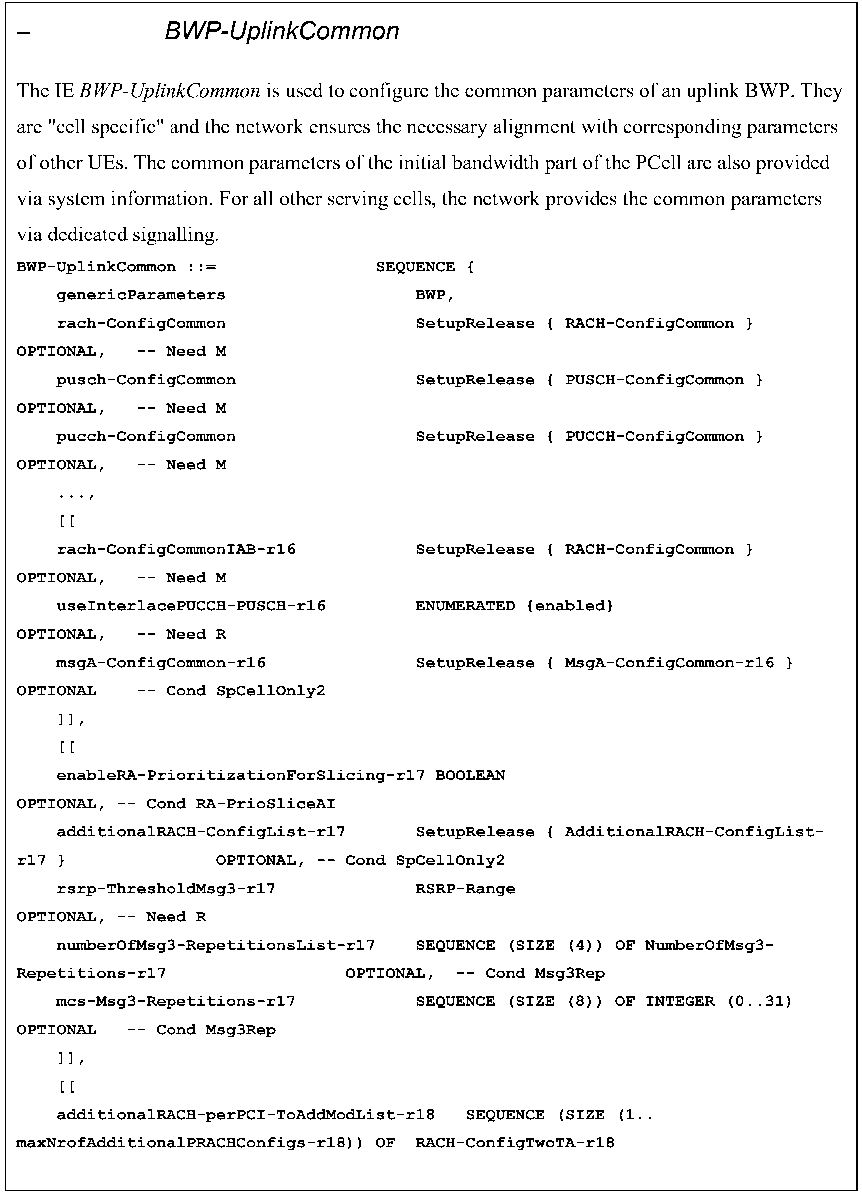

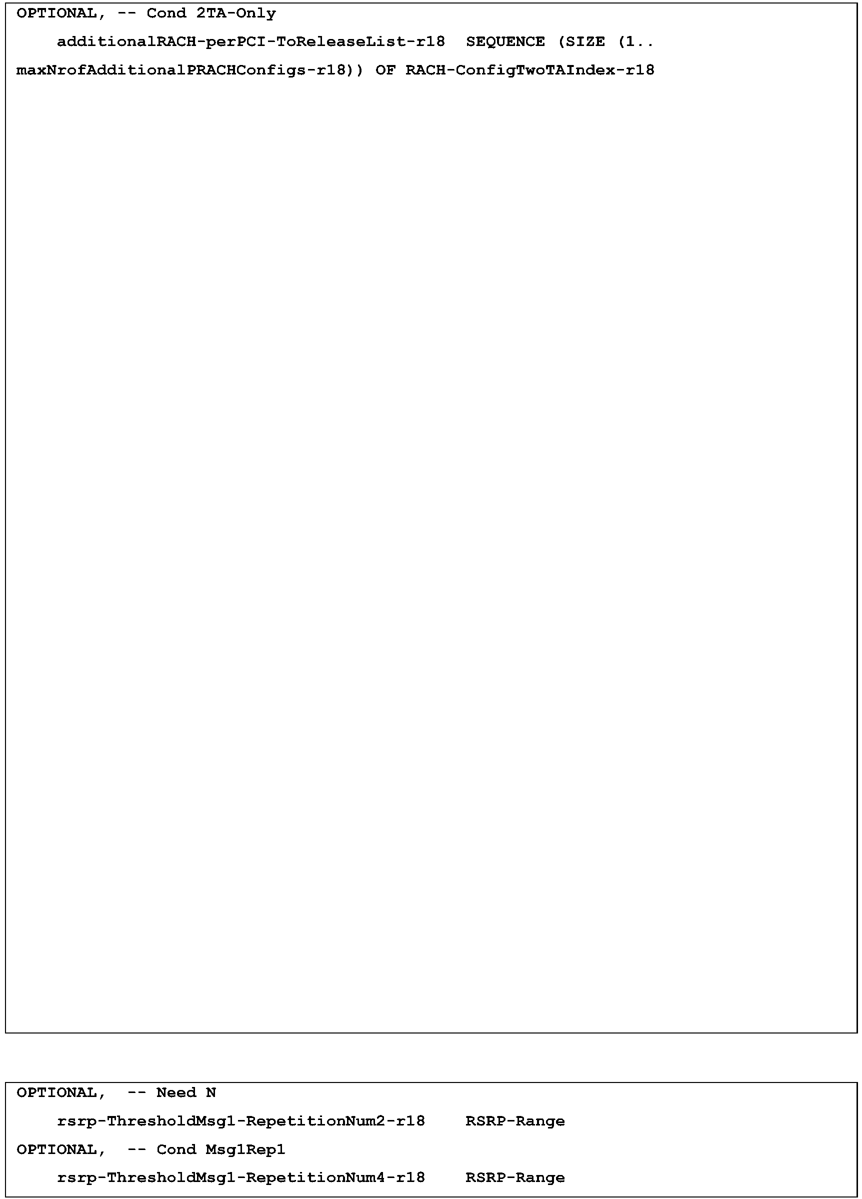

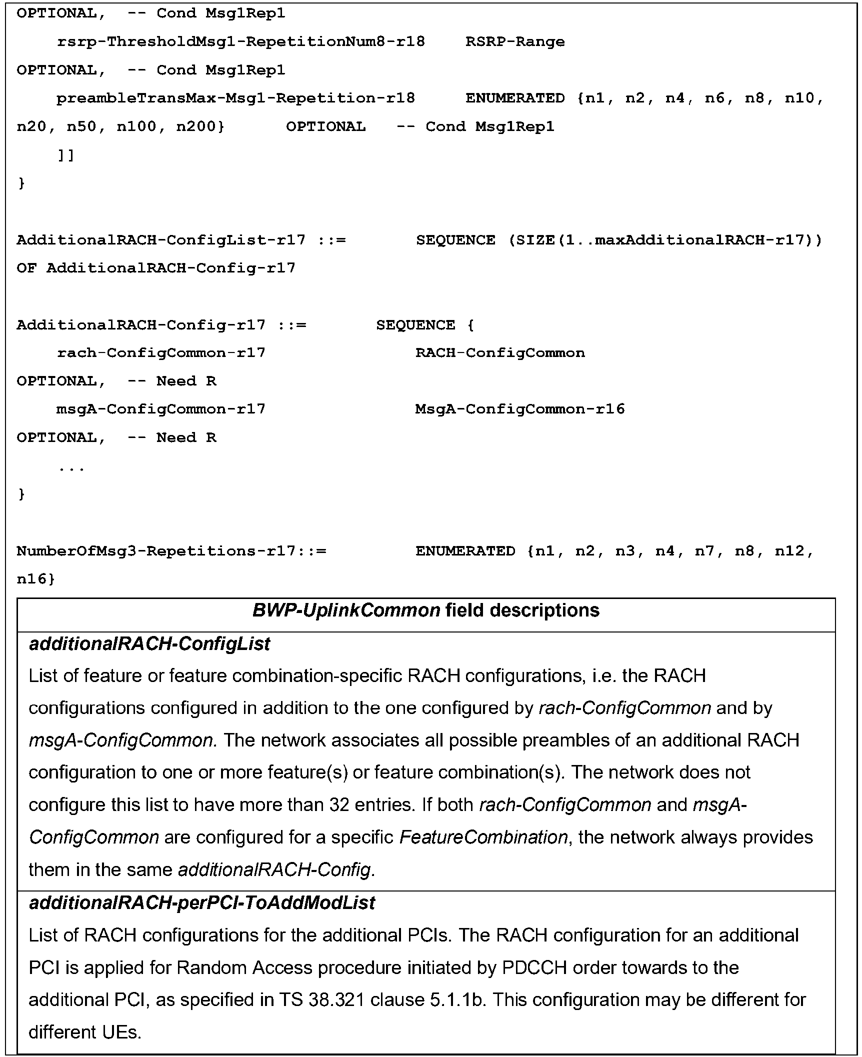

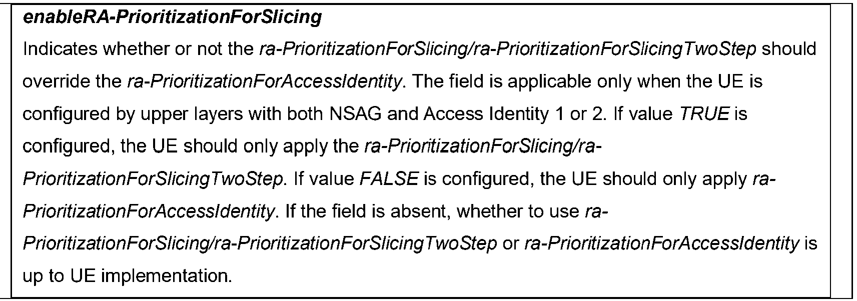

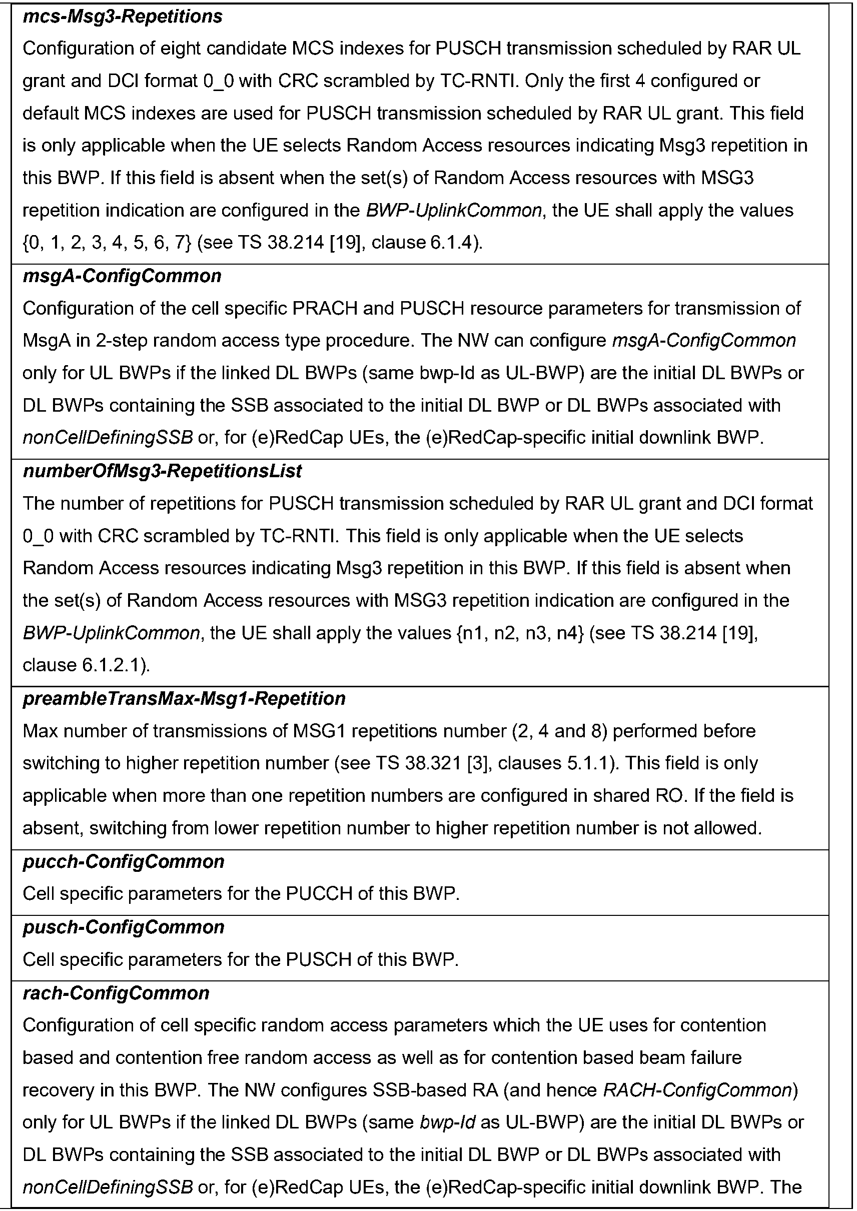

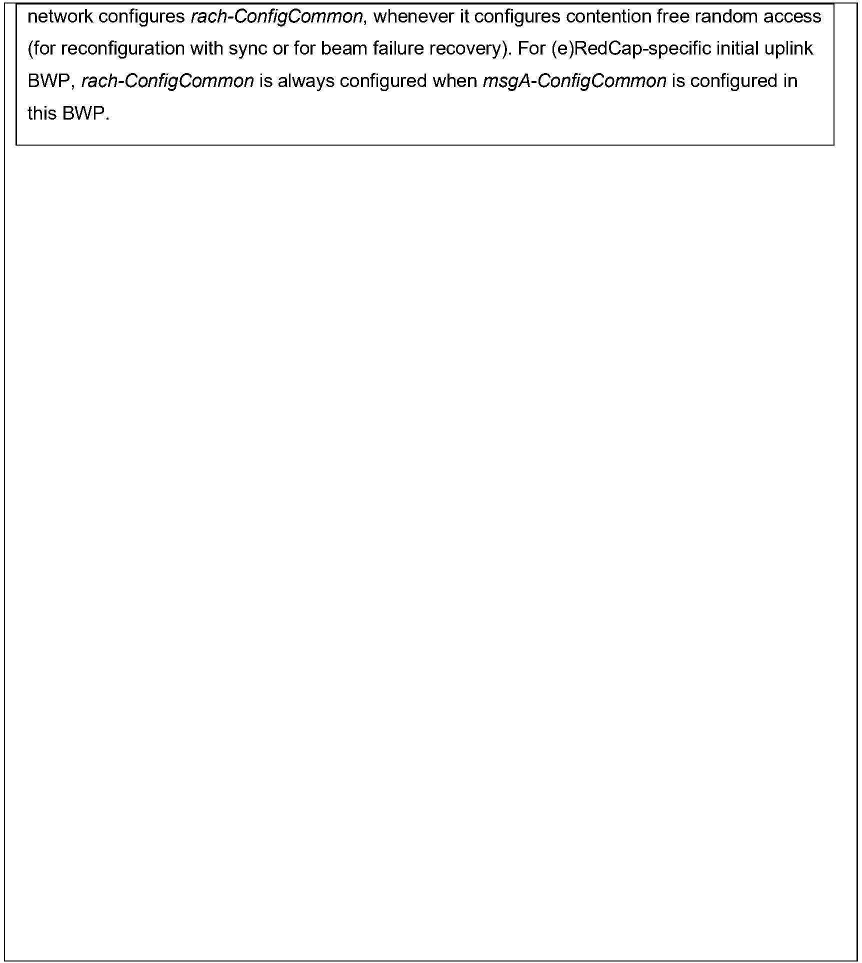

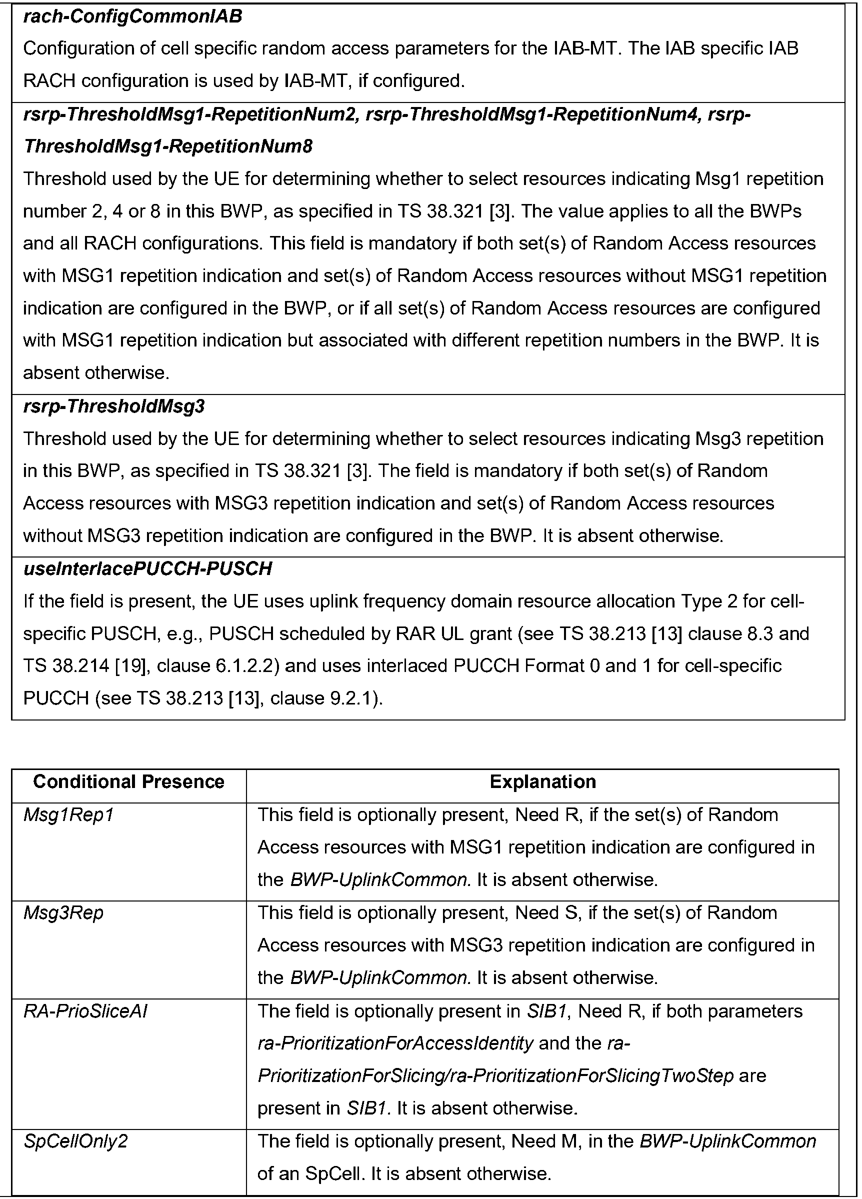

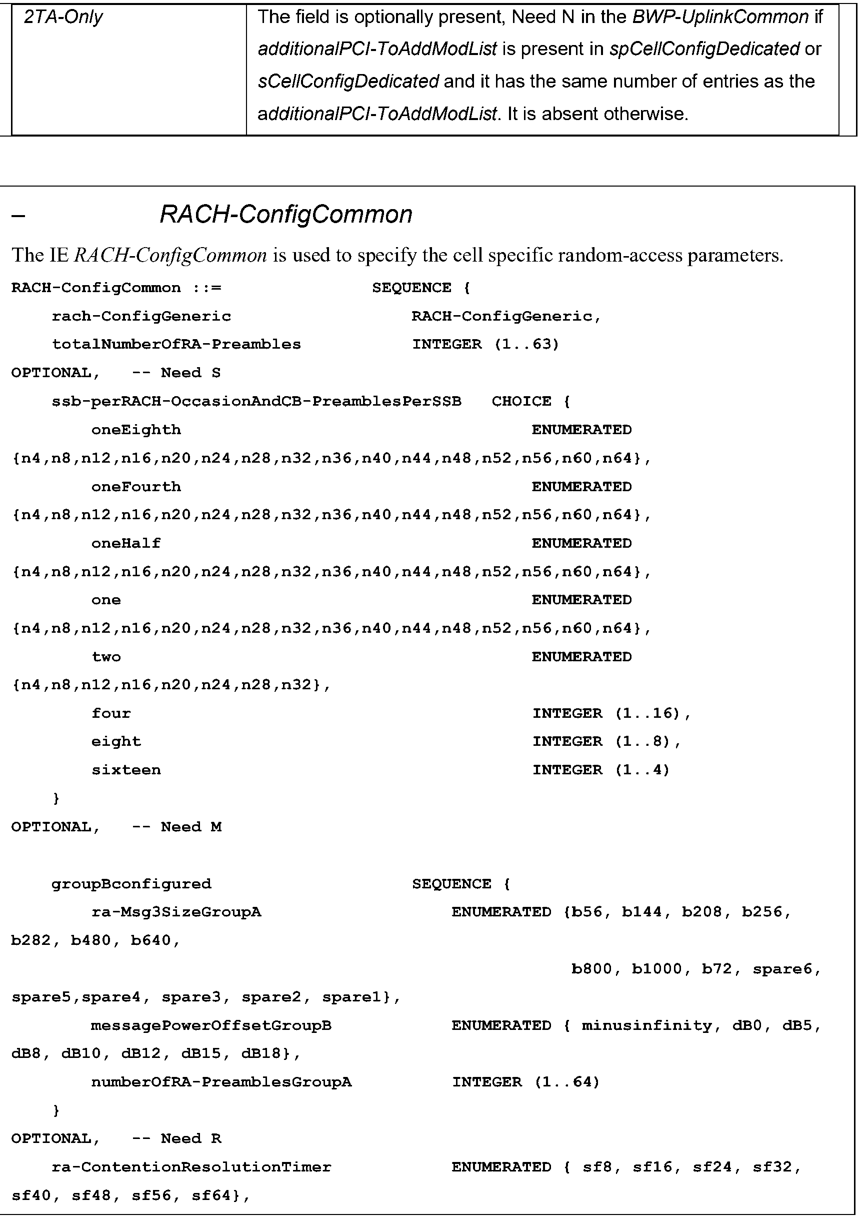

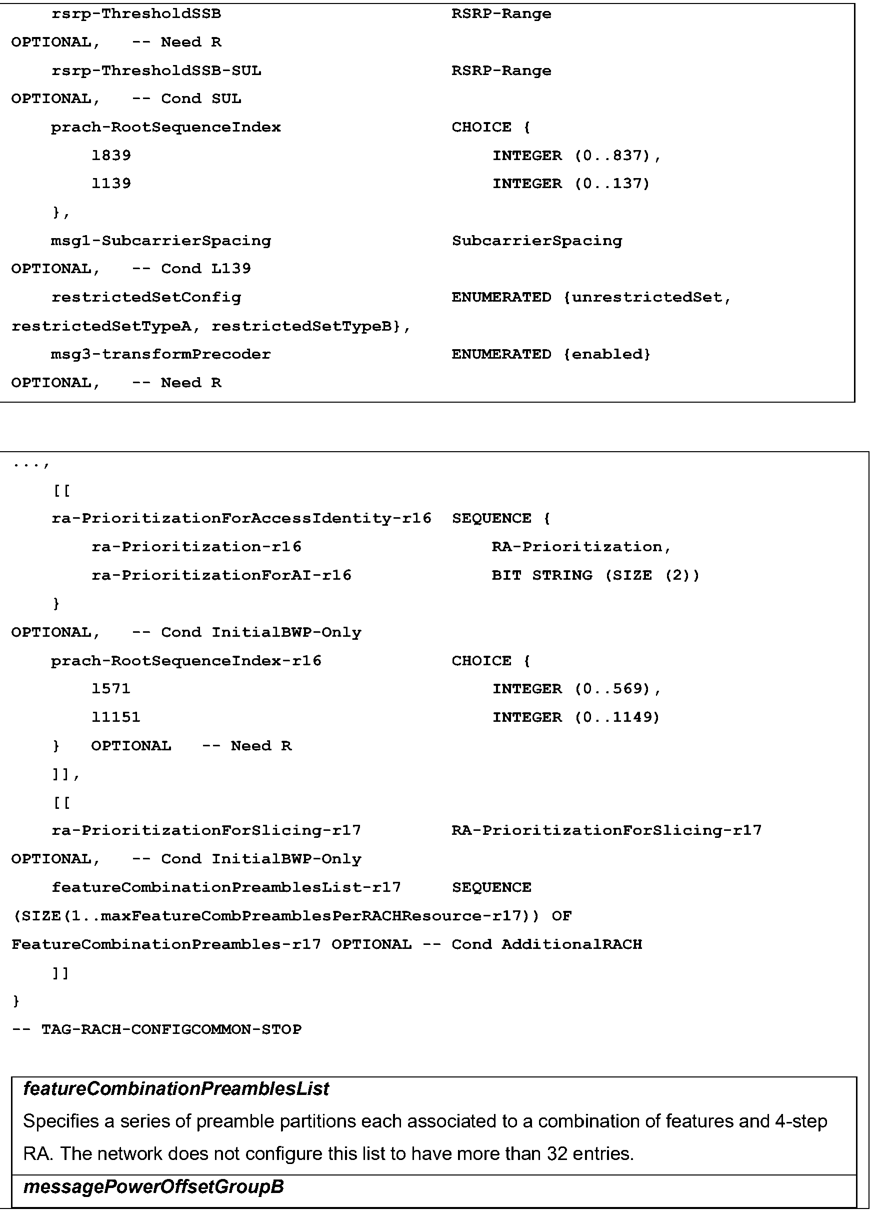

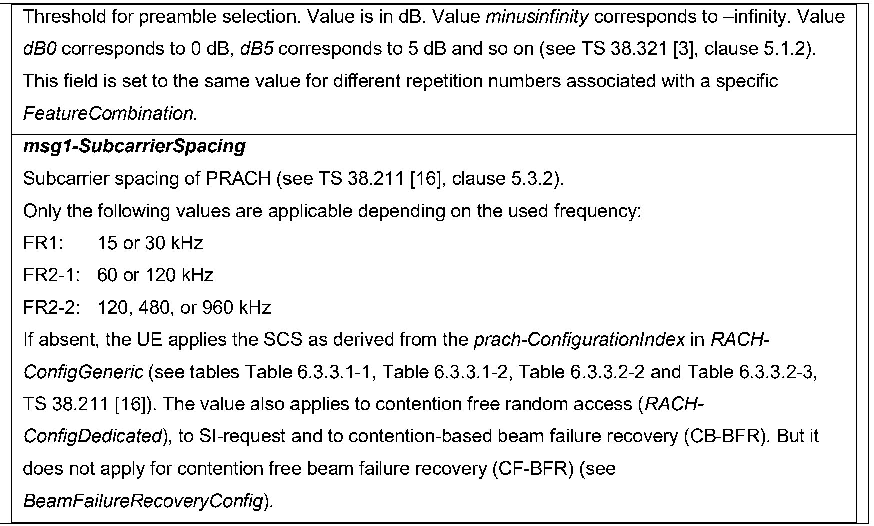

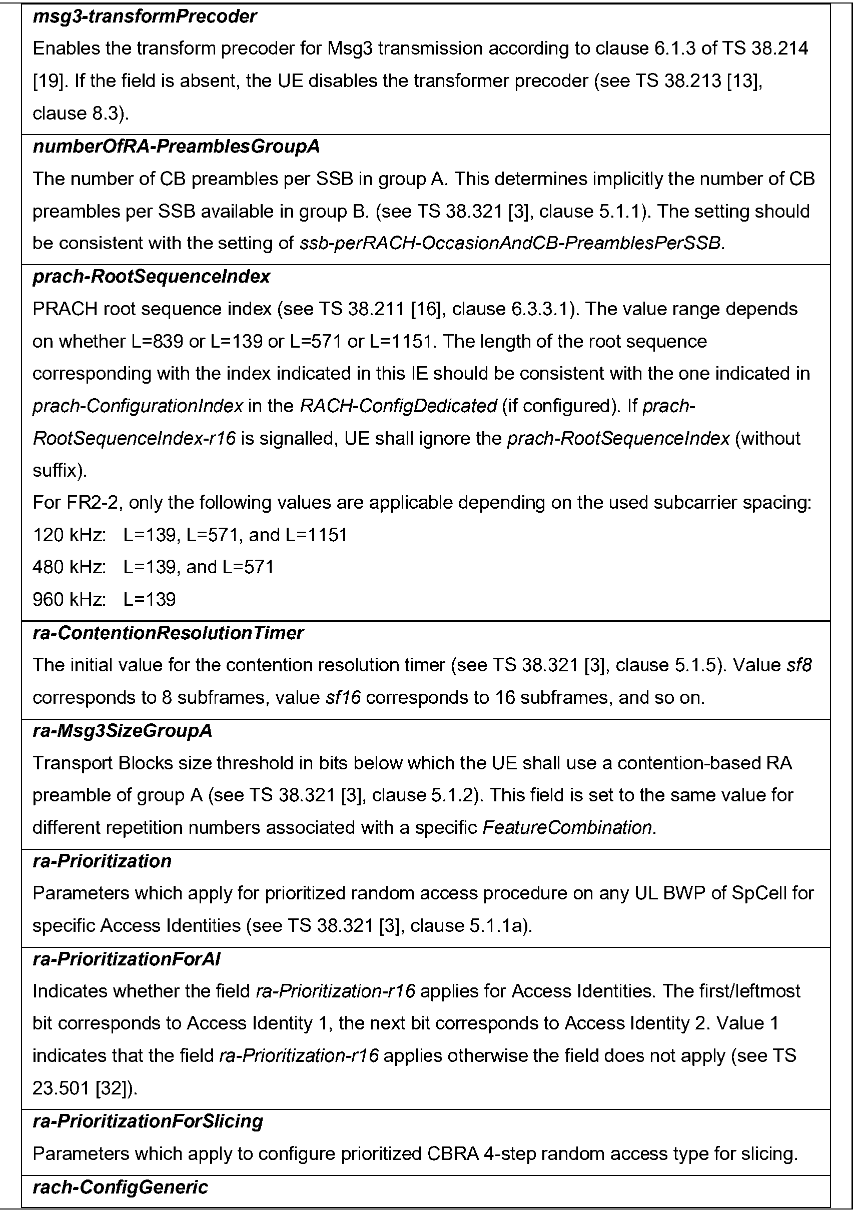

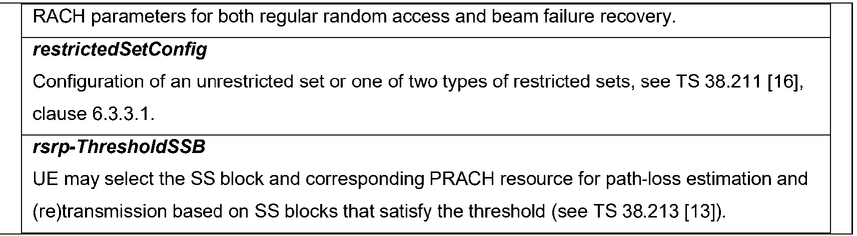

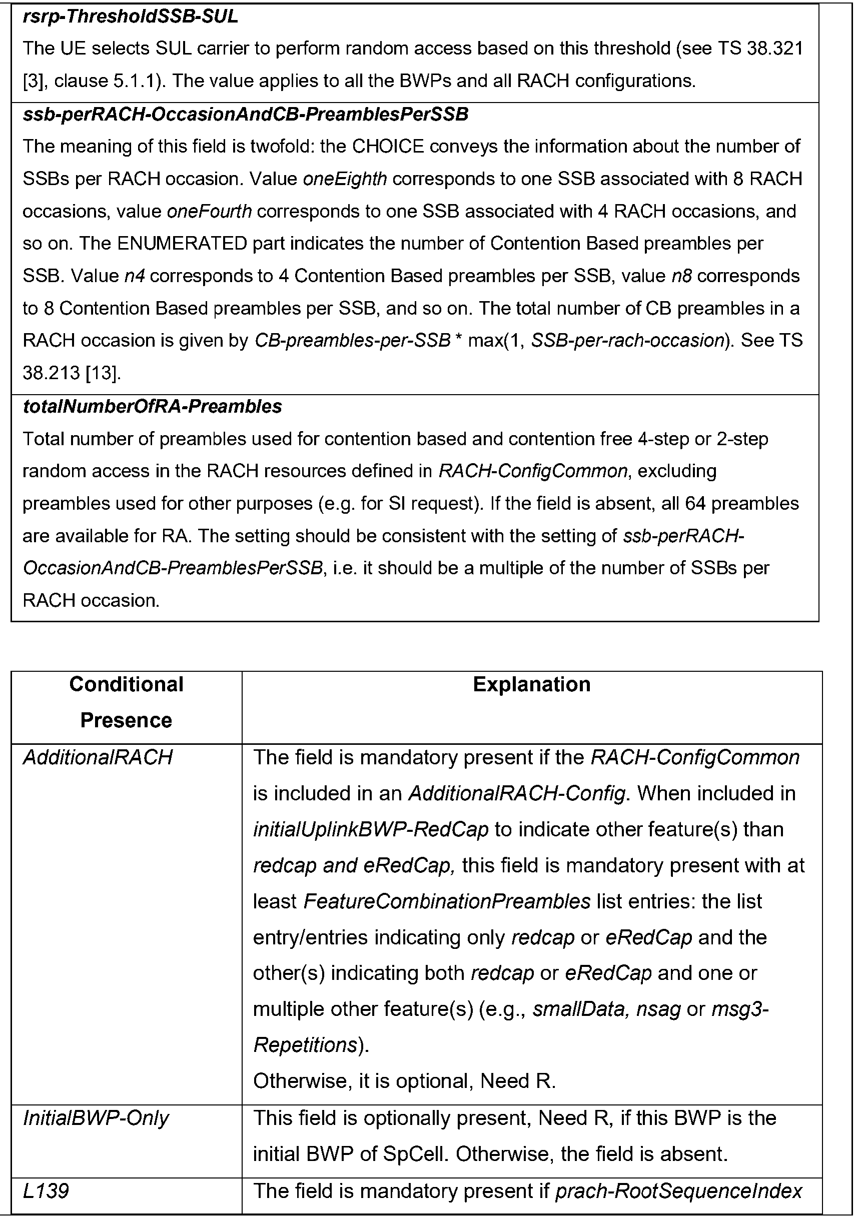

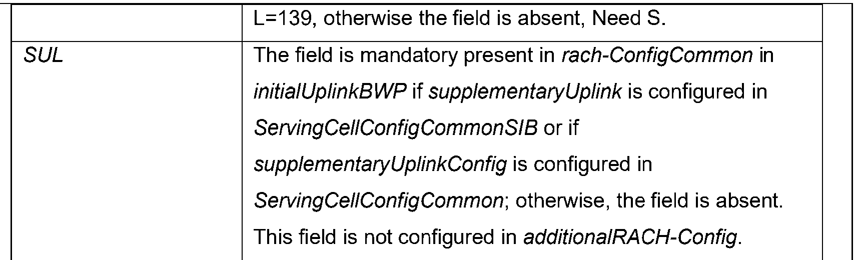

The introduction of PRACH preamble repetition transmission is being considered for UL coverage enhancement of the existing NR system. Therefore, in order to support PRACH repetition, it is necessary to define how to configure PRACH resources. Accordingly, when PRACH repetition is introduced in the NR system, and when features for PRACH repetition are introduced in RACH partitioning, the present disclosure proposes a starting slot design method for PRACH repetition and US/BS operations related to this.

Methods of designing a starting RACH slot and an RACH occasion for PRACH repetition are described in detail below. In the present disclosure, 'RO' may represent a physical random access channel (PRACH) occasion.

### Method 1

The following describes a method of configuring so that one starting RO using the same UL beam exists in a specific duration (an interval between starting RACH slots).

Two methods are being discussed as resource allocation and/or resource distinguishment methods for PRACH repetition. One method is a method for a base station to distinguish and configure RACH resources for single PRACH transmission and PRACH repetition transmission based on a preamble level within RACH configuration included in RACH-ConfigCommon allocated to BWP-UplinkCommon. The other method is a method for a base station to additionally allocate a new RACH configuration (e.g., using AdditionalRACH-Config-r17, etc.) and allocate an RO for PRACH repetition transmission independent of an existing RACH occasion (RO) (i.e., RO for single PRACH transmission).

However, if the base station allocates/configures RACH resources for PRACH repetition transmission using the above methods without any additional information, a UE may select an RO located at any time among all the ROs configured through the corresponding method and start the PRACH repetition. If the operation is allowed, a problem may arise from a BS reception perspective.

That is, if RACH repetition can start in the RO located at any time, the base station shall operate as follows. Specifically, the base station shall i) collect each of repeatedly transmitted RACH preambles for a plurality of ROs in a separate storage space based on the number of all cases that the UE can transmit based on the number of repetition transmissions and ii) perform a separate non-coherent (or coherent) detection as many as the number of storage spaces.

When the RACH repetition can start in the RO located at any time as above, decoding complexity of the base station increases.

Therefore, in order to solve this problem, the base station needs to configure/indicate a specific time (e.g., RACH slot, RO and/or time period), at which the UE can start the PRACH repetition transmission, via higher layer signaling.

A first method is a method of predefining a specific time at which a UE can start PRACH repetition transmission. The specific time may be configured/defined as a time at which it can be a starting RACH slot (or starting RO) and its interval. The starting RACH slot may be configured/defined based on a system frame number (SFN), a subframe (SF) index, a slot index, an association period, an association pattern period, etc. The starting RO may be configured/defined based on an RO index within the RACH slot and/or a starting OFDM symbol in which the RO starts.

For example, one starting RACH slot may be a (earliest assigned) RACH slot of a specific SFN (e.g., SFN0), and an interval between the starting RACH slots may be set to K SFNs (e.g., K is a positive integer of 1, 2, etc.).

For example, one starting RACH slot may be a (earliest assigned) RACH slot of a specific SF index. For example, one starting RACH slot may be directly configured/defined based on a specific SFN, an SF index, and a slot index.

In addition, a starting RO may be a valid RO using an earliest assigned UL beam selected by the UE within the starting RACH slot.

Characteristically, an interval between the starting RACH slots may be configured/defined based on at least one of i) PRACH configuration, ii) SSB-to-RO mapping, and/or iii) repetition number (N).

For example, considering the PRACH configuration, the SSB-to-RO mapping, and/or the repetition number, etc., it may be assumed that a specific UE requires at least two RACH slots in order to perform repetition transmission N times based on the same UL beam (same SS/PBCH block index). The interval between the starting RACH slots may be the number of SFNs of a size including two RACH slots. That is, if one RACH slot is included within one SFN, two SFNs may be the interval between the starting RACH slots.

Additionally, the interval between the starting RACH slots may be set based on units other than SFN units. Specifically, the interval between the starting RACH slots (i.e., a time period including ROs for PRACH repetition transmission) may be set/defined/determined based on an RO level, a slot level, a subframe level, an association period or an association pattern period, etc.

For example, each of RACH slots that are separated from a RACH slot of the specific SFN (e.g., SFN0) by an integer multiple of an interval between starting RACH slots determined by a predefined rule from the specific SFN may be defined as a starting RACH slot for repetition transmission.

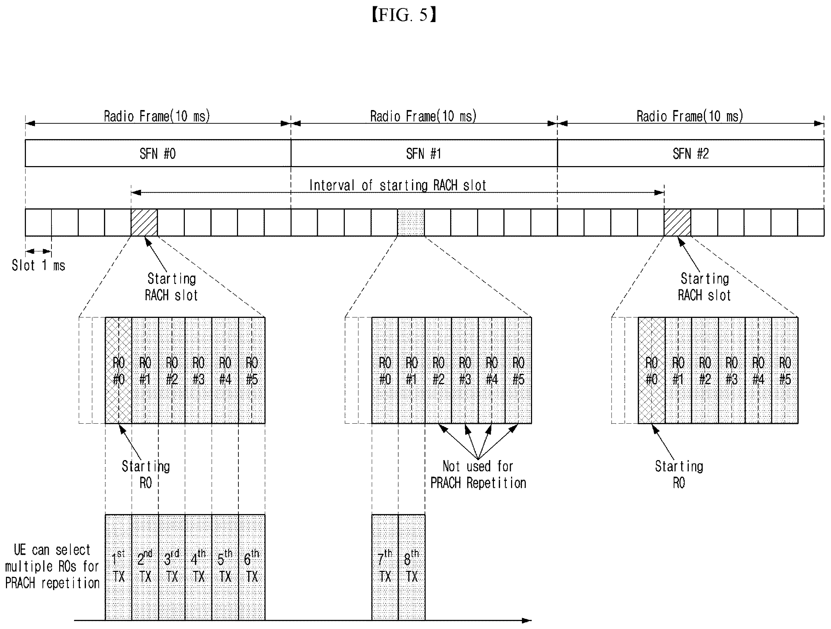

The proposed method can be expressed using a specific example as illustrated in FIG. 5.

FIG. 5 illustrates an example of ROs related to PRACH repetition according to an embodiment of the present disclosure. Specifically, FIG. 5 illustrates a starting RACH slot, a starting RO, and an interval between starting RACH slots when the same UL beam is mapped to each RO.

Referring to FIG. 5, the following configurations are assumed. A subcarrier spacing (SCS) is 15 kHz. A PRACH format is PRACH format A1 (occupying 2 OFDM symbols per one RO). Six ROs are defined in a specific RACH slot. All the ROs are related to the same UL beam (same SSB).

In this instance, if a base station configures/indicates a repetition number to 8, a UE requires at least two RACH slots in order to perform PRACH preamble repetition transmission 8 times. Since one RACH slot is defined per one SFN, an interval between starting RACH slots may be two SFNs. A first starting RACH slot may be assumed to be located in SFN0, and a starting RO may be a first RO that uses the same UL beam of the corresponding starting RACH slot. Afterwards, remaining four ROs before a next starting RACH slot may be configured/defined not to be used for PRACH repetition. If configured like this, the UE may operate as follows.

The UE may select a starting RO corresponding to the UL beam selected by the UE within the starting RACH slot as a starting RO for PRACH repetition and consecutively select a total of 8 ROs corresponding to the same UL beam including the starting RO on the time axis. The UE may perform the PRACH repetition based on the selected ROs.

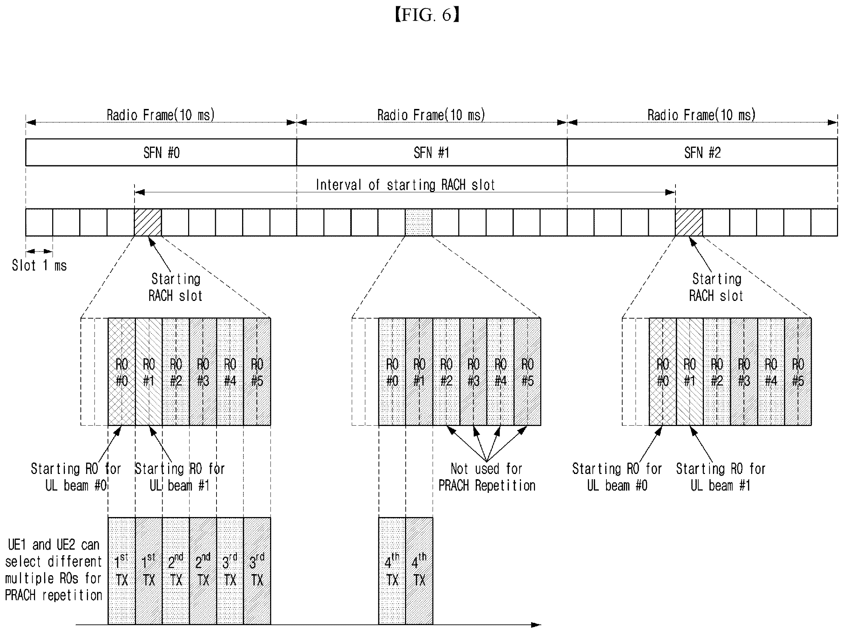

The proposed method can be expressed using another specific example as illustrated in FIG. 6.

FIG. 6 illustrates another example of ROs related to PRACH repetition according to an embodiment of the present disclosure. Specifically, FIG. 6 illustrates a starting RACH slot, a starting RO, and an interval between starting RACH slots when different UL beams are mapped to each RO.

Referring to FIG. 6, the following configurations are assumed. A subcarrier spacing (SCS) is 15 kHz. A PRACH format is PRACH format A1 (occupying 2 OFDM symbols per one RO). Six ROs are defined in a specific RACH slot. Two different UL beams are mapped for each RO.

In this instance, if a base station configures/indicates a repetition number to 4, a UE requires at least two RACH slots in order to perform PRACH preamble repetition transmission 4 times. Since one RACH slot is defined per SFN, an interval between starting RACH slots may be two SFNs. In this instance, a first starting RACH slot may be assumed to be located in SFN0, and a starting RO may be a first RO that uses the same UL beam of the corresponding starting RACH slot. Afterwards, remaining four ROs before a next starting RACH slot may be configured/defined not to be used for PRACH repetition. If configured like this, the UE may operate as follows.

The UE may select a starting RO corresponding to the UL beam selected by the UE within the starting RACH slot as a starting RO for PRACH repetition and consecutively select a total of 4 ROs corresponding to the same UL beam including the starting RO on the time axis. The UE may perform the PRACH repetition based on the selected ROs.

As a second method, a method to increase the degree of freedom in terms of resource utilization of a base station is described. A method for a base station to configure/define a specific time at which a UE can start PRACH repetition transmission is described in detail below.

The base station may configure/indicate a time at which it can be a starting RACH slot (or starting RO) and its interval via higher layer signaling (e.g., SIB, etc.). For example, a specific starting RACH slot may be configured/indicated based on an SFN, an SF index, a slot index, an association period, an association pattern period, etc. If the specific starting RACH slot is not configured/indicated from the base station, the UE may determine that it can be a (earliest assigned) starting RACH slot of a specific SFN (e.g., SFN0), and may perform a RACH procedure. Characteristically, the base station may also pre-configure/pre-indicate the starting RO as an RO index, an OFDM symbol index, etc. If the starting RO is not configured/indicated from the base station, the UE may understand an earliest assigned valid RO within the starting RACH slot as a starting RO and perform the RACH procedure.

The interval between the starting RACH slots may be configured/indicated based on an RO level, a slot level, a subframe level, an SFN level, an association period, an association pattern period, etc. If the interval between the starting RACH slots is not configured/indicated from the base station, the UE may understand that a pre-promised (or pre-defined) interval between the starting RACH slots is used, and perform the RACH procedure. For example, the pre-promised interval between the starting RACH slots may be similar to or equal to the first method proposed above.

As a result, each of RACH slots that are separated from a RACH slot of the specific SFN configured/indicated by the base station by an integer multiple of the interval between the starting RACH slots configured/indicated by the base station from the specific SFN may be defined as a starting RACH slot for repetition transmission.

Afterwards, the UE may operate as follows based on the set value.

The UE may select i) a starting RACH slot configured (e.g., earliest configured) after the decision to perform the RACH procedure using PRACH preamble repetition transmission and ii) a starting RO configured with an UL beam that the UE intends to use within the starting RACH slot. The UE may additionally select other ROs using the same UL beam as the RO (time consecutively) as many as the repetition number (allocated from the base station). The UE may perform the PRACH repetition transmission based on the selected ROs. That is, it may be defined that valid ROs from the starting RO are not discarded and are consecutively selected.

The base station can know that the UE starts the PRACH repetition transmission in a specific RACH slot and/or a specific RO. The base station may perform non-coherent (or coherent) detection by accumulating preambles received from ROs corresponding to the repetition number (configured by the base station), starting from the corresponding RO. Afterwards, the base station may transmit an RAR to the UE based on the detection result. The UE may transmit Msg.3 PUSCH based on the RAR.

In addition, there may occur a case in which the UE has additionally selected (time consecutively) valid ROs using the same UL beam that exist from the proposed starting RO to before a next starting RO, but only ROs less than the repetition number are selected (in some cases, there are many invalid ROs).

In such a case, the UE may operate as follows.

For example, the UE may define the corresponding starting RO to no longer be interpreted as a starting RO for PRACH repetition, and valid ROs that exist before the next starting RO may be configured/defined to no longer be used for PRACH repetition. For example, the valid ROs that exist before the next starting RO may be used for a single PRACH transmission. Afterwards, the UE may be configured to perform RACH repetition starting from the next starting RO among the ROs used for PRACH repetition.

For example, the UE may determine the corresponding starting RO as the starting RO for PRACH repetition. The UE may perform the PRACH repetition transmission based on the valid ROs from the starting RO. In other words, even if the number of valid ROs is less than the repetition number, the UE may be configured/defined to perform the PRACH repetition transmission and drop the remaining repetition transmission.

### Method 2

The following describes a method of configuring so that two or more starting ROs using the same UL beam exist in a specific duration (an interval between starting RACH slots).

According to the method 1, if the interval between the starting RACH slots is configured/defined, one starting RO using the same UL beam exists during a time duration corresponding to the interval. In this instance, a base station appropriately indicates the interval between the starting RACH slots (or pre-defines appropriately the interval), and thus the base station may configure so that remaining ROs after a UE selects ROs necessary for PRACH preamble repetition can be minimized.

However, if the interval between the starting RACH slots is not appropriate (e.g., if the interval is set/defined excessively long compared to SSB-to-RO mapping or the repetition number), the number of remaining ROs after the UE selects the ROs necessary for PRACH preamble repetition may be excessive. This may cause a delay in UEs supporting PRACH repetition when performing initial access. Therefore, the following methods can be considered to solve this.

First, if the starting RACH slot, the starting RO, the interval between the starting RACH slots, etc. are able to be configured/indicated similar to the methods proposed above, a starting RO that the UE can select for the PRACH preamble repetition may be the configured/indicated first starting RO. A valid RO immediately following valid ROs as many as the repetition number, including the first starting RO, may be a second starting RO. And, a valid RO immediately following valid ROs as many as the repetition number, including the second starting RO, may be a third starting RO. As above, among the following ROs, if the number of valid ROs as many as the repetition number is secured until immediately before a new staring RACH slot based on the interval between the above configured/defined starting RACH slots, an additional starting RO exists.

That is, in order for an RO (e.g., RO #X) immediately following the selection of the previous N ROs to become the starting RO, ROs as many as the repetition number shall be secured when valid ROs including the RO (e.g., RO #X) are selected consecutively. If a smaller number of ROs than the repetition number are secured, the RO (e.g., RO #X) cannot be the starting RO, and remaining ROs until immediately before a new starting RACH slot, including the RO (e.g., RO #X), can no longer be used for repetition purpose (e.g., used for single PRACH transmission, etc.).

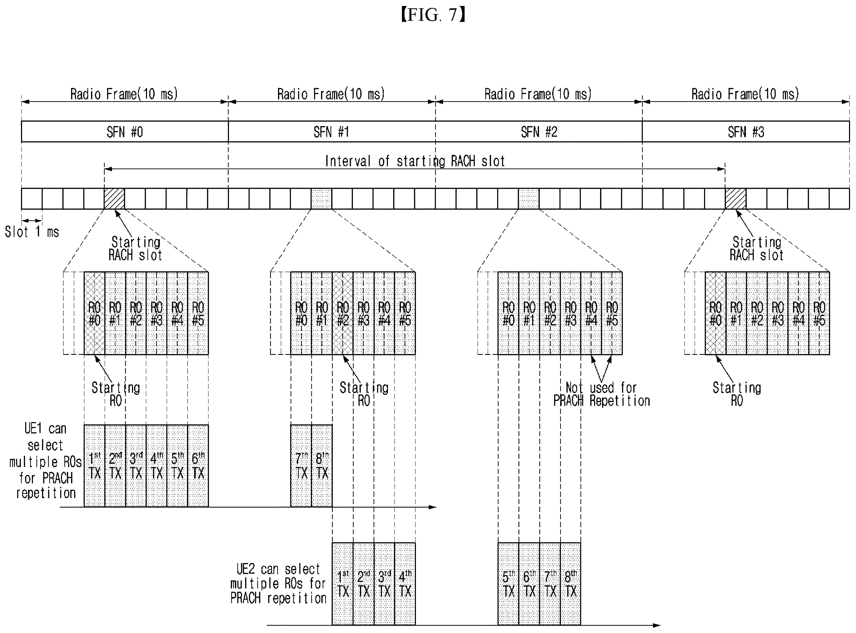

Alternatively, even if a smaller number of ROs than the repetition number are secured, the RO (e.g., RO #X) is configured/defined/interpreted as the starting RO, and the UE performs the PRACH repetition transmission. The UE may be configured/defined to discard (i.e., drop) a portion less than the repetition number without transmitting. This can be expressed as illustrated in FIG. 7.

FIG. 7 illustrates another example of ROs related to PRACH repetition according to an embodiment of the present disclosure. Specifically, FIG. 7 illustrates a starting RACH slot, a starting RO, and an interval between starting RACH slots when the same UL beam is mapped to each RO.

Referring to FIG. 7, the following configurations are assumed. A subcarrier spacing (SCS) is 15 kHz. A PRACH format is PRACH format A1 (occupying 2 OFDM symbols per one RO). Six ROs are defined in a specific RACH slot. All the ROs are related to the same UL beam (same SSB).

In this instance, if a base station configures/indicates a repetition number to 8 and configures the interval between the starting RACH slots to three SFNs, a total of two starting ROs may be defined. That is, a first starting RACH slot may be assumed to be located in SFN0. A first starting RO may be a first RO that uses the same UL beam of the corresponding starting RACH slot, and a second starting RO may be an RO that exists immediately after eight ROs are selected for eight repetition transmissions. Afterwards, remaining two ROs before a next starting RACH slot may be configured/defined not to be used for PRACH repetition. If configured like this, UE1 may select a first starting RO corresponding to the UL beam selected by the UE within the starting RACH slot as a starting RO for PRACH repetition, and consecutively select a total of 8 ROs corresponding to the same UL beam including the first starting RO on the time axis to perform the PRACH repetition. UE2 may select a second starting RO (RO#2 of SFN#1) as a starting RO for PRACH repetition and consecutively select a total of 8 ROs corresponding to the same UL beam including the second starting RO on the time axis to perform the PRACH repetition.

### Method 3

The following describes a method for a base station to configure/indicate the number of starting ROs (or the number of RO groups) using the same UL beam in a specific duration (an interval between starting RACH slots) via higher layer signaling.

Method 3 is a method that can be flexibly configured in terms of BS allocation while solving the technical problems sought to be solved through the method 1/method 2. This is described in detail below.

The base station may configure/indicate a starting RACH slot (and/or starting RO) "S", the number of RO groups "K" for PRACH repetition transmission within a corresponding interval, an interval "P" between starting RACH slots (or a period in which K RO groups are configured), etc. via higher layer signaling.

In this instance, one RO group may be configured/defined to include ROs as many as repetition number "N" for PRACH repetition transmission. The existence of "K" RO groups means that N ROs appear a total of K times and a total of N*K ROs can be used for PRACH repetition transmission.

If a UE receives the above configuration/indication, ROs as many as the repetition number may be selected from a specific starting RO corresponding to an UL beam selected by the UE. The UE may perform the PRACH repetition transmission based on the selected ROs. And, the UE may interpret that the remaining ROs not included in the K RO groups are not used for repetition transmission and may perform the RACH procedure.

For example, if the repetition number N is 8, S may be set to SFN#0, K may be set to 1, and P may be set to two SFNs. These settings are the same as the example of the method 1 illustrated in FIG. 5.

For another example, if the repetition number N is 8, S may be set to SFN#0, K may be set to 2, and P may be set to three SFNs. These settings are the same as the example of the method 2 illustrated in FIG. 7.

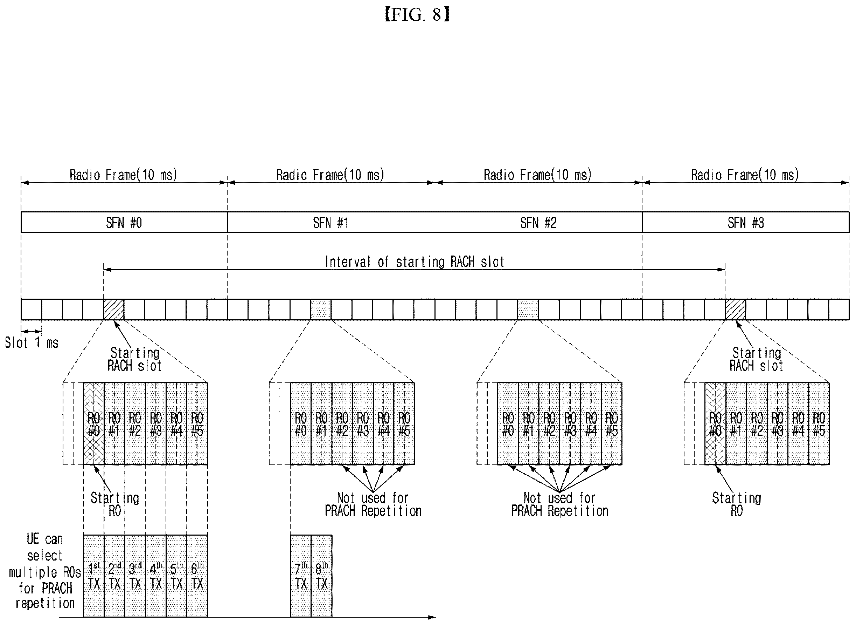

If S is set to SFN#0, K is set to 1, and P is set to three SFNs when the repetition number N is 8, this may be expressed as illustrated in FIG. 8.

FIG. 8 illustrates another example of ROs related to PRACH repetition according to an embodiment of the present disclosure. Specifically, FIG. 8 illustrates a starting RACH slot, a starting RO, and an interval between starting RACH slots when the same UL beam is mapped to each RO.

That is, referring to FIG. 8, since only one RO group is configured/indicated to exist during three SFNs, remaining ten ROs excluding eight ROs to be used for PRACH repetition may be configured not to be used for repetition transmission.

In the present disclosure, the fact that the UE performs the PRACH repetition using "ROs using the same UL beam" may mean that the UE performs the PRACH repetition using "ROs associated/linked to the same SSB index."

Further, the fact that the UE performs the PRACH repetition using "ROs of an UL beam selected by the UE" may mean that the UE performs the PRACH repetition using "ROs associated/linked to an SSB index selected by the UE."

The above-described embodiments mainly assume a situation in which the UE selects ROs associated/linked to the same SSB index when performing the PRACH repetition transmission and does not change an UL Tx beam. However, the scope of application of the above-described embodiments is not limited to the situation. Specifically, even if the UE selects ROs associated/linked to the same SSB index and repeatedly transmits PRACH while changing an UL Tx beam, an operation based on the above-described embodiments may be configured/applied.

The present disclosure described the proposed methods assuming that one repetition number is used for a specific RACH resource. If RACH resources (e.g., preamble index, etc.) are shared per repetition number, the base station cannot actually know whether a specific preamble index is sent to repetition number N1 or repetition number N2. Hence, it is mandatory to send an RAR grant at least twice (once at the end of N1 and once at the end of N2). Therefore, it is basically assumed that one repetition number is used for the specific RACH resource.

On the other hand, if configured like this, a problem arises that the base station shall predefine many UL resources for RACH resources. Eventually, it may be considered that a plurality of repetition numbers are allocated/configured to the specific RACH resource. This has an advantage that the base station does not have to predefine too many resources for RACH resources. Therefore, if the plurality of repetition numbers are used/configured for the specific RACH resource, starting RACH slots or starting RACH occasions, or its interval, its period, etc. may be similarly applied based on the proposed methods. For example, the plurality of repetition numbers may include two or more of 2, 4 and/or 8.

Characteristically, even if the plurality of repetition numbers are allocated to the specific RACH resource, the proposed method of configuring the starting RACH slot (or starting RACH occasion) may be commonly applied/defined. However, a method of configuring an interval between the starting RACH slots (or a period in which the starting RACH slot is defined), etc. may be differently applied/defined per repetition number, or may be commonly configured/applied regardless of the repetition number.

According to an embodiment, it may be assumed that the interval between the starting RACH slots (or the period in which the starting RACH slot is defined) is differently set per repetition number. Similar to the contents proposed above, it may be defined so that the interval between the starting RACH slots (or the period in which the starting RACH slot is defined) is calculated or indicated/set for each repetition number and is used.

According to an embodiment, it may be assumed that the interval between the starting RACH slots (or the period in which the starting RACH slot is defined) is set/defined as one value regardless of the repetition number. For example, the value may be set/defined based on the largest repetition number among the repetition numbers used for the specific RACH resource. In other words, the interval between the starting RACH slots (i.e., a time period in which ROs based on the repetition number are determined) may be set/defined so that at least one set including ROs based on the corresponding repetition number is determined for the number of all the settings related to the repetition number.

The base station may differently configure/indicate the interval between the starting RACH slots (or the period in which the starting RACH slot is defined) per repetition number. The UE may determine the repetition number according to a predefined rule and then perform PRACH repetition transmission using a location of the starting RACH slot (and/or the starting RACH occasion) suitable for the determined repetition number and the interval between the starting RACH slots (or the period in which the starting RACH slot is defined). Afterwards, the base station can know in advance in which RO the actual transmission of UEs performing the PRACH repetition transmission ends, using a specific repetition number. The base station may construct an appropriate RAR based on preambles transmitted until the end time for each repetition number and transmit the RAR to the UEs.

If the base station configures/indicates "N" as the repetition number value for PRACH repetition based on the proposed methods, the following two cases may be determined to make RO groups and may operate from a BS perspective.
Case 1) RO group consisting of N valid ROs
   → The BS/UE can select for PRACH repetition transmission/reception
Case 2) RO group consisting of less than N valid ROs
   → The BS/UE cannot select for PRACH repetition transmission/reception

Characteristically, the Case 1 relates to the (valid) RO group that can be selected for the PRACH repetition reception from the BS perspective, but the Case 1 may be divided into the following two cases and may operate from a UE perspective.
Case 1-1) ROs in which all N (system perspective) valid ROs are allowed to be transmitted from the UE perspective
   → The UE can select for PRACH repetition transmission
Case 1-2) ROs in which some ROs (e.g., M ROs) of N (system perspective) valid ROs are not allowed to be transmitted from the UE perspective (e.g., ROs in which transmission is not allowed from the UE perspective due to dual connectivity (DC) and/or a collision with other signals/channels within a single carrier)
   → The UE cannot select for PRACH repetition transmission (i.e., the UE drops ROs belonging to the corresponding RO group). The UE can select an RO group consisting of N ROs for which transmission is allowed from the UE perspective among subsequent existing RO groups and can perform PRACH repetition.
   → Alternatively, the UE can select for PRACH repetition transmission, but the UE can be configured to perform PRACH repetition using (N-M) ROs and not to send M PRACH preambles.
   → Alternatively, the UE selects (N-M) ROs from the corresponding RO group and selects remaining M ROs from another RO group subsequently made (as the UE postpones the selection of ROs) for PRACH repetition transmission, and then the UE can perform PRACH repetition using a total of N ROs.

Additionally, if RACH resources for different repetition transmission numbers are allocated with a separate preamble on shared RO method (i.e., a method using R17 feature combination), RACH resources that can be applied to a plurality of different repetition numbers within a specific RACH configuration may be classified and configured based on a preamble level. In this case, a starting RO and/or one starting RO period may be configured/defined regardless of the repetition number.

For example, the base station may configure one starting RO and/or one starting RO period via higher layer signaling (e.g., SIB1, etc.) regardless of the repetition number. For example, one starting RO and/or one starting RO period may be defined regardless of the repetition number.

In this instance, the starting RO and/or the starting RO period need to be configured/determined/defined so that ROs associated with the same SSB index as many as the largest repetition number can be secured.

For example, a starting RO offset value may be set or pre-defined for different repetition numbers (e.g., for repetition numbers other than the largest repetition number). As a specific example, the base station may configure/indicate the starting RO offset value to the UE via higher layer signaling (e.g., SIB1, etc.). This has an advantage in that, compared to when all of a different number of repetition transmissions start in a pre-configured/pre-indicated starting RO, if a starting RO offset is applied per repetition number, ROs starting repetition transmission are diffused and interference between preamble indexes in the BS reception decreases. Hence, reception performance can be improved. Characteristically, the stating RO offset value may be set/indicated as an exponent of 2 or a multiple of 2 in RO units (or slot units or RACH slot units or subframe units or SFN units, etc.). If the starting RO offset is set, a specific preamble index duration at a pre-configured starting RO location may not be used for repetition transmission and may remain. Because this area can also be known in advance by the base station, this area can be used for configuration for another UE (e.g., configuration such as CFRA for another UE).

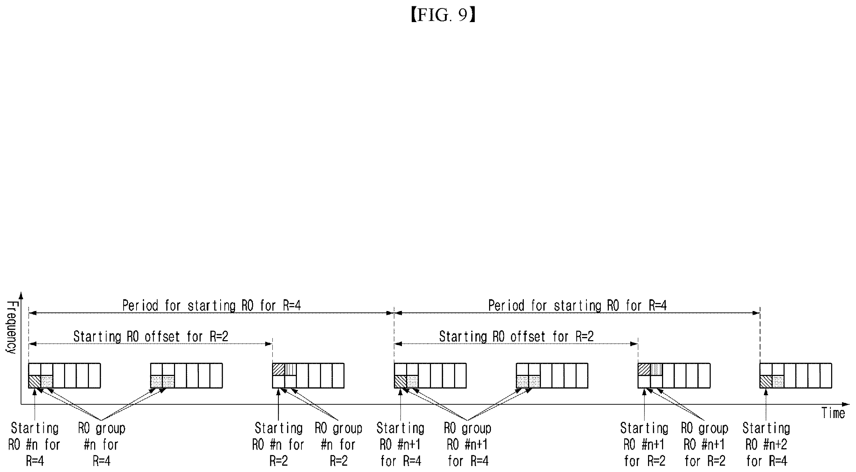

For example, an RO group for the largest repetition number may be configured to start from a pre-configured/pre-indicated/pre-defined starting RO. An RO group for a relatively small repetition number may be configured to start from an RO at a point in time applying an additionally configured/indicated/defined starting RO offset value from a pre-configured/pre-indicated/pre-defined starting RO. This can be expressed as illustrated in FIG. 9.

FIG. 9 illustrates an example of ROs for a plurality of repetition numbers according to an embodiment of the present disclosure. Specifically, FIG. 9 illustrates a starting RO, a starting RO period, a staring RO offset, etc. for a plurality of repetition numbers when R=2 and R=4 in a separated preamble in shared RO method.

That is, referring to FIG. 9, if R=4, it may follow a starting RO and a starting RO period (configured/indicated via higher layer signaling or pre-defined). If R=2, it follows the staring RO period, etc., but the staring RO may be configured to be spaced apart from the starting RO by the staring RO offset.

However, if the repetition number is relatively small when the above method is applied, although there are a sufficient number of ROs capable of constructing an RO group, a problem arises in that a repetition transmission occasion is not obtained. Therefore, as a method to solve this problem, it may be defined so that only one RO group is configured/selected during one starting RO period for PRACH repetition transmission with the largest repetition number. It may be defined so that two or more RO groups are configured/selected during one starting RO period for PRACH repetition transmission with the smaller repetition number. For example, a base station may configure/indicate how many RO groups can be configured within a specific period (e.g., starting RO period), per repetition via higher layer signaling.

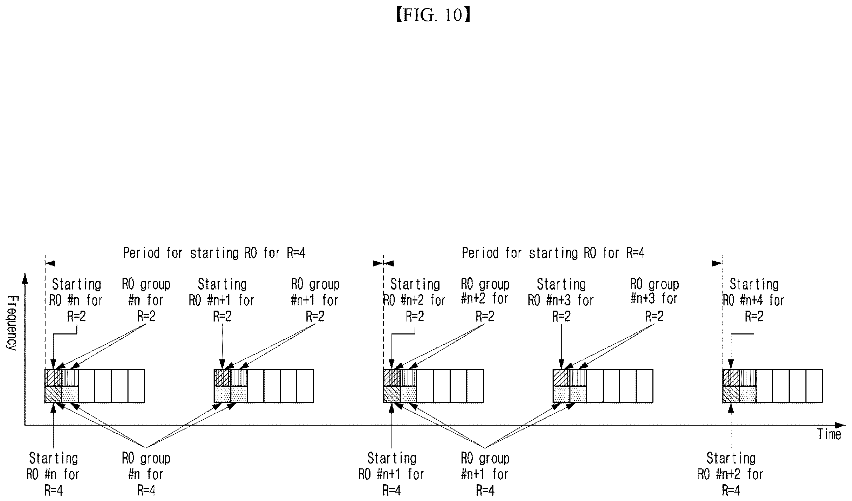

If the number of RO groups indicated by the base station is less than the total number of RO groups that can exist within the specific period, the UE and the base station need to know in advance where the RO groups should be located. For example, in this situation, the RO groups may be configured to be defined as the number of RO groups indicated by the base station, starting from a start point of the specific period. For another example, the base station may configure/indicate a location at which the RO groups start to the UE via higher layer signaling based on a slot (or subframe, RO, etc.) level. In this instance, the RO groups need to be configured not to overlap each other. This can be expressed as illustrated in FIG. 10.

FIG. 10 illustrates another example of ROs for a plurality of repetition numbers according to an embodiment of the present disclosure. Specifically, FIG. 10 illustrates a starting RO, a starting RO period, the number of RO groups in a single period, etc. for a plurality of repetition numbers when R=2 and R=4 in a separated preamble in shared RO method.

That is, referring to FIG. 10, if R=4, one RO group is configured/selected within one staring RO period. If R=2, two RO groups are configured/selected within one staring RO period.

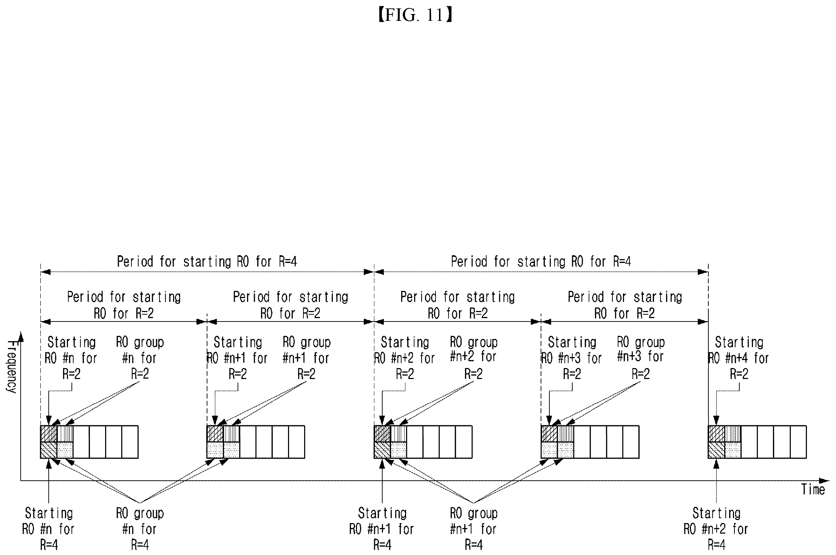

As another method, a base station may configure a different starting RO and/or a different starting RO period for each of different repetition numbers. If configured like this, because the base station can configure a suitable starting RO period for each repetition number, an RO group can be efficiently constructed without configuring/indicating additional parameters. This can be expressed as illustrated in FIG. 11.

FIG. 11 illustrates another example of ROs for a plurality of repetition numbers according to an embodiment of the present disclosure. Specifically, FIG. 11 illustrates an example where a starting RO, a starting RO period, a staring RO offset, etc. for a plurality of repetition numbers are independently configured when R=2 and R=4 in a separated preamble in shared RO method.

The above-described methods mainly target the separate preamble on shared RO method (i.e., method using R17 feature combination). However, the above-described methods can be applied to a separated RO method (e.g., a method using additional RACH configuration or a method of classifying TDMed ROs, etc.).

The above proposed methods can be configured/applied to other UL signals/channels such as MSG3 PUSCH, MSGA preamble/PUSCH, and/or PUSCH/PUCCH. Since examples of the above-described proposed methods can also be included as one of the implementation methods of the present disclosure, it is obvious that the examples can be considered as a kind of proposed methods. Further, the above-described proposed methods may be independently implemented, but may be implemented in the form of a combination (or merge) of some proposed methods. A rule may be defined so that a base station informs a UE of information about whether to apply the proposed methods (or information on rules of the proposed methods) via pre-defined signaling (e.g., physical layer signaling or higher layer signaling). For example, the higher layer may include one or more of functional layers such as MAC, RLC, PDCP, RRC, and SDAP.

Methods, embodiments, or descriptions for implementing the methods proposed in the present disclosure may be individually applied, or one or more methods (or embodiments or descriptions) may be combined and applied.

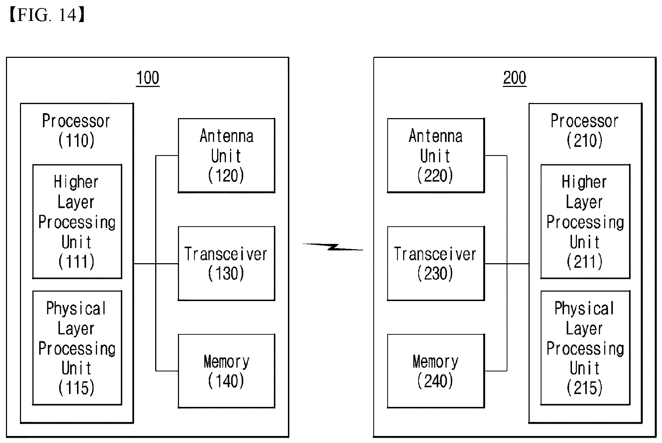

From an implementation perspective, operations (e.g., operations based on at least one of the methods 1 to 3) of the UE/BS according to the above-described embodiments can be processed by a device (e.g., processors 110 and 210 of FIG. 14) of FIG. 14 to be described below.

Further, the operations (e.g., operations based on at least one of the methods 1 to 3) of the UE/BS according to the above-described embodiments can be stored in a memory (e.g., memories 140 and 240 of FIG. 14) in the form of commands/programs (e.g., instructions, executable codes) for running at least one processor (e.g., processors 110 and 210 of FIG. 14).

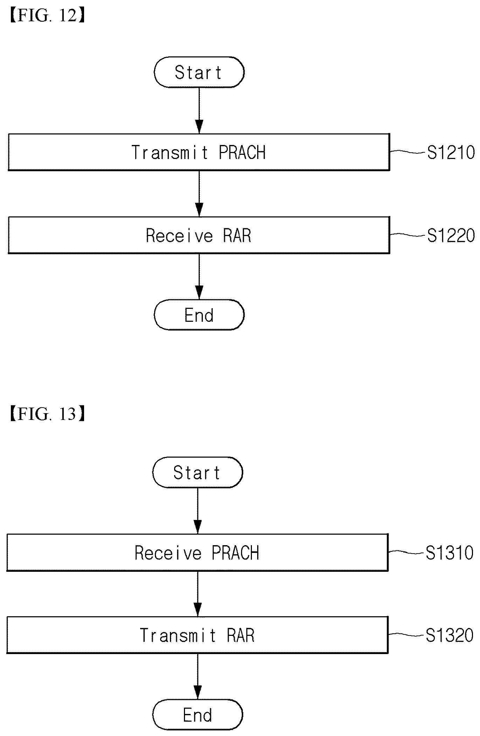

Below, the above-described embodiments are described in detail from a UE/BS operation perspective with reference to FIGS. 12 and 13. Methods described below are merely distinguished for convenience of explanation. Thus, it is obvious that partial configuration of any method can be substituted or combined with partial configuration of another method.

FIG. 12 is a flow chart illustrating a method performed by a user equipment according to an embodiment of the present disclosure.

Referring to FIG. 12, a method performed by a user equipment (UE) according to an embodiment of the present disclosure comprises a PRACH transmitting step S1210 and an RAR receiving step S1220.

In the step S1210, the UE transmits a physical random access channel (PRACH) to a base station (BS) based on a number of preamble repetitions.

The PRACH may be transmitted based on at least one set determined within a time period. For example, the PRACH may be transmitted based on Table 1 above. Each set may include valid PRACH occasions based on the number of preamble repetitions. The at least one 'set' may mean at least one 'RO group' in the above-described embodiments (embodiments based on at least one of the methods 1 to 3).

For example, the number of preamble repetitions may be 2, 4 or 8.

According to an embodiment, the time period may be defined such that the at least one set can be determined within the time period for all configured number(s) (e.g., 2, 4 or 8) related to the number of preamble repetitions. The time period may be based on a time period/a starting RO period/an interval between starting RACH slots defined based on at least one of the methods 1 to 3.

For example, the time period may be defined based on an association pattern period. That is, the time period means a shortest time in which the valid PRACH occasions based on the all configured number(s) (e.g., 2, 4 or 8) can be selected/secured. More specifically, the time period may be based on a smallest integer number multiple of association pattern periods in which the at least one set can be determined for the all configured number(s). As a specific example, it may be assumed that a number of association pattern periods in which the at least one set can be determined for the all configured number(s) is 2, 3, 4... In this instance, the time period may be two times the association pattern period. That is, the time period may be defined as a smallest number of association pattern periods.

An association period may be a smallest integer number in a set determined by a PRACH configuration period such that synchronization signal/physical broadcast channel (SS/PBCH) block indices are mapped at least once to PRACH occasions within the association period (e.g., see Table 1).

Each association pattern period may include one or more association periods. The smallest integer number may mean the number of association pattern periods corresponding to a shortest length/a shortest time in which the at least one set can be determined. Each association pattern period may be 10, 20, 40, 80 or 160 msec. For example, if the smallest integer number is K, the time period may be defined as K times 10, 20, 40, 80 or 160 msec.

The at least one set that can be determined within the time period may be related to each of the SS/PBCH block indices. That is, at least one set of the valid PRACH occasions respectively related to the SS/PBCH block indices may be determined within the time period. According to an embodiment, the at least one set may be repeated every the time period. For example, if the time period is 40 msec, the at least one set may be repeated every 40 msec.

According to an embodiment, the at least one set may include i) a first set and ii) one or more subsequent sets. That is, the at least one set may include sets (a second set, a third set, ...) subsequent to the first set. Specifically, a first valid PRACH occasion of each of the one or more subsequent sets may be after the valid PRACH occasions of a previous set. As a specific example, a first valid PRACH occasion of the second set may be after valid PRACH occasions of the first set. Here, the 'first valid PRACH occasion' may mean the 'starting RO' in the above-described embodiments (embodiments based on at least one of the methods 1 to 3).

In the step S1220, the UE receives a random access response (RAR) from the base station. The RAR may be based on MSG2 of Type-1 random access procedure or MSGB of Type-2 random access procedure.

The method may further comprise a step of receiving a random access configuration. In this step, the UE receives a random access configuration from the base station.

The random access configuration includes information for a plurality of preamble sets. Each preamble set may include preambles related to a feature combination.

For example, referring to FIG. 4 and Tables 6 and 7, the random access configuration may be based on i) rach-ConfigCommon parameter configured by BWP-UplinkCommon parameter or ii) rach-ConfigCommon parameter configured based on one of one or more AdditionalRACH-Config parameters. The information for the plurality of preamble sets may mean information (e.g., featureCombinationPreamblesList) on FeatureCombinationPreambles parameters within the rach-ConfigCommon parameter. Information for each preamble set may be based on the FeatureCombinationPreambles parameter.

As described above, a number of preamble repetitions may be configured every the preambles (each preamble set) related to the feature combination. Therefore, the number of preamble repetitions may be one of numbers of preamble repetitions related to the plurality of preamble sets. That is, each of the numbers of preamble repetitions may mean a number of preamble repetitions configured based on the information (FeatureCombinationPreambles parameter) for each preamble set. As a specific example, the FeatureCombinationPreambles parameter may include information (e.g., msg1-RepetitionNum-r18 parameter) on the number of preamble repetitions. The msg1-RepetitionNum-r18 parameter may be set to n2, n4 or n8.

Operations based on the steps S1210 and S1220 and the step of receiving the random access configuration may be implemented by a device of FIG. 14. For example, a UE 200 may control one or more transceivers 230 and/or one or more memories 240 so as to perform the operations based on the steps S1210 and S1220 and the step of receiving the random access configuration.

Below, the above-described embodiments are described in detail from a BS operation perspective.

Steps S1310 and S1320 and a step of transmitting a random access configuration described below correspond to the steps S1210 and S1220 and the step of receiving the random access configuration described with reference to FIG. 12. Considering the above correspondence, redundant description is omitted. That is, a detailed description of the BS operation described below can be replaced with the description/embodiment of FIG. 12 corresponding to the BS operation. For example, the description/embodiment of the UE operation based on the steps S1210 and S1220 with reference to FIG. 12 can be additionally applied to the BS operation based on the steps S1310 and S1320 described below. For example, the description/embodiment of the UE operation based on the step of receiving the random access configuration can be additionally applied to the BS operation based on the step of transmitting the random access configuration described below.

FIG. 13 is a flow chart illustrating a method performed by a base station according to another embodiment of the present disclosure.

Referring to FIG. 13, a method performed by a base station according to another embodiment of the present disclosure comprises a PRACH receiving step S1310 and an RAR transmitting step S1320.

In the step S1310, the base station receives a physical random access channel (PRACH) from a UE based on a number of preamble repetitions.

In the step S1320, the base station transmits a random access response (RAR) to the UE.

The method may further comprise a step of transmitting a random access configuration. In this step, the base station transmits a random access configuration to the UE.

Operations based on the steps S1310 and S1320 and the step of transmitting the random access configuration may be implemented by a device of FIG. 14. For example, a base station 100 may control one or more transceivers 130 and/or one or more memories 140 so as to perform the operations based on the steps S1310 and S1320 and the step of transmitting the random access configuration.

A device to which an embodiment of the present disclosure is applicable (a device implementing the method/operation according to an embodiment of the present disclosure) is described below with reference to FIG. 14.

FIG. 14 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE) in a wireless communication system, the method comprising:
transmitting a Physical Random Access CHannel (PRACH) based on a number of preamble repetitions; and
receiving a Random Access Response (RAR),
wherein the PRACH is transmitted based on at least one set determined within a time period,
wherein each set includes valid PRACH occasions based on the number of preamble repetitions, and
wherein the time period is defined such that the at least one set can be determined within the time period for all configured number related to the number of preamble repetitions.

2. The method of claim 1, wherein the time period is based on a smallest integer number multiple of association pattern periods in which the at least one set can be determined for the all configured number.

3. The method of claim 2, wherein an association period is a smallest integer number in a set determined by a PRACH configuration period such that Synchronization Signal/Physical Broadcast CHannel (SS/PBCH) block indices are mapped at least once to PRACH occasions within the association period, and
wherein each association pattern period includes one or more association periods.

4. The method of claim 3, wherein the at least one set that can be determined within the time period is related to each of the SS/PBCH block indices.

5. The method of claim 2, wherein each association pattern period is 10, 20, 40, 80 or 160 msec.

6. The method of claim 1, wherein the at least one set is repeated every the time period.

7. The method of claim 1, further comprising:
receiving a random access configuration,
wherein the random access configuration includes information for a plurality of preamble sets, and
wherein each preamble set includes preambles related to a feature combination.

8. The method of claim 7, wherein the number of preamble repetitions is one of numbers of preamble repetitions related to the plurality of preamble sets.

9. The method of claim 1, wherein the number of preamble repetitions is 2, 4 or 8.

10. The method of claim 1, wherein the at least one set includes i) a first set and ii) one or more subsequent sets.

11. The method of claim 10, wherein a first valid PRACH occasion of each of the one or more subsequent sets is after the valid PRACH occasions of a previous set.

12. A user equipment (UE) configured to operate in a wireless communication, the UE comprising:
one or more transceivers;
one or more processors; and
one or more memories that are connected to the one or more processors and store instructions,
wherein the instructions, based on being executed by the one or more processors, configure the one or more processors to perform all steps of a method according to any one of claims 1 to 11.

13. A device comprising:
one or more memories; and
one or more processors operably connected to the one or more memories,
wherein the one or more memories are configured to store instructions based on being executed by the one or more processors, and
wherein the instructions configure the one or more processors to perform all steps of a method according to any one of claims 1 to 11.

14. One or more non-transitory computer readable mediums storing instructions,
wherein the instructions executable by one or more processors configure the one or more processors to perform all steps of a method according to any one of claims 1 to 11.

15. A method performed by a base station in a wireless communication system, the method comprising:
receiving a Physical Random Access CHannel (PRACH) based on a number of preamble repetitions; and
transmitting a Random Access Response (RAR),
wherein the PRACH is received based on at least one set determined within a time period,
wherein each set includes valid PRACH occasions based on the number of preamble repetitions, and
wherein the time period is defined such that the at least one set can be determined within the time period for all configured number related to the number of preamble repetitions.

16. A base station configured to operate in a wireless communication, the base station comprising:
one or more transceivers;
one or more processors; and
one or more memories that are connected to the one or more processors and store instructions,
wherein the instructions, based on being executed by the one or more processors, configure the one or more processors to perform all steps of a method according to claim 15.
